(19) Europäisches Patentamt
European Patent Office
Office européen des brevets

(11) **EP 4 697 707 A1**

(12) **EUROPEAN PATENT APPLICATION**
published in accordance with Art. 153(4) EPC

(43) Date of publication:
**18.02.2026 Bulletin 2026/08**

(21) Application number: **23932537.6**

(22) Date of filing: **14.04.2023**

(51) International Patent Classification (IPC):
**H04N 19/159** (2014.01)    **H04N 19/593** (2014.01)
**H04N 19/105** (2014.01)    **H04N 19/70** (2014.01)

(52) Cooperative Patent Classification (CPC):
**H04N 19/105; H04N 19/159; H04N 19/593;
H04N 19/70**

(86) International application number:
**PCT/CN2023/088540**

(87) International publication number:
**WO 2024/212256 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **MA, Yanzhuo
Dongguan, Guangdong 523860 (CN)**

• **HUO, Junyan
Dongguan, Guangdong 523860 (CN)**
• **YANG, Fuzheng
Dongguan, Guangdong 523860 (CN)**
• **ZHANG, Hongli
Dongguan, Guangdong 523860 (CN)**
• **LI, Ming
Dongguan, Guangdong 523860 (CN)**

(74) Representative: **Penza, Giancarlo
Bugnion S.p.A.
Viale Lancetti, 17
20158 Milano (IT)**

(54) **ENCODING METHOD, DECODING METHOD, CODE STREAM, ENCODER, DECODER AND STORAGE MEDIUM**

(57) The embodiments of the present application disclose an encoding method, a decoding method, a code stream, an encoder, a decoder and a storage medium. The encoding/decoding method comprises: an encoder/decoder determining a first template corresponding to the current block; according to the first template, determining a fully reconstructed search area and/or an undetermined reconstructed search area, wherein the fully reconstructed search area comprises reconstructed sampling points, and the undetermined reconstructed search area comprises reconstructed sampling points and/or unreconstructed sampling points; performing area selection on the basis of the fully reconstructed search area and/or the undetermined reconstructed search area, and determining a selected fully reconstructed search area and/or a selected undetermined reconstructed search area, wherein the selected fully reconstructed search area is smaller than or equal to the fully reconstructed search area, and the selected undetermined reconstructed search area is smaller than or equal to the undetermined reconstructed search area; and respectively searching in the selected fully reconstructed search area and/or the selected undetermined reconstructed search area to determine one or more block vectors of the current block.

**(Cont. next page)**

| Determine a first template corresponding to a current block | 101 |

↓

| Determine a fully reconstructed search region and/or an undetermined reconstructed search region according to the first template, here the fully reconstructed search region includes reconstructed samples, and the undetermined reconstructed search region includes reconstructed samples and/or unreconstructed samples | 102 |

↓

| Perform a region selection based on the fully reconstructed search region and/or the undetermined reconstructed search region, to determine a selected fully reconstructed search region and/or a selected undetermined reconstructed search region, here the selected fully reconstructed search region is smaller than or equal to the fully reconstructed search region, and the selected undetermined reconstructed search region is smaller than or equal to the undetermined reconstructed search region | 103 |

↓

| Search in the selected fully reconstructed search region and/or the selected undetermined reconstructed search region respectively, to determine one or more BVs for the current block | 104 |

## FIG. 12

**Description**

TECHNICAL FIELD

Embodiments of the disclosure relate to the technical field of video encoding and decoding, and in particular to an encoding method, a decoding method, a bitstream, an encoder, a decoder, and a storage medium.

BACKGROUND

In Intra Template Matching Prediction (Intra TMP) technologies, a template of a Coding Block (CB) is used to search for a matching template having a minimum cost relative to the template of the CB in a predefined search range of a current picture according to a preset cost function, and a best matching reconstructed block corresponding to the matching template is used as a prediction block of a current CB.

However, in order to achieve a higher prediction accuracy, it often needs to acquire more effective reference information, which may increase encoding complexity to a certain extent, thereby reducing the efficiency and performance of encoding and decoding.

SUMMARY

Embodiments of the disclosure provide an encoding method, a decoding method, a bitstream, an encoder, a decoder, and a storage medium, which may improve the efficiency and performance of encoding and decoding.

Technical solutions of the embodiments of the disclosure may be implemented as follows.

According to a first aspect, an embodiment of the disclosure provides a decoding method, the decoding method is applied to a decoder, and the method includes the following operations.

A first template corresponding to a current block is determined.

A fully reconstructed search region and/or an undetermined reconstructed search region are determined according to the first template, here the fully reconstructed search region includes reconstructed samples, and the undetermined reconstructed search region includes reconstructed samples and/or unreconstructed samples.

A region selection is performed based on the fully reconstructed search region and/or the undetermined reconstructed search region, to determine a selected fully reconstructed search region and/or a selected undetermined reconstructed search region, here the selected fully reconstructed search region is smaller than or equal to the fully reconstructed search region, and the selected undetermined reconstructed search region is smaller than or equal to the undetermined reconstructed search region.

Search is performed in the selected fully reconstructed search region and/or the selected undetermined reconstructed search region respectively, to determine one or more Block Vectors (BVs) for the current block.

According to a second aspect, an embodiment of the disclosure provides an encoding method, the encoding method is applied to an encoder, and the method includes the following operations.

A first template corresponding to a current block is determined.

A fully reconstructed search region and/or an undetermined reconstructed search region are determined according to the first template, here the fully reconstructed search region includes reconstructed samples, and the undetermined reconstructed search region includes reconstructed samples and/or unreconstructed samples.

A region selection is performed based on the fully reconstructed search region and/or the undetermined reconstructed search region, to determine a selected fully reconstructed search region and/or a selected undetermined reconstructed search region, here the selected fully reconstructed search region is smaller than or equal to the fully reconstructed search region, and the selected undetermined reconstructed search region is smaller than or equal to the undetermined reconstructed search region.

Search is performed in the selected fully reconstructed search region and/or the selected undetermined reconstructed search region respectively, to determine one or more BVs for the current block.

According to a third aspect, an embodiment of the disclosure provides a bitstream, the bitstream is generated by bit encoding according to to-be-encoded information, here the to-be-encoded information includes at least one of:

prediction residuals of a current block, a preset number N, scaling parameters, a template size, or indication information of a template type.

According to a fourth aspect, an embodiment of the disclosure provides an encoder, the encoder includes a first determination unit.

The first determination unit is configured to: determine a first template corresponding to a current block; determine a fully reconstructed search region and/or an undetermined reconstructed search region according to the first template, here the fully reconstructed search region includes reconstructed samples, and the undetermined reconstructed search region includes reconstructed samples and/or unreconstructed samples; perform a region selection based on the fully reconstructed search region and/or the undetermined reconstructed search region, to determine a selected fully reconstructed search region and/or a selected undetermined reconstructed search region, here the selected fully reconstructed search region is smaller than or equal to the fully reconstructed search region, and the selected undetermined reconstructed search region is smaller than or equal to the undetermined reconstructed search region; and search in the selected fully reconstructed search region and/or the selected undetermined reconstructed search region respectively, to determine one or more BVs for the current block.

According to a fifth aspect, an embodiment of the disclosure provides an encoder, the encoder includes a first memory and a first processor.

The first memory is configured to store a computer program executable on the first processor.

The first processor is configured to perform the method as described in the second aspect when it executes the computer program.

According to a sixth aspect, an embodiment of the disclosure provides a decoder, the decoder includes a second determination unit.

The second determination unit is configured to: determine a first template corresponding to a current block; determine a fully reconstructed search region and/or an undetermined reconstructed search region according to the first template, here the fully reconstructed search region includes reconstructed samples, and the undetermined reconstructed search region includes reconstructed samples and/or unreconstructed samples; perform a region selection based on the fully reconstructed search region and/or the undetermined reconstructed search region, to determine a selected fully reconstructed search region and/or a selected undetermined reconstructed search region, here the selected fully reconstructed search region is smaller than or equal to the fully reconstructed search region, and the selected undetermined reconstructed search region is smaller than or equal to the undetermined reconstructed search region; and search in the selected fully reconstructed search region and/or the selected undetermined reconstructed search region respectively, to determine one or more BVs for the current block.

According to a seventh aspect, an embodiment of the disclosure provides a decoder, the decoder includes a second memory and a second processor.

The second memory is configured to store a computer program executable on the second processor.

The second processor is configured to perform the method as described in the first aspect when it executes the computer program.

According to an eighth aspect, an embodiment of the disclosure provides a computer-readable storage medium, the computer-readable storage medium has stored thereon a computer program. When the computer program is executed, the method as described in the first aspect is implemented, or the method as described in the second aspect is implemented.

The embodiments of the disclosure provide an encoding method, a decoding method, a bitstream, an encoder, a decoder, and a storage medium. Both the encoder and the decoder determine a first template corresponding to a current block; determine a fully reconstructed search region and/or an undetermined reconstructed search region according to the first template, here the fully reconstructed search region includes reconstructed samples, and the undetermined reconstructed search region includes reconstructed samples and/or unreconstructed samples; perform a region selection based on the fully reconstructed search region and/or the undetermined reconstructed search region, to determine a selected fully reconstructed search region and/or a selected undetermined reconstructed search region, here the selected fully reconstructed search region is smaller than or equal to the fully reconstructed search region, and the selected undetermined reconstructed search region is smaller than or equal to the undetermined reconstructed search region; and search in the selected fully reconstructed search region and/or the selected undetermined reconstructed search region respectively, to determine one or more BVs for the current block. It may be seen that in the embodiments of the disclosure, after the fully reconstructed search region and/or the undetermined reconstructed search region including reconstructed samples and/or unreconstructed samples are determined according to the first template, the region selection may be performed on the fully reconstructed search region and/or the undetermined reconstructed search region, to obtain the selected fully reconstructed search region and/or the selected undetermined reconstructed search region with a relatively small range, and search in the selected fully reconstructed search region and/or the selected undetermined reconstructed search region. In other words, according to the encoding method and the decoding method proposed in the embodiments of the disclosure, available samples in the undetermined reconstructed search region may be utilized, while the search range may be limited to a certain extent, then encoding and decoding complexities may be reduced based on full acquisition of more effective reference information, therefore encoding and decoding efficiency and performance may be improved.

BRIEF DESCRIPTION OF THE DRAWINGS

FIG. 1 is a schematic diagram of prediction of Intra TMP.

FIG. 2 is a schematic diagram of a prediction process based on an Intra TMP technology.

FIG. 3 is a schematic diagram of template types of the Intra TMP technology;

FIG. 4 is a schematic diagram of a search process based on the Intra TMP technology.

FIG. 5 is a schematic diagram of definition of parameters for a current block and its template.

FIG. 6 is a schematic diagram of a template search region.

FIG. 7 is a first schematic diagram of different sub-region divisions of a search region.

FIG. 8 is a first schematic diagram of a process of determining a search region.

FIG. 9 is a schematic diagram of a search process.

FIG. 10A is a schematic block diagram of an encoder.

FIG. 10B is a schematic block diagram of an encoder.

FIG. 11 is a schematic diagram of a network architecture of an encoding/ decoding system.

FIG. 12 is a schematic flowchart of a decoding method according to an embodiment of the disclosure.

FIG. 13 is a second schematic diagram of different sub-region divisions of a search region.

FIG. 14 is a second schematic diagram of a process of determining a search region.

FIG. 15 is a first schematic diagram of region selection.

FIG. 16 is a second schematic diagram of region selection.

FIG. 17 is a third schematic diagram of region selection.

FIG. 18 is a fourth schematic diagram of region selection.

FIG. 19 is a fifth schematic diagram of region selection.

FIG. 20 is a sixth schematic diagram of region selection.

FIG. 21 is a seventh schematic diagram of region selection.

FIG. 22 is an eighth schematic diagram of region selection.

FIG. 23 is a ninth schematic diagram of region selection.

FIG. 24 is a tenth schematic diagram of region selection.

FIG. 25 is an eleventh schematic diagram of region selection.

FIG. 26 is a twelfth schematic diagram of region selection.

FIG. 27 is a schematic flowchart of an encoding method according to an embodiment of the disclosure.

FIG. 28 is a schematic diagram of configuration structures of an encoder.

FIG. 29 is a schematic diagram of hardware structures of an encoder.

FIG. 30 is a schematic diagram of configuration structures of a decoder.

FIG. 31 is a schematic diagram of hardware structures of a decoder.

FIG. 32 is a schematic diagram of configuration structures of an encoding and decoding system.

DETAILED DESCRIPTION

In order to understand characteristics and technical contents of embodiments of the disclosure more thoroughly, implementations of the embodiments of the disclosure will be described in detail below with reference to the drawings. The drawings are only for the purpose of reference and explanation, and are not intended to limit the embodiments of the disclosure.

Unless otherwise defined, all technical and scientific terms used here have the same meanings as those usually understood by technicians in the technical field to which the disclosure belongs. The terms used here are only for the purpose of describing the embodiments of the disclosure, and are not intended to limit the disclosure.

In the following descriptions, reference is made to "some embodiments" which describe a subset of all possible embodiments; however, it may be understood that "some embodiments" may be the same or different subsets of all possible embodiments, and may be combined with each other without conflict. It should also be pointed out that terms "first \second\third" involved in the embodiments of the disclosure are only intended to distinguish similar objects and do not represent a specific sequence of the objects. It may be understood that "first\second\third" may be interchanged in a specific order or sequence if allowable, such that the embodiments of the disclosure described here may be implemented in an order besides that illustrated or described here.

Nouns and terms involved in the embodiments of the disclosure are described first before further describing the embodiments of the disclosure in detail. The nouns and terms involved in the embodiments of the disclosure are applicable to the following explanations:

Coding Block (CB);
Block Matching (BM);
Coding Unit (CU);
Block Vector (BV);
Sum of Absolute Difference (SAD);
Sum of Absolute Transformed Difference (SATD);
Mean Square Error (MSE);
Sum of Squared Differences (SSD);
Mean Absolute Deviation (MAD);
Mean Square Differences (MSD);
Normalized Correlation Coefficient (NCC);
H.266/Versatile Video Coding (VVC);
VVC Test Model (VTM), a reference software testing platform for VVC;
Intra Template Matching Prediction (Intra TMP);
Enhanced Compression Model (ECM), a reference software testing platform beyond VVC.

It may be understood that in a video picture, a CB is usually characterized by using a first color component, a second color component, and a third color component. The three color components are a luma component, a blue chroma component, and a red chroma component respectively. Specifically, the luma component is usually represented by a symbol Y, the blue chroma component is usually represented by a symbol Cb or U, and the red chroma component is usually represented by a symbol Cr or V; in this way, the video picture may be represented in a YCbCr format or a YUV format.

It may also be understood that the Intra TMP is a special intra prediction mode. Each of an encoder and a decoder uses a template (T) of a CB to search for a matching template (T_BEST) having a minimum cost relative to the template (T) of the CB in a predefined search range of a current picture according to a preset cost function. An offset of a best matching template relative to a template of a current CB is a best BV (BV_BEST). Then, a reconstructed block (Ref Block) corresponding to the matching template is used as a prediction block of a current CB (Cur Block). The template of the CB usually uses a neighbouring reconstructed region of the current CB.

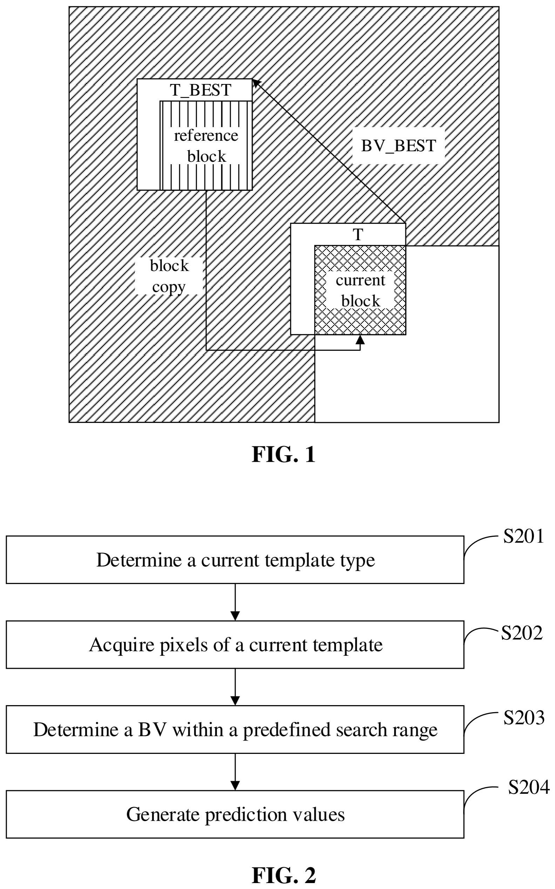

Exemplarily, taking a neighbouring reconstructed region of a current block as an example, FIG. 1 is a schematic diagram of prediction of Intra TMP. As shown in FIG. 1, a region filled with dark color represents a reconstructed region, a block filled with grids is the current block, and a neighbouring region of the current block is a first template (T); a block filled with oblique lines is a reference block, and a neighbouring region of the reference block is a second template (that is, a best matching template T_BEST); an offset of the second template relative to the first template is a best BV (BV_BEST), and at this time, the reference block may be block copied as a prediction block of the current block.

In the embodiments of the disclosure, the preset cost function may be SAD, SATD, MSE, SSD, MAD, MSD, NCC or the like, which is not specifically limited here.

For example, taking SAD as an example, the cost function at this time is as follows:

$$\mathrm{SAD}(T_i) = \sum_{m=0}^{M-1}\left|T_{i,m} - T_m\right|, \ m = 0, 1, \ \dots \ , \ M - 1 \qquad (1)$$

Here $T_i$ is a template in a search process, and M represents the number of pixels in the template.

A prediction process of an Intra TMP technology in the related art will be introduced in detail below.

Input of the Intra TMP: position (xTbCmp, yTbCmp) of the current block, width nTbW of the current block, and height nTbH of the current block.

Output of the Intra TMP: prediction value predSamples[x][y] of the current block, here x = 0..nTbW-1, y = 0..nTbH-1.

Specifically, a prediction process of the Intra TMP technology may be divided into four steps as follows: determining a current template type, acquiring reconstructed pixels of the current template, determining BVs within a predefined search range, and generating prediction values. In this way, prediction values of the current block may be obtained through the above process. It should be noted that the Intra TMP technology may be used for predicting a luma component or a chroma component, which is not specifically limited here, either.

With reference to FIG. 2, a schematic diagram of a prediction process based on an Intra TMP technology is shown. As shown in FIG. 2, the process may include the following operations S201 to S204.

In operation S201, a current template type is determined.

It should be noted that, in the Intra TMP technology, neighbouring reconstructed pixels of the current block are used as a template to search for a matching template in a predefined search region. Here the neighbouring reconstructed pixels may be upper reference pixels, upper left reference pixels, upper right reference pixels, left reference pixels, and lower left reference pixels of the current block, etc. Therefore, template types may be classified and a corresponding template type may be determined, according to availability of the neighbouring reconstructed pixels.

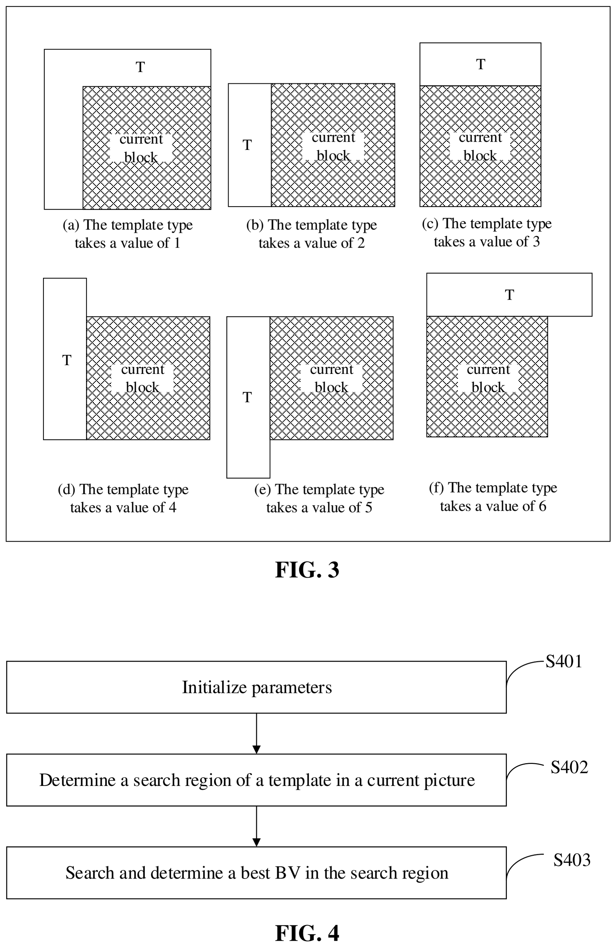

It should also be noted that the template type may be represented by refTemplateType, and FIG. 3 shows a schematic diagram of template types of the Intra TMP technology. As shown in FIG. 3, a block filled with grids is the current block, a neighbouring region of the current block is a template T, and six template types are shown here.

Exemplarily, the six template types are shown as follows:

when all the upper left reference pixels, the upper reference pixels and the left reference pixels are available, refTemplateType has a value of 1, and the template shape is shown in (a) of FIG. 3;
when only the left reference pixels are available, refTemplateType has a value of 2, and the template shape is shown in (b) of FIG. 3;
when only the upper reference pixels are available, refTemplateType has a value of 3, and the template shape is shown in (c) of FIG. 3;
when only the left reference pixels and the upper left reference pixels are available, refTemplateType has a value of 4, and the template shape is shown in (d) of FIG. 3;
when only the left reference pixels and the lower left reference pixels are available, refTemplateType has a value of 5, and the template shape is shown in (e) of FIG. 3; and
when only the upper reference pixels and the upper right reference pixels are available, refTemplateType has a value of 6, and the template shape is shown in (f) in FIG. 3.

In operation S202, pixels of a current template are acquired.

It should be noted that the template in the Intra TMP technology may consist of reconstructed pixels of one or more of the upper region, upper right region, left region, lower left region and upper left region of the current block. Furthermore, a template size may be preset. For example, when a left template is acquired, a template width templateW_size may be set to 4, and when an upper template is acquired, a template height templateH_size may be set to 4.

It should also be noted that it may determine to acquire which part of reconstructed pixels according to the value of refTemplateType. Exemplarily, when refTemplateType has a value of 1, reconstructed pixels at the left side, the upper left side and the upper side of the current block are acquired; or, when refTemplateType has a value of 2, only reconstructed pixels on left four columns of the current block are acquired; or, when refTemplateType has a value of 3, only reconstructed pixels on upper four rows of the current block are acquired.

In operation S203, a BV is determined within a predefined search range.

It should be noted that a search process of the Intra TMP technology mainly includes an initialization process, determining a search region for the template in a current frame, and searching in the search region to determine a best BV.

It should also be noted that when a best matching template is searched for in the search region, a search strategy of performing a coarse search first and then performing a fine search may be used, or only the fine search may be performed, or only the coarse search may be performed, which is not specifically limited here.

In the embodiments of the disclosure, the coarse search here may specifically be as follows. A best coarse matching template is determined in the search region with a first preset step size (such as 2), or the best coarse matching template is determined in the search region by using a downsampling template (such as a downsampling factor of 2).

In the embodiments of the disclosure, the fine search here may specifically be as follows. A best fine matching template is determined in the search region with a second preset step size (such as 1), or the best fine matching template is determined near the best coarse matching template after completing the coarse search.

With reference to FIG. 4, a schematic diagram of a search process based on the Intra TMP technology provided in an embodiment of the disclosure is shown. As shown in FIG. 4, the process may include the following operations S401 to S403.

In operation S401, parameters are initialized.

It should be noted that taking an L-shaped template as an example, uiPatchWidth is initialized to nTbW + templateW_size, and uiPatchHeight is initialized to nTbH + templateH_size. Here templateW_size and templateH_size may be fixed constants, or may be dynamically adjusted according to the size of the current block; furthermore, templateW_size may be equal or unequal to templateH_size. For example, templateW_size = 4, templateH_size = 4; or, when the width of the current block is greater than 8, templateW_size = 4 is set; when the width of the current block is less than or equal to 8, templateW_size = 2 is set; when the height of the current block is greater than 8, templateH_size = 4 is set; when the height of the current block is less than or equal to 8, templateH_size = 2 is set.

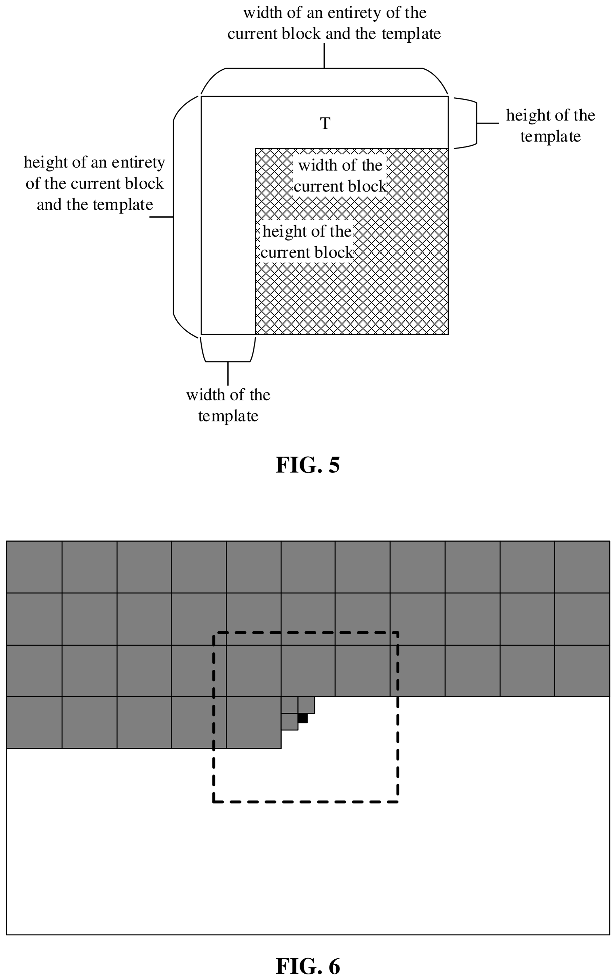

Exemplarily, FIG. 5 shows a schematic diagram of definition of parameters of a current block and its template. As shown in FIG. 5, specific meanings of the parameters are as follows: nTbW and nTbH represent sizes of the current block, templateW_size and templateH_size represent template sizes, and uiPatchWidth and uiPatchHeight represent sizes of a block including the current block and its template.

Further, a cost threshold between templates that is represented by diffThreshold, is initialized. For example, when the cost function is SAD, the threshold may be as follows: diffThreshold = ((1 << bitDepth) >> 2) × (uiPatchHeight × uiPatchWidth - nTbH × nTbW). When a bit depth bitDepth of the picture is 10, diffThreshold represents that a distortion threshold of each pixel in the region of the template is 256.

Further, a position ctbRsX, ctbRsY of a Coding Tree Block (CTB) where the current block CB is located, are initialized.

Further, position offsets of the current block CB in the current CTB are initialized to offsetLCBY = yTbCmp - ctbRsY, offsetLCBX = xTbCmp - ctbRsX.

Further, iTemplateSizeH = templateH_size, iTemplateSizeW = templateW_size are initialized.

Further, iBvShift is initialized, here iBvShift is a precision of the BV. For example, the precision of the BV may be an integer-pixel precision, and iBvShift is 0 at this time; or, the precision of the BV may be a sub-pixel precision, for example, when iBvShift is 1, it represents a 1/2 pixel precision, and when iBvShift is 2, it represents a 1/4 pixel precision, which is not specifically limited here.

Further, a preset search range for the template is initialized, and the preset search range for the template may be set to a fixed size, or the search range may be dynamically adjusted according to the size of the CB. For example, searchRangeWidth = TMP_SEARCH_RANGE_MULT_FACTOR × nTbW, searchRangeHeight = TMP_SEARCH_RANGE_MULT_FACTOR × nTbH; here value of TMP_SEARCH_RANGE_MULT_FACTOR may be a preset value, for example, it is set to 5.

In operation S402, a search region for a template in a current frame is determined.

It should be noted that, in the Intra TMP technology, a search region is a reconstructed part of the current picture and is limited by the size of the search range. FIG. 6 is a schematic diagram of a template search region. As shown in FIG. 6, a background region filled with dark color is a reconstructed region, a background block filled with black is the current block, and a dotted box is a window of the search range. Therefore, in the Intra TMP technology, the search region is not larger than an overlapping part between the reconstructed region represented by dark background and a region marked by the dotted box.

It may be seen that the search region for the template of the current block may be a reconstructed part of the CTB where the current block is located, or may be other reconstructed regions of the CTB. The search region here is actually a set of all search points. The shape of the region may not be often represented by a single rectangular region, therefore during specific implementation, search may also be performed in multiple rectangular regions, and then a final best matching block and a best BV may be obtained according to search results from different regions.

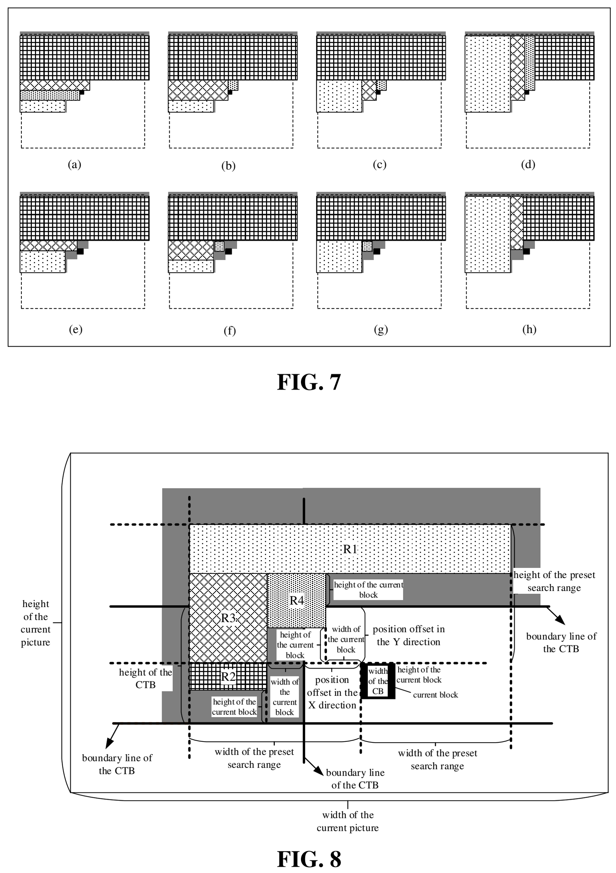

Exemplarily, with reference to FIG. 7, a schematic diagram of different sub-region divisions of a search region is shown. As shown in FIG. 7, eight different sub-region division manners are shown here. A background block filled with black is the current block; all of five division manners (a), (b), (c), (d) and (f) divide the search region into four sub-search regions, and all of three division manners (e), (g) and (h) divide the search region into three sub-search regions, here each of different filling patterns represents a respective one of sub-search regions.

In FIG. 7, (a), (b), (c) and (d) consider all available search ranges, and (e), (f), (g) and (h) do not search a directly above region and a directly left region.

Exemplarily, assuming that different sub-search regions are distinguished and represented by regionId, considering that pixels of the template of the current block need to be obtained from a reconstructed region of the picture and pixels of the reconstructed block corresponding to the template also need to be obtained in the reconstruction region, then it needs to further determine positions that may be searched in sub-search regions represented by different regionId, according to the position (xTbCmp, yTbCmp) of the current block, the size (nTbW, nTbH) of the current block, the size (picWidth, picHeight) of the current picture, the size (CtbSizeW, CtbSizeH) of the CTB where the current block is located, the preset search range (searchRangeWidth, searchRangeHeight) for the template and the position offset (offsetLCBY, offsetLCBX) of the current block in the current CTB, thereby determining the BV. Specifically, iVerMin and iVerMax represent an absolute coordinate position that may be searched at least in a vertical direction and an absolute coordinate position that may be searched at most in the vertical direction respectively, and iHorMin and iHorMax represent an absolute coordinate position that may be searched at least in a horizontal direction and an absolute coordinate position that may be searched at most in the horizontal direction respectively. Values of iVerMin, iVerMax, iHorMin and iHorMax are different in search regions represented by different regionId.

Taking (f) in FIG. 7 as an example, the search region is divided into four sub-search regions, of which implementations are as follows.

When regionId is equal to 0, iVerMin, iVerMax, iHorMin and iHorMax may be calculated as follows:

$iHorMax_0 = min((xTbCmp + searchRangeWidth) << iBvShift, ((picWidth - nTbW) << iBvShift));$

$iHorMin_0 = max((iTemplateSizeW) << iBvShift, (xTbCmp - searchRangeWidth) << iBvShift);$

$$iVerMax_0 = (yTbCmp - nTbH - offsetLCBY) << iBvShift;$$

$iVerMin_0 = max(((iTemplateSizeH) << iBvShift), ((yTbCmp - searchRangeHeight) << iBvShift)).$

When regionId is equal to 1, iVerMin, iVerMax, iHorMin and iHorMax may be calculated as follows:

$iHorMin_1 = max((iTemplateSizeW) << iBvShift, (xTbCmp - searchRangeWidth) << iBvShift);$

$$iHorMax_1 = (xTbCmp - offsetLCBX - nTbW) << iBvShift;$$

$$iVerMin_1 = (yTbCmp + 1) << iBvShift;$$

$iVerMax_1 = min((picHeight - nTbH) << iBvShift, (yTbCmp - offsetLCBY + CtbSizeH - nTbH) << iBvShift).$

When regionId is equal to 2, iVerMin, iVerMax, iHorMin and iHorMax may be calculated as follows:

$$iHorMax_2 = (xTbCmp - offsetLCBX - nTbW) << iBvShift;$$

$iHorMin_2 = max((iTemplateSizeW) << iBvShift, (xTbCmp - searchRangeWidth) << iBvShift);$

$iVerMin_2 = max((iTemplateSizeH) << iBvShift, (yTbCmp - nTbH - offsetLCBY) << iBvShift);$

$$iVerMax_2 = (yTbCmp) << iBvShift.$$

When regionId is equal to 3, iVerMin, iVerMax, iHorMin and iHorMax may be calculated as follows:

iHorMin$_3$ = max((iTemplateSizeW) << iBvShift, (xTbCmp - offsetLCBX - nTbW + 1) << iBvShift);

$$iHorMax_3 = (xTbCmp - nTbW) << iBvShift;$$

iVerMin$_3$ = max(((iTemplateSizeH) << iBvShift), (yTbCmp - offsetLCBY - nTbH + 1) << iBvShift);

$$iVerMax_3 = (yTbCmp - nTbH) << iBvShift.$$

In an actual application, iHorMin$_{regionId}$, iHorMax$_{regionId}$, iVerMin$_{regionId}$ and iVerMax$_{regionId}$ here represent a left edge, a right edge, an upper edge and a lower edge of each of different sub-search regions respectively.

In order to intuitively describe different sub-search regions corresponding to different regionId, with reference to FIG. 8, a schematic diagram of a specific process of determining a search region is shown here. As shown in FIG. 8, R1, R2, R3 and R4 represent four different sub-search regions. It should be noted that FIG. 8 is represented by a pixel range where a pixel at an upper left corner of the block may be aligned.

In operation S403, searching is performed in the search region to determine a best BV.

It should be noted that bvXMins and bvXMaxs represent a minimum offset and maximum offset of the BV in the horizontal direction respectively; bvYMins and bvYMaxs represent a minimum offset and maximum offset of the BV in the vertical direction, respectively.

bvXMins$_{regionId}$, bvXMaxxs$_{regionId}$, bvYMins$_{regionId}$ and bvYMaxs$_{regionId}$ may be calculated by using iVerMin$_{regionId}$, iVerMax$_{regionId}$, iHorMin$_{regionId}$ and iHorMax$_{regionId}$ determined in the operation S402:

$$bvXMins_{regionId} = iHorMin_{regionId} - xTbCmp;$$

$$bvXMaxs_{regionId} = iHorMax_{regionId} - xTbCmp;$$

$$bvYMins_{regionId} = iVerMin_{regionId} - yTbCmp;$$

$$bvYMaxs_{regionId} = iVerMax_{regionId} - yTbCmp.$$

bvXMins$_{regionId}$, bvXMaxs$_{regionId}$, bvYMins$_{regionId}$ and bvYMaxs$_{regionId}$ determine a range of horizontal and vertical offsets of the search point relative to the current block, that is, a range of the BV.

It should also be noted that a search point (iPosHor, iPoxVer), each BV (which is consisted of a horizontal component and a vertical component: (pX, pY)) in each search region is traversed, here pX = iPosHor - xTbCmp, pY = iPosVer - yTbCmp, then pX is between bvXMins and bvXMaxs, and pY is between bvYMins and bvYMaxs; in this way, a matching reconstructed block for the current block may be found in the reconstructed region, and neighbouring reconstructed pixels of the matching reconstructed block are used as the matching template (that is, the foregoing second template). Therefore, a matching cost value between a neighbouring template of the current block and a neighbouring template of the matching reconstructed block may be calculated, and is recorded as pDiff.

Further, all search points in all search ranges (regionId = 0, 1, 2, 3) are traversed, a search point with a minimum matching cost value pDiff is obtained by comparison, a matching cost value corresponding to this search point is recorded as pDiff_BEST, a BV corresponding to this search point is recorded as a best BV, BV_BEST (pX_BEST, pY_BEST), and a matching template corresponding to this search point is a best matching template T_BEST.

In a possible implementation, if the search strategy is that only the coarse search is performed, specific implementation is as follows.

In each region, within a search range where pX is between bvXMins$_{regionId}$ and bvXMaxs$_{regionId}$ and pY is between bvYMins$_{regionId}$ and bv YMaxs$_{regionId}$, the coarse search is performed with a step size greater than 1. For example, the coarse search is performed with a step size of 2, a best matching cost value obtained by template matching is recorded as pDiff_BEST, and a BV corresponding to the best matching cost value is recorded as a best BV, BV_BEST (pX_BEST, pY_BEST).

In another possible implementation, if the search strategy is that only the fine search is performed, specific implementation is as follows.

In each region, within a search range where pX is between $bvXMins_{regionId}$ and $bvXMaxs_{regionId}$ and pY is between $bvYMins_{regionId}$ and $bvYMaxs_{regionId}$, for example, the fine search is performed with a step size of 1. A best matching cost value obtained by template matching is recorded as pDiff_BEST, and a BV corresponding to the best matching cost value is recorded as a best BV, BV_BEST (pX_BEST, pY_BEST).

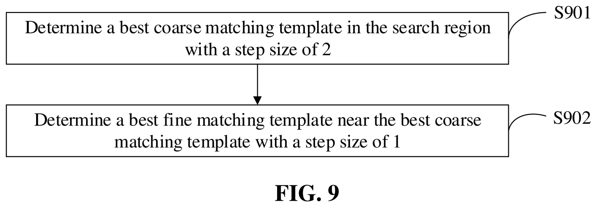

In another possible implementation, if the search strategy is that the coarse search is performed first and then the fine search is performed; FIG. 9 is a schematic diagram of a search process. As shown in FIG. 9, the specific process is as follows.

In operation S901, a best coarse matching template is determined from the search region with a step size of 2.

In operation S902, a best fine matching template is determined near the best coarse matching template with a step size of 1.

It should be noted that for the operation S901, in a coarse search stage:

in each region, within a search range where pX is between $bvXMins_{regionId}$ and $bvXMaxs_{regionId}$ and pY is between $bvYMins_{regionId}$ and $bvYMaxs_{regionId}$, the coarse search is performed with a step size greater than 1. For example, the coarse search is performed with a step size of 2, a best matching cost obtained by template matching is recorded as pDiff1_BEST, a BV corresponding to the best matching cost is recorded as a best BV, BV1_BEST (pX1_BEST, pY1_BEST), and a search region where a best matching search point is located is bestRegionId.

It should also be noted that for the operation S902, in a fine search stage:

Further search is performed near the best BV, BV1_BEST obtained by the coarse search. Specifically, a refined search range TmpRefineRange is determined first, the refined search range may be in a fixed size or related to the size of the current block, for example, it may be set to min(nTbW, nTbH)/2. Then, position of a best matching reconstructed block obtained by the coarse search is calculated as a reference position of a fine search region: BestPosX = xTbCmp + pX1_BEST, BestPosY = yTbCmp + pY1_BEST.

According to value of bestRegionId, calculated values of $iVerMin_{bestRegionId}$, $iVerMax_{bestRegionId}$, $iHorMin_{bestRegionId}$ and $iHorMax_{bestRegionId}$ are obtained first, and then new search ranges $iVerMin_{refine}$, $iVerMax_{refine}$, $iHorMin_{refine}$ and $iHorMax_{refine}$ are acquired according to position of a best matching block obtained by the coarse search. The acquisition method is as follows:

$$iHorMin_{refine} = max(iHorMin_{bestRegionId}, BestPosX - TmpRefineRange);$$

$$iHorMax_{refine} = min(iHorMax_{bestRegionId}, BestPosX + TmpRefineRange);$$

$$iVerMin_{refine} = max(iVerMin_{bestRegionId}, BestPosY - TmpRefineRange);$$

$$iVerMax_{refine} = min(iVerMax_{bestRegionId}, BestPosY + TmpRefineRange).$$

Then, adjusted BVs bvXMins, bvXMaxs, bvYMins and bvYMaxs may be calculated by $iVerMin_{refine}$, $iVerMax_{refine}$, $iHorMin_{refine}$ and $iHorMax_{refine}$:

$$bvXMins = iHorMin_{refine} - xTbCmp;$$

$$bvXMaxs = iHorMax_{refine} - xTbCmp;$$

$$bvYMins = iVerMin_{refine} - yTbCmp;$$

$$bvYMaxs = iVerMax_{refine} - yTbCmp.$$

In this way, the fine search is performed within a BV range where pX is between $bvXMins_{refine}$ and $bvXMaxs_{refine}$ and pY is between $bvYMins_{refine}$ and $bvYMaxs_{refine}$. For example, the search is performed with a step size of 1, a best matching cost obtained by template matching is recorded as pDiff_BEST, a BV corresponding to the best matching cost is recorded as a best BV, BV_BEST (pX_BEST, pY_BEST).

After completing the above operations, the best BV, BV_BEST (pX_BEST, pY_BEST) may be obtained, here pX_BEST and pY_BEST are offsets of the best matching template relative to the template of the current block in the horizontal direction and in the vertical direction respectively, and are also offsets of the best matching reconstructed block relative to the current block in the horizontal direction and in the vertical direction respectively.

In operation S204, prediction values are generated.

Here, generation of the prediction values may be achieved by using simple translation copy. Specific operations are as follows.

For x = 0...nTbW-1, y = 0...nTbH-1:

$$predSamples[x][y] = recSamples[x + pX\_BEST][y + pY\_BEST] \quad (2)$$

Here recSamples represents reconstructed pixels of the current frame.

It may be understood that in an Intra TMP mode, besides acquiring the prediction values by using the above basic copying method, a method for acquiring the prediction values by performing filtering fusion using corresponding positions of multiple BVs, as well as a method for prediction by fusing with a normal Intra mode may be used.

Exemplarily, in a region search process at a decoding side, after acquiring a BV candidate list by template matching, the first N items (such as N = 3) may be selected from BV candidate list to perform weighted fusion. This method may be referred to as an Intra TMP Fusion mode.

Exemplarily, after acquiring a best BV, multiple points around the BV may be selected, and weighted fusion is performed on prediction values corresponding to the multiple points, to obtain the prediction values. This method may be referred to as an Intra TMP FLM mode.

Exemplarily, after acquiring a best BV, prediction values acquired by using the BV and prediction values obtained in the normal Intra mode are weighted and combined to obtain final prediction values. The normal Intra mode may be a planar mode or a directional mode, etc. The directional mode may be derived from Template-based Intra Mode Derivation (TIMD), or may be obtained by locating in an Intra candidate table by using an Index transmitted in a bitstream. This method may be referred to as an Intra TMP Combined Inter and Intra Prediction (CIIP) mode.

In short, according to the Intra TMP technology in the related art, a template of a CB is used to search for a matching template having a minimum cost with the template of the CB in a predefined search range of a current picture according to a preset cost function, and then a best matching reconstructed block (Ref Block) corresponding to the matching template is used as a prediction block of the current block (Cur Block). The template of the current block may usually use a neighbouring reconstructed region of the current block.

In an actual encoding process, in order to solve a problem that the search strategy cannot fully utilize information of the reconstructed neighbouring samples, it often needs to acquire more effective reference information to improve prediction accuracy, for example, it is expanded to an undetermined reconstructed search region to perform search, here when search is performed in the undetermined reconstructed search region, it needs to determine availability of search points therein. However, if determination of availability of all search points in the entire undetermined reconstructed region is made, encoding complexity will be increased.

In summary, in order to achieve a higher prediction accuracy, common encoding and decoding methods often need to acquire more effective reference information, which may increase the encoding complexity to a certain extent, thereby reducing the efficiency and performance of encoding and decoding.

In order to solve the above problem, the embodiments of the disclosure provide an encoding method, a decoding method, a bitstream, an encoder, a decoder, and a storage medium. Both the encoder and the decoder determine a first template corresponding to a current block; determine a fully reconstructed search region and/or an undetermined reconstructed search region according to the first template, here the fully reconstructed search region includes reconstructed samples, and the undetermined reconstructed search region includes reconstructed samples and/or unreconstructed samples; perform a region selection based on the fully reconstructed search region and/or the undetermined reconstructed search region, and determine a selected fully reconstructed search region and/or a selected undetermined reconstructed search region, here the selected fully reconstructed search region is smaller than or equal to the fully reconstructed search region, and the selected undetermined reconstructed search region is smaller than or equal to the undetermined reconstructed search region; and search in the selected fully reconstructed search region and/or the selected undetermined reconstructed search region respectively, to determine one or more BVs for the current block. It may be seen that in the embodiments of the disclosure, after the fully reconstructed search region and/or the undetermined reconstructed search region including reconstructed samples and/or unreconstructed samples are determined according to the first template, it may select to perform the region selection on the fully reconstructed search region and/or the undetermined reconstructed search region, to obtain the selected fully reconstructed search region and/or the selected undetermined reconstructed search region with a relatively small range, and search in the selected fully reconstructed search region and/or the selected undetermined reconstructed search region. In other words, according to the encoding method and the decoding method proposed in the embodiments of the disclosure, available samples in the undetermined reconstructed search region may be utilized, while the search range may be limited to a certain extent, then encoding and decoding complexities may be reduced based on full acquisition of more effective reference information, therefore the efficiency and performance of encoding and decoding may be improved.

The embodiments of the disclosure will be described in detail below with reference to the drawings.

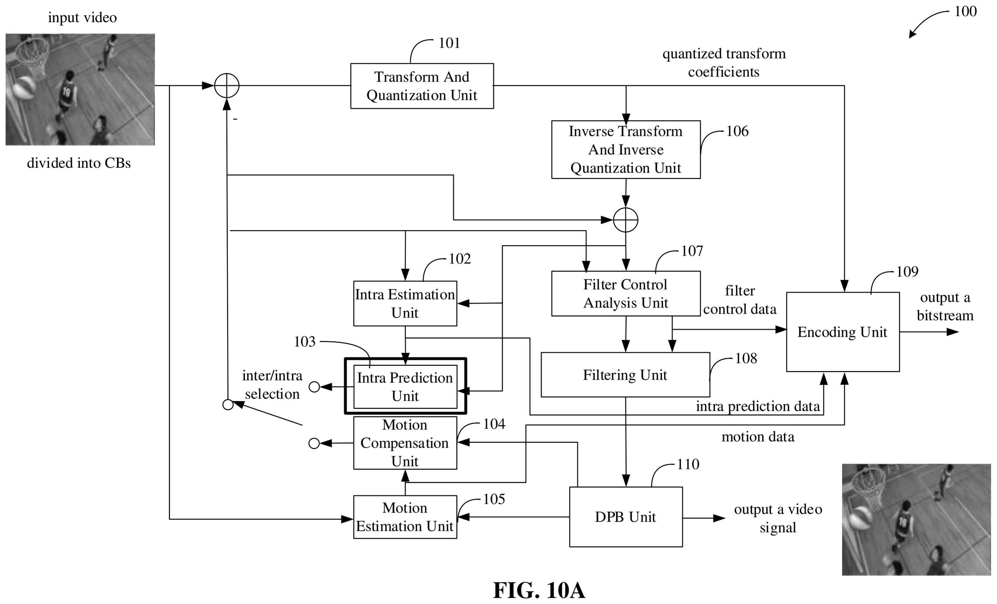

With reference to FIG. 10A, a schematic block diagram of an encoder provided in an embodiment of the disclosure is shown. As shown in FIG. 10A, the encoder (specifically, a "video encoder") 100 may include a transform and quantization unit 101, an intra estimation unit 102, an intra prediction unit 103, a motion compensation unit 104, a motion estimation unit 105, an inverse transform and inverse quantization unit 106, a filter control analysis unit 107, a filtering unit 108, an encoding unit 109, and a decoded picture buffer (DPB) unit 110, etc. The filtering unit 108 may implement de-blocking filtering and Sample Adaptive Offset (SAO) filtering, and the encoding unit 109 may implement header information encoding and Contextbased Adaptive Binary Arithmetic Coding (CABAC). For an input original video signal, a video CB may be obtained through division of a Coding Tree Unit (CTU), and then residual pixel information obtained after intra or inter prediction is transformed by the transform and quantization unit 101 for the video CB, which includes transforming the residual information from a pixel domain to a transform domain, and quantizing the obtained transform coefficients, to further reduce a bit rate. The intra estimation unit 102 and the intra prediction unit 103 are configured to perform intra prediction on the video CB. Specifically, the intra estimation unit 102 and the intra prediction unit 103 are configured to determine an intra prediction mode to be used to encode the video CB. The motion compensation unit 104 and the motion estimation unit 105 are configured to perform inter prediction encoding of the received video CB relative to one or more blocks in one or more reference frames, to provide temporal prediction information. Motion estimation performed by the motion estimation unit 105 is a process of generating a Motion Vector (MV), the MV may be used to estimate motion of the video CB. Then motion compensation is performed by the motion compensation unit 104 based on the MV determined by the motion estimation unit 105. After determining the intra prediction mode, the intra prediction unit 103 is further configured to provide the selected intra prediction data to the encoding unit 109, and the motion estimation unit 105 also sends the calculated MV data to the encoding unit 109. Furthermore, the inverse transform and inverse quantization unit 106 is configured to reconstruct the video CB and reconstruct a residual block in the pixel domain, block effect artifacts are removed from the reconstructed residual block by the filter control analysis unit 107 and the filtering unit 108, and then the reconstructed residual block is added to a predictive block in a frame of the DPB unit 110, to generate a reconstructed video CB. The encoding unit 109 is configured to encode various encoding parameters and quantized transform coefficients. In a CABAC-based encoding algorithm, a context content may be based on neighbouring CBs, and may be used to encode information indicating the determined intra prediction mode and output a bitstream of the video signal. The DPB unit 110 is configured to store the reconstructed video CB for reference of prediction. As encoding of the video picture proceeds, new reconstructed video CBs may be generated continuously, and these reconstructed video CBs may be stored in the DPB unit 110.

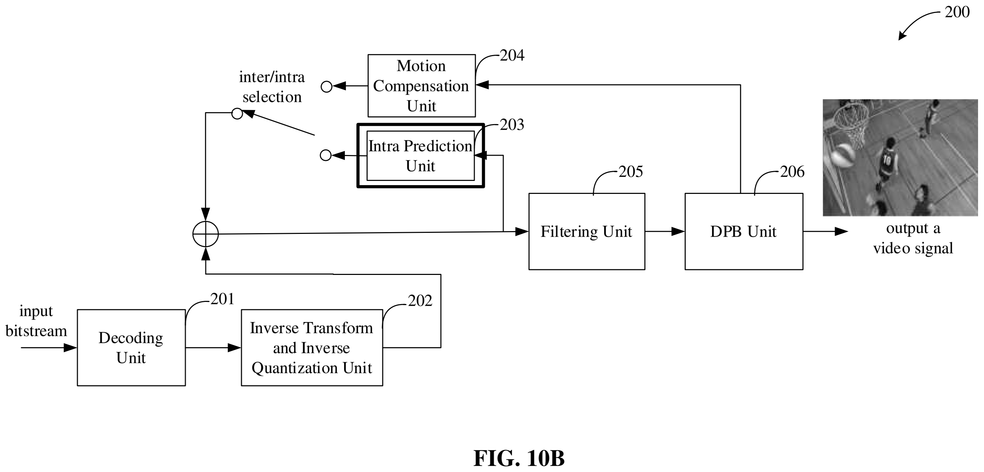

With reference to FIG. 10B, a schematic block diagram of a decoder provided in an embodiment of the disclosure is shown. As shown in FIG. 10B, the decoder (specifically, a "video decoder") 200 includes a decoding unit 201, an inverse transform and inverse quantization unit 202, an intra prediction unit 203, a motion compensation unit 204, a filtering unit 205, and a DPB unit 206, etc. The decoding unit 201 may implement header information decoding and CABAC decoding, and the filtering unit 205 may implement de-blocking filtering and SAO filtering. After the input video signal is encoded in FIG. 10A, a bitstream of the video signal is output. The bitstream is input to the decoder 200, and passes through the decoding unit 201 first to obtain the decoded transform coefficients. The transform coefficients are processed by the inverse transform and inverse quantization unit 202, to generate a residual block in the pixel domain. The intra prediction unit 203 may be configured to generate prediction data of a current video decoding block based on the determined intra prediction mode and data from a previously decoded block of the current frame or picture. The motion compensation unit 204 is configured to determine prediction information for the video decoding block by analyzing the MV and other associated syntax elements, and use the prediction information to generate a predictive block of the video decoding block being decoded. A decoded video block is formed by summing the residual block from the inverse transform and inverse quantization unit 202 and the corresponding predictive block generated by the intra prediction unit 203 or the motion compensation unit 204. The decoded video signal passes through the filtering unit 205 to remove block effect artifacts therefrom, which may improve video quality. Then, the decoded video block is stored in the DPB unit 206, the DPB unit 206 stores reference pictures used for subsequent intra prediction or motion compensation, and is also used for output of the video signal, that is, the restored original video signal is obtained.

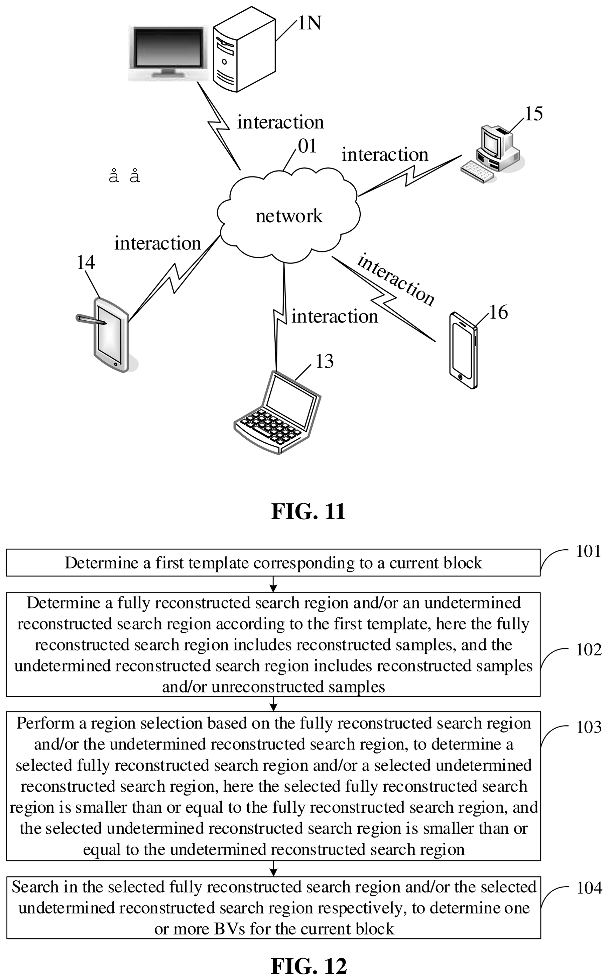

Further, an embodiment of the disclosure further provides a network architecture of an encoding and decoding system including an encoder and a decoder, here FIG. 11 shows a schematic diagram of a network architecture of an encoding and decoding system provided in an embodiment of the disclosure. As shown in FIG. 11, the network architecture includes one or more electronic devices 13 to 1N and a communication network 01. Here, the electronic devices 13 to 1N may perform video interaction through the communication network 01. The electronic devices may be various types of devices with video encoding and decoding functions during implementation. For example, the electronic devices may include a smart phone, a tablet computer, a personal computer, a Personal Digital Assistant (PDA), a navigator, a digital phone, a video phone, a television, a sensor device, a server, or the like, which is not specifically limited in the embodiments of the disclosure. Here, the decoder or the encoder described in the embodiments of the disclosure may be the above electronic devices.

It should be noted that methods of the embodiments of the disclosure are mainly applied to the intra prediction unit 103 part shown in FIG. 10A and the intra prediction unit 203 part shown in FIG. 10B. That is, the embodiments of the disclosure may be applied to the encoder, or may be applied to the decoder, or may even be applied to both the encoder and the decoder, which is not specifically limited in the embodiments of the disclosure.

It should also be noted that when the methods are applied to the intra prediction unit 103 part, "current block" specifically refers to a CB for which the intra prediction is to be preformed currently; when the methods are applied to the intra prediction unit 203 part, "current block" specifically refers to a decoding block for which the intra prediction is to be performed currently.

An embodiment of the disclosure proposes a decoding method, the decoding method is applied to a decoder. FIG. 12 is a schematic flowchart of a decoding method proposed in an embodiment of the disclosure. As shown in FIG. 12, the method for the decoder to perform a decoding process may include the following operations 101 to 104.

In operation 101, a first template corresponding to a current block is determined.

In the embodiments of the disclosure, the first template corresponding to the current block may be determined first. When the first template is acquired, a template type corresponding to the current block may be determined first, and then the first template corresponding to the current block may be further determined according to the template type.

It should be noted that the decoding method according to the embodiment of the disclosure is applied to the decoder. Furthermore, the decoding method may include an intra prediction method, more specifically, a method for predicting color components. A video picture may be divided into multiple decoding blocks, each decoding block may include a first color component, a second color component and a third color component. The current block in the embodiment of the disclosure refers to a decoding block, for which the intra prediction is to be performed currently, in the video picture.

Here, when the first color component needs to be predicted, a to-be-predicted component is the first color component; when the second color component needs to be predicted, the to-be-predicted component is the second color component; when the third color component needs to be predicted, the to-be-predicted component is the third color component. Furthermore, assuming that the first color component is predicted for the current block, and the first color component is a luma component, that is, the to-be-predicted component is the luma component, then the current block may also be referred to as a luma block; or, assuming that the second color component is predicted for the current block, and the second color component is a chroma component, that is, the to-be-predicted component is the chroma component, then the current block may also be referred to as a chroma block.

It should also be noted that in the embodiment of the disclosure, reference pixels (reference samples) of the current block may refer to reference pixels neighbouring to the current block. "Neighbouring" here may be spatially neighbouring, but is not limited thereto. For example, "neighbouring" may also be temporally neighbouring or spatially and temporally neighbouring, or even the reference pixels of the current block may be reference pixels obtained by performing some processing on spatially neighbouring reference pixels, temporally neighbouring reference pixels, spatially and temporally neighbouring reference pixels, or the like, and the embodiments of the disclosure does not make any limitation thereto.

Further, in the embodiments of the disclosure, the template type of the current block may be determined according to indication information in a bitstream; or, the template type of the current block may be determined according to a size of the current block.

Further, in the embodiments of the disclosure, the template type of the current block may also be determined according to reference pixels of the current block. The reference pixels of the current block include at least one of a left neighbouring reference pixels of the current block, an upper neighbouring reference pixels of the current block, an upper left neighbouring reference pixels of the current block, a lower left neighbouring reference pixels of the current block, or an upper right neighbouring reference pixels of the current block.

It may be understood that in the embodiments of the disclosure, the reference pixels of the current block may include neighbouring reconstructed pixels of the current block, that is, the neighbouring reconstructed pixels of the current block may be used as templates to search matching templates in a predefined search region.

It should be noted that in the embodiment of the disclosure, the reference pixels of the current block, that is, the neighbouring reconstructed pixels of the current block may include upper reference pixels, upper left reference pixels, upper right reference pixels, left reference pixels and lower left reference pixels of the current block.

It may be understood that in the embodiments of the disclosure, when the template type of the current block is determined by using the reference pixels of the current block, the template types may be classified and determined according to availability of neighbouring reference pixels.

It may be understood that in the embodiments of the disclosure, when the template type of the current block is determined, the template types may also be classified and determined according to an indication in the bitstream.

Further, in the embodiments of the disclosure, when the template type of the current block is determined according to the reference pixels of the current block, if all the left neighbouring reference pixels, the upper neighbouring reference pixels and the upper left neighbouring reference pixels of the current block are available, it is determined that the template type of the current block is a first value; if the left neighbouring reference pixels of the current block are available, it is determined that the template type of the current block is a second value; if the upper neighbouring reference pixels of the current block are available, it is determined that the template type of the current block is a third value; if both the left neighbouring reference pixels and the upper left neighbouring reference pixels of the current block are available, it is determined that the template type of the current block is a fourth value; if both the left neighbouring reference pixels and the lower left neighbouring reference pixels of the current block are available, it is determined that the template type of the current block is a fifth value; and if both the upper neighbouring reference pixels and the upper right neighbouring reference pixels of the current block are available, it is determined that the template type of the current block is a sixth value.

It should be noted that in the embodiments of the disclosure, each of the first value, the second value, the third value, the fourth value, the fifth value and the sixth value may be any value, which is not specifically limited in the disclosure. For example, the first value, the second value, the third value, the fourth value, the fifth value and the sixth value may take 1, 2, 3, 4, 5 and 6 sequentially.

Exemplarily, in the embodiments of the disclosure, the template type may be represented by refTemplateType. Correspondingly, as shown in the above FIG. 3, a block filled with grids is the current block, a neighbouring region of the current block is a template T, and six template types are shown here.

Exemplarily, the six template types are shown as follows: when all the upper left reference pixels, the upper reference pixels and the left reference pixels are available, refTemplateType has a value of 1, and the template shape is shown in (a) of FIG. 3; when only the left reference pixels are available, refTemplateType has a value of 2, and the template shape is shown in (b) of FIG. 3; when only the upper reference pixels are available, refTemplateType has a value of 3, and the template shape is shown in (c) of FIG. 3; when only the left reference pixels and the upper left reference pixels are available, refTemplateType has a value of 4, and the template shape is shown in (d) of FIG. 3; when only the left reference pixels and the lower left reference pixels are available, refTemplateType has a value of 5, and the template shape is shown in (e) of FIG. 3; and when only the upper reference pixels and the upper right reference pixels are available, refTemplateType has a value of 6, and the template shape is shown in (f) in FIG. 3.

In some embodiments, a template type for the Intra TMP may also be selected in combination with availability information of the above reference pixels and according to the indication in the bitstream. For example, a serial number for each template type is agreed on, and serial number information of an actually used template is transmitted in the bitstream, such that determination of the template type may be achieved at the decoding side.

That is, in the embodiments of the disclosure, the template type may be determined according to the availability information of the reference pixels of the current block, or the template type may be determined according to the information indicated in the bitstream, or the template type may be determined according to both the availability information of the reference pixels and the information indicated in the bitstream, which is not specifically limited in the disclosure.

Further, in the embodiments of the disclosure, when the first template corresponding to the current block is determined according to the template type, template reference pixels of the current block may be determined first according to the template type and a template size corresponding to the template type, and then the first template of the current block may be determined according to the template reference pixels.

It should be noted that in the embodiments of the disclosure, the first template of the current block may include the template reference pixels of the current block. The template reference pixels of the current block may be determined by the template type of the current block and the template size corresponding to the template type.

It should be noted that in the embodiments of the disclosure, the first template of the current block may consist of reconstructed pixels in one or more of an upper region, an upper right region, a left region, a lower left region and an upper left region of the current block, that is, the first template of the current block may consist of the reference pixels of the current block.

It should be noted that in the embodiments of the disclosure, the template size corresponding to the template type may be preset, or may be indicated by using a syntax element in the bitstream, or may be adaptively selected according to a block size or other information. For example, when a left template is acquired, a template width templateW_size may be set to 4, and when an upper template is acquired, a template height templateH_size may be set to 4.

Correspondingly, in the embodiments of the disclosure, it may determine to acquire which part of reconstructed pixels as the template reference pixels of the current block, according to the value of the template type refTemplateType of the current block and the template size corresponding to refTemplateType, and then the corresponding first template may be determined.

Exemplarily, in the embodiment of the disclosure, when refTemplateType has a value of 1, it may acquire reconstructed pixels at the left side, the upper left side and the upper side of the current block; when refTemplateType has a value of 2, only reconstructed pixels on left four columns of the current block are acquired; when refTemplateType has a value of 3, only reconstructed pixels on upper four rows of the current CB are acquired.

Or, a preset value of the template size may be any integer greater than 0 and is not limited to 4, which is not specifically limited in the disclosure.

It may be understood that in the embodiments of the disclosure, the template reference pixels of the current block may be determined from the reference pixels of the current block according to the template type of the current block and the corresponding template size, and may be used as the first template corresponding to the current block.

In operation 102, a fully reconstructed search region and/or an undetermined reconstructed search region are determined according to the first template, here the fully reconstructed search region includes reconstructed samples, and the undetermined reconstructed search region includes reconstructed samples and/or unreconstructed samples.

In the embodiments of the disclosure, after determining the first template corresponding to the current block, a fully reconstructed search region and/or an undetermined reconstructed search region may be further determined according to the first template, here the fully reconstructed search region includes reconstructed samples, and the undetermined reconstructed search region includes reconstructed samples and/or unreconstructed samples.

It may be understood that in the embodiments of the disclosure, during prediction process of the Intra TMP, a search region selected based on the first template may include an undetermined reconstructed search region and/or a fully reconstructed search region. The fully reconstructed search region may include only reconstructed samples, that is, all samples in the fully reconstructed search region are reconstructed samples. For the undetermined reconstructed search region, it may not determine whether samples in the undetermined reconstructed search region have been reconstructed, that is, the undetermined reconstructed search region may include only reconstructed samples, or may include only unreconstructed samples, or may include both the reconstructed samples and the unreconstructed samples.

Correspondingly, during traversal of the undetermined reconstructed search region, availability of each search position is reqired to be determined addtionally, such that full utilization of information of all neighbouring reconstructed samples may be achieved.

It should be noted that in the embodiments of the disclosure, the fully reconstructed search region and/or the undetermined reconstructed search region may be determined based on the first template, with a zero-value BV as a center, and according to a size of a search window and position information of a current picture.

That is, in the embodiments of the disclosure, the search region is near the zero-value BV, or it may be said that the search region is constrained by information such as the size of the search window, edges of the picture or the like, with the zero-value BV as a center.

Further, in the embodiments of the disclosure, the fully reconstructed search region is a search region including a set of positions corresponding to an upper left pixel of a corresponding reference block at each search position, and the undetermined reconstructed search region is a search coverage region including a set of pixels of the corresponding reference block at each search position.

That is, in the embodiments of the disclosure, the search region refers to a set of positions corresponding to upper left pixels of a corresponding reference block at each search position; this region may not include unreconstructed samples. For the undetermined reconstructed search region, it is because lower right pixels of the reference block corresponding to each search position in this region, that are in an upper right or lower left region of the current CB, may be unreconstructed.

Correspondingly, in the embodiments of the disclosure, the search region may be a set of upper left pixels of a search point, and the search coverage region includes a set of pixels of reference blocks corresponding to all search points.

It should be noted that in the embodiments of the disclosure, a search process of the BV may include several parts as follows: an initialization process, a process of determining a search region for the first template from a current frame, and a process of searching in the search region to determine one or more best BVs. Therefore, when the search process is performed, initialization operations need to be completed first.

Exemplarily, as shown in the above FIG. 5, nTbW and nTbH represent sizes of the current block, templateW_size and templateH_size represent template sizes, and uiPatchWidth and uiPatchHeight represent a size of a block including the current block and its template.

Correspondingly, during initialization, uiPatchWidth may be initialized to nTbW + templateW_size, and uiPatchHeight may be initialized to nTbH + templateH_size. Here templateW_size and templateH_size may be fixed constants, or may be indicated by syntax elements in the bitstream, or may be dynamically adjusted according to the size of the CB or other information; templateW_size may be equal or unequal to templateH_size. For example, templateW_size = 4, templateH_size = 4; or, when the width of the CB is greater than 8, templateW_size = 4 is set; when the width of the CB is less than or equal to 8, templateW_size = 2 is set; when the height of the CB is greater than 8, templateH_size = 4 is set; when the height of the CB is less than or equal to 8, templateH_size = 2 is set.

Further, a cost threshold between templates that is represented by diffThreshold, is initialized. For example, when the cost function is SAD, the threshold may be as follows: diffThreshold = $((1 << bitDepth) >> 2) \times (uiPatchHeight \times uiPatchWidth - nTbH \times nTbW)$. When a bit depth bitDepth of the picture is 10, diffThreshold represents that a distortion threshold of each pixel in the region of the template is 256.

Further, a position ctbRsX, ctbRsY of a CTB where the current block CB is located, is initialized.

Further, position offsets of the current block CB in the current CTB are initialized to offsetLCBY = yTbCmp - ctbRsY, offsetLCBX = xTbCmp - ctbRsX.

Further, iTemplateSizeH = templateH_size, iTemplateSizeW = templateW_size are initialized.

Further, iBvShift is initialized, here iBvShift is a precision of the BV. For example, the precision of the BV may be an integer-pixel precision, and iBvShift is 0 at this time; or, the precision of the BV may be a sub-pixel precision, for example, when iBvShift is 1, it represents a 1/2 pixel precision, and when iBvShift is 2, it represents a 1/4 pixel precision, which is not specifically limited here.

Further, a preset search range for the template is initialized, and the preset search range for the template may be set to a fixed size, or the search range may be dynamically adjusted according to the size of the CB. For example, searchRangeWidth = TMP_SEARCH_RANGE_MULT_FACTOR × nTbW, searchRangeHeight = TMP_SEARCH_RANGE_MULT_FACTOR × nTbH; here value of TMP_SEARCH_RANGE_MULT_FACTOR may be a preset value, or may be indicated by using a syntax element in the bitstream, or may be adaptively adjusted according to the size of the CB or other information, for example, it is set to 5.

Further, in the embodiments of the disclosure, when one or more BVs corresponding to the current block are determined according to the first template, the fully reconstructed search region may be determined first according to the first template, and then search may be performed in the fully reconstructed search region, to determine one or more BVs.

It should be noted that in the embodiments of the disclosure, the search region is a reconstructed part in the current picture and is limited by the size of the search range. As shown in the above FIG. 6, a background region filled with dark color is a reconstructed region, a background block filled with black is the current block, and a dotted box is a window of the search range. Therefore, in the Intra TMP technology, the search region is not larger than an overlapping part between the reconstructed region represented by dark background and a region marked by the dotted box.

It may be seen that the search region for the template of the current block may be a reconstructed part in the CTB where the current block is located, or may be other reconstructed regions in the CTB. The search region here is actually a set of all search points. The shape of the region may not be often represented by a single rectangular region, therefore during specific implementation, search may also be performed in multiple rectangular regions, and then a final best matching block and a best BV may be obtained according to search results from different regions.

Exemplarily, in some embodiments, the reconstructed region within the dotted box of FIG. 6 is processed region-wise, and upper, lower, left and right boundaries of each region are determined. Then, search is performed in multiple rectangular regions, and then a final best matching module and a best BV may be obtained according to search results from different regions.

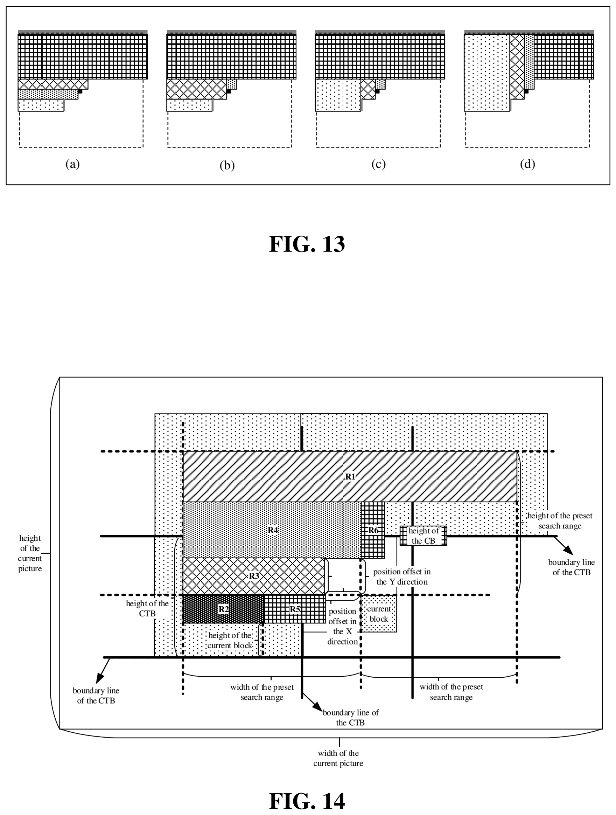

Exemplarily, with reference to FIG. 13, four different sub-region division manners are shown here. As shown in FIG. 13, a background block filled with black is the current block; all the four division manners (a), (b), (c) and (d) divide the search region into four sub-search regions, here each of different filling patterns represents a respective one of sub-search regions. All available search ranges are considered in each of (a), (b), (c) and (d).

Exemplarily, assuming that different search regions are distinguished and represented by regionId, considering that pixels of the template of the current CB need to be obtained from a reconstructed region of the picture and pixels of the reconstructed block corresponding to the template also need to be obtained from the reconstructed region, then it needs to further determine positions that may be searched in search regions represented by different regionId, according to the position (xTbCmp, yTbCmp) of the current CB, the size (nTbW, nTbH) of the current CB, the size (picWidth, picHeight) of the current picture, the size (CtbSizeW, CtbSizeH) of the CTB where the current CB is located, the preset search range (searchRangeWidth, searchRangeHeight) for the template and the position offset (offsetLCBY, offsetLCBX) of the current CB in the current CTB, thereby determining the BV. Specifically, iVerMin and iVerMax represent an minimum absolute coordinate position that may be searched in a vertical direction and an maximum absolute coordinate position that may be searched in the vertical direction respectively, and iHorMin and iHorMax represent an minimum absolute coordinate position that may be searched in a horizontal direction and an maximum absolute coordinate position that may be searched in the horizontal direction respectively. Values of iVerMin, iVerMax, iHorMin and iHorMax are different in search regions represented by different regionId.

Further, in the embodiments of the disclosure, the search region may be divided according to the shape of the reconstructed region and determinacy of availability of the reconstructed pixels, which may balance computational complexity and encoding efficiency. For example, a CTB region encoded before the CTB where the current block is located and regions located at upper left of, directly left of and directly above the current CB in the CTB where the current CB is located, all belong to regions that have definitely been reconstructed, therefore such region where it may be determined that all samples contained in the region have been reconstructed may be determined as the fully reconstructed search region. Correspondingly, in the CTB where the current CB is located, regions located at lower left and upper right of the current CB belong to regions that may or may not have been reconstructed, therefore such region where it may not determine that all samples contained in the region have been reconstructed, is determined as the undetermined reconstructed search region.

In some embodiments, based on considerations of the fully reconstructed search region and the undetermined reconstructed search region, taking (a) in FIG. 13 as an example, the search region is divided into six sub-search regions, of which implementations are as follows.

When regionId is equal to 0, iVerMin, iVerMax, iHorMin and iHorMax may be calculated as follows:

iHorMax$_0$ = min((xTbCmp + searchRangeWidth) << iBvShift, ((picWidth - nTbW) << iBvShift));

iHorMin$_0$ = max((iTemplateSizeW) << iBvShift, (xTbCmp - searchRangeWidth) << iBvShift);

$$iVerMax_0 = (yTbCmp - nTbH - offsetLCBY) << iBvShift;$$

iVerMin$_0$ = max(((iTemplateSizeH) << iBvShift), ((yTbCmp - searchRangeHeight) << iBvShift)).

When regionId is equal to 1, iVerMin, iVerMax, iHorMin and iHorMax may be calculated as follows:

iHorMin$_1$ = max((iTemplateSizeW) << iBvShift, (xTbCmp - searchRangeWidth) << iBvShift);

$$iHorMax_1 = (xTbCmp - offsetLCBX - nTbW) << iBvShift;$$

$$iVerMin_1 = (yTbCmp + 1) << iBvShift;$$

iVerMax$_1$ = min((picHeight - nTbH) << iBvShift, (yTbCmp - offsetLCBY + CtbSizeH - nTbH) << iBvShift).

When regionId is equal to 2, iVerMin, iVerMax, iHorMin and iHorMax may be calculated as follows:

$$iHorMax_2 = (xTbCmp - offsetLCBX - nTbW) << iBvShift;$$

iHorMin$_2$ = max((iTemplateSizeW) << iBvShift, (xTbCmp - searchRangeWidth) << iBvShift);

iVerMin$_2$ = max((iTemplateSizeH) << iBvShift, (yTbCmp - nTbH - offsetLCBY) << iBvShift);

$$iVerMax_2 = (yTbCmp) << iBvShift.$$

When regionId is equal to 3, iVerMin, iVerMax, iHorMin and iHorMax may be calculated as follows:

iHorMin$_3$ = max((iTemplateSizeW) << iBvShift, (xTbCmp - offsetLCBX - nTbW + 1) << iBvShift);

$$iHorMax_3 = (xTbCmp - nTbW) << iBvShift;$$

iVerMin$_3$ = max(((iTemplateSizeH) << iBvShift), (yTbCmp - offsetLCBY - nTbH + 1) << iBvShift);

$$iVerMax_3 = (yTbCmp - nTbH) << iBvShift.$$

When regionId is equal to 4, iVerMin, iVerMax, iHorMin and iHorMax may be calculated as follows:

$$iHorMin = (xTbCmp - offsetLCBX - nTbW) << iBvShift;$$

$$iHorMax = (xTbCmp - nTbW) << iBvShift;$$

$$iVerMin = (yTbCmp + 1) << iBvShift;$$

iVerMax = min((picHeight - nTbH) << iBvShift, (yTbCmp - offsetLCBY + CtbSizeH - nTbH) << iBvShift).

When regionId is equal to 5, iVerMin, iVerMax, iHorMin and iHorMax may be calculated as follows:

$$iHorMin = (xTbCmp) << iBvShift;$$

iHorMax = min((xTbCmp + CtbSizeW - nTbW) << iBvShift, min((xTbCmp + searchRangeWidth) << iBvShift, ((pic-Width - nTbW) << iBvShift)));

iVerMin = max(((iTemplateSizeH) << iBvShift), (yTbCmp - offsetLCBY - nTbH + 1) << iBvShift);

$$iVerMax = (yTbCmp - nTbH) << iBvShift.$$

In an actual application, $1HorMin_{regionId}$, $iHorMax_{regionId}$, $iVerMin_{regionId}$ and $iVerMax_{regionId}$ here represent a left edge, a right edge, an upper edge and a lower edge of each of different sub-search regions respectively.

In order to intuitively describe different sub-search regions corresponding to different regionId, FIG. 14 shows a second schematic diagram of a process of determining a search region. As shown in FIG. 14, R1, R2, R3, R4, R5 and R6 represent six different sub-search regions, here R1, R2, R3 and R4 are the fully reconstructed search regions, and R5 and R6 are the undetermined reconstructed search regions. It should be noted that FIG. 14 is represented by a pixel range which may be aligned with an upper left pixel of the block.

That is, in some embodiments, the search region may be divided into two types, one type of search region is a region (referred to as a fully reconstructed search region) where it is sure that all samples in the region have been reconstructed, for example, this type of search region includes four regions R1, R2, R3 and R4 in FIG. 14; another type of search region is a region (referred to as an undetermined reconstructed search region) where it is not sure whether all samples in the region have been reconstructed, for example, this type of search region includes two regions R5 and R6 in FIG. 14.

Further, in the embodiments of the disclosure, in order to achieve a smaller number of search regions to reduce an amount of codes, part of the fully reconstructed search region may be selectively merged with part of the undetermined reconstructed search region, to form a new undetermined reconstructed search region, thereby reducing the number of search regions.

In some embodiments, the fully reconstructed search region and/or the undetermined reconstructed search region may be merged and updated to determine an updated fully reconstructed search region and an updated undetermined reconstructed search region. Here, a first total region number of the updated fully reconstructed search region and the updated undetermined reconstructed search region is less than a second total region number of the fully reconstructed search region and/or the undetermined reconstructed search region.

That is, in the embodiments of the disclosure, an initially specified undetermined reconstructed search region is relatively large, and a total region number is relatively small.

Exemplarily, in the embodiments of the disclosure, for the four fully reconstructed search regions R1, R2, R3 and R4 and the two undetermined reconstructed search regions R5 and R6 in above FIG. 13, R2 may be merged with R5, to form a new undetermined reconstructed search region. The updated fully reconstructed search region includes R1, R3 and R4, and the updated undetermined reconstructed search region includes R6 and the new undetermined reconstructed search region consisting of R2 and R5.

Exemplarily, in the embodiments of the disclosure, for the four fully reconstructed search regions R1, R2, R3 and R4 and the two undetermined reconstructed search regions R5 and R6 in above FIG. 13, R4 may be merged with R6, to form a new undetermined reconstructed search region. The updated fully reconstructed search region includes R1, R2 and R3, and the updated undetermined reconstructed search region includes R5 and the new undetermined reconstructed search region consisting of R4 and R6.

In operation 103, a region selection is performed based on the fully reconstructed search region and/or the undetermined reconstructed search region, to determine a selected fully reconstructed search region and/or a selected undetermined reconstructed search region. Here the selected fully reconstructed search region is smaller than or equal to the fully reconstructed search region, and the selected undetermined reconstructed search region is smaller than or equal to the undetermined reconstructed search region.

In the embodiments of the disclosure, after determining the search region according to the first template, that is, determining the fully reconstructed search region and/or the undetermined reconstructed search region, the region selection may be further performed based on the fully reconstructed search region and/or the undetermined reconstructed search region, such that the corresponding selected fully reconstructed search region and/or selected undetermined reconstructed search region may be determined.

It should be noted that in the embodiments of the disclosure, the operation of performing the region selection based on the fully reconstructed search region and/or the undetermined reconstructed search region may be understood as reducing and limiting the fully reconstructed search region and/or the undetermined reconstructed search region, such that the range of the search region where search is performed finally may be reuced, thereby reducing encoding and decoding complexities.

Correspondingly, in the embodiments of the disclosure, after performing the region selection based on the fully reconstructed search region and/or the undetermined reconstructed search region, the determined selected fully reconstructed search region is smaller than or equal to the fully reconstructed search region, and the determined selected undetermined reconstructed search region is smaller than or equal to the undetermined reconstructed search region.

Further, in the embodiments of the disclosure, when the region selection is performed based on the fully reconstructed search region and/or the undetermined reconstructed search region, the fully reconstructed search region may be determined as the selected fully reconstructed search region, while the region selection is performed on the undetermined reconstructed search region, to determine the selected undetermined reconstructed search region.

That is, in the embodiments of the disclosure, only the undetermined reconstructed search region may be reduced and limited, to obtian the corresponding selected undetermined reconstructed search region. The selected undetermined reconstructed search region and the fully reconstructed search region form the search region where search is performed finally.

Further, in the embodiments of the disclosure, when the region selection is performed based on the fully reconstructed search region and/or the undetermined reconstructed search region, the region selection may be performed on the fully reconstructed search region, to determine the selected fully reconstructed search region, while the undetermined reconstructed search region may be determined as the selected undetermined reconstructed search region.

That is, in the embodiments of the disclosure, it may select to reduce and limit only the fully reconstructed search region, to obtain the corresponding selected fully reconstructed search region, and the selected fully reconstructed search region and the undetermined reconstructed search region form the search region where search is performed finally.

Further, in the embodiments of the disclosure, when the region selection is performed based on the fully reconstructed search region and/or the undetermined reconstructed search region, the region selection may be performed on the fully reconstructed search region, to determine the selected fully reconstructed search region, while the region selection may be performed on the undetermined reconstructed search region, to determine the selected undetermined reconstructed search region.

That is, in the embodiments of the disclosure, both the fully reconstructed search region and the undetermined reconstructed search region may be reduced and limited, to obtain the corresponding selected fully reconstructed search region and selected undetermined reconstructed search region. The selected fully reconstructed search region and the selected undetermined reconstructed search region form the search region where search is performed finally.

Further, in the embodiments of the disclosure, when the region selection is performed based on the fully reconstructed search region and/or the undetermined reconstructed search region, the fully reconstructed search region may be determined as the selected fully reconstructed search region, while the undetermined reconstructed search region may be determined as the selected undetermined reconstructed search region.

That is, in the embodiments of the disclosure, the fully reconstructed search region and the undetermined reconstructed search region may not be reduced and limited, instead, the fully reconstructed search region and the undetermined reconstructed search region directly form the search region where search is performed finally.

Further, in the embodiments of the disclosure, when the region selection is performed based on the fully reconstructed search region and/or the undetermined reconstructed search region, to determine the selected fully reconstructed search region and/or the selected undetermined reconstructed search region, scaling parameters may be determined first. Then, the region selection is performed on the fully reconstructed search region and/or the undetermined reconstructed search region according to the scaling parameters, to finally determine the selected fully reconstructed search region and/or the selected undetermined reconstructed search region.

It should be noted that in the embodiments of the disclosure, the scaling parameters may include a height scaling parameter hIndex and a width scaling parameter wIndex. Each of the height scaling parameter hIndex and the width scaling parameter wIndex is equal to or greater than 1.

Exemplarily, in some embodiments, for search points in the search region, all search points in a specified search region may be traversed, or the search range may be limited to a local search range in different manners, to balance computational complexity and encoding efficiency. For example, the width of the search range may be limited to 1/wIndex times the original width, and the height of the search range may be limited to 1/hIndex times the original height, here each of wIndex and hIndex is arbitrary value equal to or greater than 1.

It should be noted that in the embodiments of the disclosure, a bitstream may be decoded to determine the scaling parameters. The scaling parameters are signalled through any one of sequence parameter set (sps) layer syntax information, picture parameter set (pps) layer syntax information, application parameter set (aps) layer syntax information, shell (sh) layer syntax information, or centralized unit (cu) layer syntax information.

**It** should be noted that in the embodiments of the disclosure, the scaling parameters may also be determined according to preset values, for example, each of wIndex and hIndex is 2.

That is, in the embodiments of the disclosure, the scaling parameters for limiting the size of the search region may be signalled through an sps layer syntax, or a pps layer syntax, or an aps layer syntax, or an sh layer syntax, or a cu layer syntax, etc.

It should be noted that in the embodiments of the disclosure, the region selection may be performed for different search regions in different manners, that is, different search regions may correspond to different reducing strategies.

Further, in the embodiments of the disclosure, a search region in the fully reconstructed search region that is located at an upper side of the current block, may be determined as a first initial region; a search region in the fully reconstructed search region that is located at a left side or an upper left side of the current block, may be determined as a second initial region; a search region in the undetermined reconstructed search region that is located at a lower left side of the current block, may be determined as a third initial region; and a search region in the undetermined reconstructed search region that is located at an upper right side of the current block, may be determined as a fourth initial region.

Exemplarily, in some embodiments, as shown in FIG. 14, R1, R2, R3, R4, R5 and R6 represent six different sub-search regions, here each of R1, R2, R3 and R4 is the fully reconstructed search region, and each of R5 and R6 is the undetermined reconstructed search region. According to a positional relationship between each sub-search region and the current block, the search region R1 in the fully reconstructed search region that is located at the upper side of the current block, may be determined as the first initial region; search regions R2, R3 and R4 in the fully reconstructed search region that is located at the left side or the upper left side of the current block, may be determined as the second initial region; the search region R5 in the undetermined reconstructed search region that is located at the lower left side of the current block, may be determined as the third initial region; and the search region R6 in the undetermined reconstructed search region that is located at the upper right side of the current block, may be determined as the fourth initial region.

Further, in the embodiments of the disclosure, when the region selection is performed on the fully reconstructed search region and/or the undetermined reconstructed search region according to the scaling parameters, to determine the selected fully reconstructed search region and/or the selected undetermined reconstructed search region, a first selected region may be determined from the first initial region according to the scaling parameters and position information of the first initial region. Here, the first selected region is any region in the first initial region. Then, the selected fully reconstructed search region may be determined according to the first selected region.

It may be understood that in the embodiments of the disclosure, for the search region such as R1 at the upper side of the current block, after obtaining four boundaries iHorMin, iHorMax, iVerMin and iVerMax of the search region (the first initial region), the search region may be clipped, limited and reduced by using the scaling parameters wIndex and hIndex, to obtain the first selected region.

It should be noted that in the embodiments of the disclosure, for the search region such as R1 at the upper side of the current block, the first selected region after scaling may be any region in the first initial region. That is, the first selected region may be sub-regions from the first initial region at different locations such as an upper sub-region, a lower sub-region, a left sub-region, a right sub-region, a middle sub-region or the like, which is not specifically limited in the disclosure.

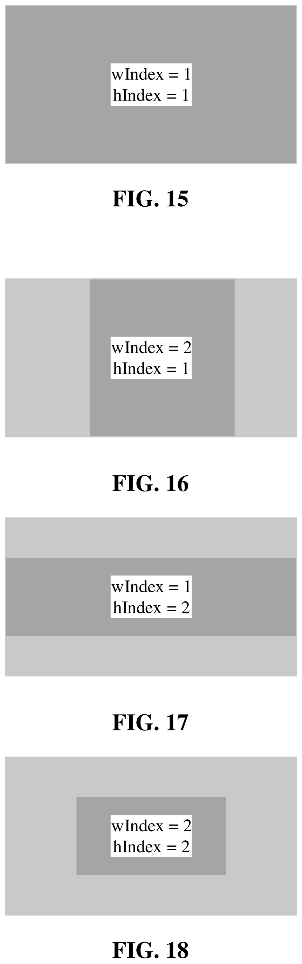

Exemplarily, in some embodiments, FIG. 15 is a first schematic diagram of region selection. As shown in FIG. 15, for the search region such as R1 at the upper side of the current block, if value of each of the scaling parameters wIndex and hIndex is 1, the first selected region obtained after performing the region selection on the first initial region by using the scaling parameters wIndex and hIndex is the corresponding first initial region.

Exemplarily, in some embodiments, FIG. 16 is a second schematic diagram of region selection. As shown in FIG. 16, for the search region such as R1 at the upper side of the current block, if the value of the scaling parameter wIndex is 2 and the value of the scaling parameter hIndex is 1, the first selected region obtained after performing the region selection on the first initial region by using the scaling parameters wIndex and hIndex is a middle region of the corresponding first initial region.

Exemplarily, in some embodiments, FIG. 17 is a third schematic diagram of region selection. As shown in FIG. 17, for the search region such as R1 at the upper side of the current block, if the value of the scaling parameter wIndex is 1 and the value of the scaling parameter hIndex is 2, the first selected region obtained after performing the region selection on the first initial region by using the scaling parameters wIndex and hIndex is a middle region of the corresponding first initial region.

Exemplarily, in some embodiments, FIG. 18 is a fourth schematic diagram of region selection. As shown in FIG. 18, for the search region such as R1 at the upper side of the current block, if the value of the scaling parameter wIndex is 2 and the value of the scaling parameter hIndex is 2, the first selected region obtained after performing the region selection on the first initial region by using the scaling parameters wIndex and hIndex is a middle region of the corresponding first initial region.

Exemplarily, in some embodiments, when regionId is equal to 0, for example R1 of FIG. 14, four boundaries after limiting the search region, that is, four boundaries of the first selected region may be set to $iVerMin_{regionId}$, $iVerMax_{regionId}$, $iHorMin_{regionId}$ and $iHorMax_{regionId}$ respectively, then $iVerMin_{regionId}$, $iVerMax_{regionId}$, $iHorMin_{regionId}$ and $iHorMax_{regionId}$ are calculated as follows:

$$iHorMin_{regionId} = iHorMin + (iHorMax - iHorMin)/(2 \times wIndex);$$

$$iHorMax_{regionId} = iHorMax - (iHorMax - iHorMin)/(2 \times wIndex);$$

$$iVerMin_{regionId} = iVerMin + (iVerMax - iVerMin)/(2 \times hIndex);$$

$$iVerMax_{regionId} = iVerMax - (iVerMax - iVerMin)/(2 \times hIndex).$$

It may be understood that in the embodiments of the disclosure, in a process of performing the region selection according to the scaling parameters, the involved division operation may be implemented by right shift. For example, when wIndex is set to 2, the same result may be achieved by using a >> 1 operation.

Further, in the embodiments of the disclosure, when the region selection is performed on the fully reconstructed search region and/or the undetermined reconstructed search region according to the scaling parameters, to determine the selected fully reconstructed search region and/or the selected undetermined reconstructed search region, a second selected region may be determined from the second initial region according to the scaling parameters and position information of the second initial region. Here, the second selected region is any region in the second initial region. Then, the selected fully reconstructed search region may be determined according to the second selected region.

Further, in the embodiments of the disclosure, when the region selection is performed on the fully reconstructed search region and/or the undetermined reconstructed search region according to the scaling parameters, to determine the selected fully reconstructed search region and/or the selected undetermined reconstructed search region, a third selected region may be determined from the third initial region according to the scaling parameters and position information of the third initial region, here the third selected region is any region in the third initial region. Then, the selected fully reconstructed search region may be determined according to the third selected region.

It may be understood that in the embodiments of the disclosure, for the search region such as R2, R3, R4 and R5 at the left side, upper left side or lower left side of the current block, after obtaining four boundaries iHorMin, iHorMax, iVerMin and iVerMax of the search region (the second initial region or the third initial region), the search region may be clipped, limited and reduced by using the scaling parameters wIndex and hIndex, to obtain the second (or third) selected region.

It should be noted that in the embodiments of the disclosure, for the search region such as R2, R3, R4 and R5 at the left side, upper left side or lower left side of the current block, the second (or third) selected region after scaling may be any region in the second (or third) initial region. That is, the second (or third) selected region may be a sub-region at a different location from the second (or third) initial region such as an upper sub-region, a lower sub-region, a left sub-region, a right sub-region, a middle sub-region or the like, which is not specifically limited in the disclosure.

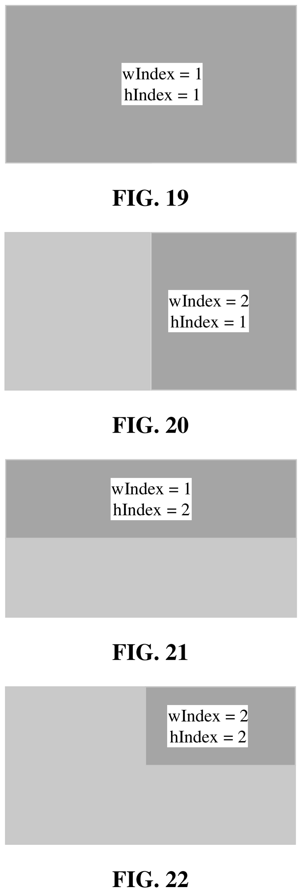

Exemplarily, in some embodiments, FIG. 19 is a fifth schematic diagram of region selection. As shown in FIG. 19, for the search region such as R2, R3, R4 and R5 at the left side, upper left side or lower left side of the current block, if value of each of the scaling parameters wIndex and hIndex is 1, the first selected region obtained after performing the region selection on the first initial region by using the scaling parameters wIndex and hIndex is the corresponding first initial region.

Exemplarily, in some embodiments, FIG. 20 is a sixth schematic diagram of region selection. As shown in FIG. 20, for the search region such as R2, R3, R4 and R5 at the left side, upper left side or lower left side of the current block, if the value of the scaling parameter wIndex is 2 and the value of the scaling parameter hIndex is 1, the first selected region obtained after performing the region selection on the first initial region by using the scaling parameters wIndex and hIndex is a right region of the corresponding first initial region.

Exemplarily, in some embodiments, FIG. 21 is a seventh schematic diagram of region selection. As shown in FIG.

21, for the search region such as R2, R3, R4 and R5 at the left side, upper left side or lower left side of the current block, if the value of the scaling parameter wIndex is 1 and the value of the scaling parameter hIndex is 2, the first selected region obtained after performing the region selection on the first initial region by using the scaling parameters wIndex and hIndex is an upper region of the corresponding first initial region.

Exemplarily, in some embodiments, FIG. 22 is an eighth schematic diagram of region selection. As shown in FIG. 22, for the search region such as R2, R3, R4 and R5 at the left side, upper left side or lower left side of the current block, if the value of the scaling parameter wIndex is 2 and the value of the scaling parameter hIndex is 2, the first selected region obtained after performing the region selection on the first initial region by using the scaling parameters wIndex and hIndex is an upper right region of the corresponding first initial region.

Exemplarily, in some embodiments, when regionId is equal to 1, 2 or 3, for example R2, R3 or R4 of FIG. 14, four boundaries after limiting the search region, that is, four boundaries of the second selected region may be set to $iVerMin_{regionId}$, $iVerMax_{regionId}$, $iHorMin_{regionId}$ and $iHorMax_{regionId}$ respectively, then $iHorMin_{regionId}$ and $iHorMax_{regionId}$ are calculated as follows:

$$iHorMin_{regionId} = iHorMax - (iHorMax - iHorMin)/wIndex;$$

$$iHorMax_{regionId} = iHorMax.$$

Exemplarily, in some embodiments, when regionId is equal to 1, 2 or 3, for example R2, R3 or R4 of FIG. 14, four boundaries after limiting the search region, that is, four boundaries of the second selected region may be set to $iVerMin_{regionId}$, $iVerMax_{regionId}$, $iHorMin_{regionId}$ and $iHorMax_{regionId}$ respectively, then $iHorMin_{regionId}$ and $iHorMax_{regionId}$ are calculated as follows:

$$iHorMin_{regionId} = iHorMin + (iHorMax - iHorMin)/wIndex;$$

$$iHorMax_{regionId} = iHorMax.$$

Exemplarily, in some embodiments, when regionId is equal to 1, 2 or 3, for example R2, R3 or R4 of FIG. 14, four boundaries after limiting the search region, that is, four boundaries of the second selected region may be set to $iVerMin_{regionId}$, $iVerMax_{regionId}$, $iHorMin_{regionId}$ and $iHorMax_{regionId}$ respectively, then $iHorMin_{regionId}$ and $iHorMax_{regionId}$ are calculated as follows:

when wIndex is 2, $iHorMin_{regionId}$ = (iHorMax + iHorMin)/wIndex;

$$iHorMax_{regionId} = iHorMax.$$

Exemplarily, in some embodiments, when regionId is equal to 1, 2 or 3, for example R2, R3 or R4 of FIG. 14, four boundaries after limiting the search region, that is, four boundaries of the second selected region may be set to $iVerMin_{regionId}$, $iVerMax_{regionId}$, $iHorMin_{regionId}$ and $iHorMax_{regionId}$ respectively, then $iVerMin_{regionId}$ and $iVerMax_{regionId}$ are calculated as follows:

$$iVerMin_{regionId} = iVerMin;$$

$$iVerMax_{regionId} = iVerMax - (iVerMax - iVerMin)/hIndex.$$

Exemplarily, in some embodiments, when regionId is equal to 1, 2 or 3, for example R2, R3 or R4 of FIG. 14, four boundaries after limiting the search region, that is, four boundaries of the second selected region may be set to $iVerMin_{regionId}$, $iVerMax_{regionId}$, $iHorMin_{regionId}$ and $iHorMax_{regionId}$ respectively, then $iVerMin_{regionId}$ and $iVerMax_{regionId}$ are calculated as follows:

$$iVerMin_{regionId} = iVerMin;$$

$$iVerMax_{regionId} = iVerMin + (iVerMax - iVerMin)/hIndex.$$

Exemplarily, in some embodiments, when regionId is equal to 1, 2 or 3, for example R2, R3 or R4 of FIG. 14, four boundaries after limiting the search region, that is, four boundaries of the second selected region may be set to $iVerMin_{regionId}$, $iVerMax_{regionId}$, $iHorMin_{regionId}$ and $iHorMax_{regionId}$ respectively, then $iVerMin_{regionId}$ and $iVerMax_{regionId}$ are calculated as follows:

$$iVerMin_{regionId} = iVerMin;$$

when hIndex is 2, $iVerMax_{regionId}$ = (iVerMax + iVerMin)/hIndex.

Exemplarily, in some embodiments, when regionId is equal to 4, for example R5 of FIG. 14, four boundaries after limiting the search region, that is, four boundaries of the third selected region may be set to $iVerMin_{regionId}$, $1VerMax_{regionId}$, $iHorMin_{regionId}$ and $iHorMax_{regionId}$ respectively, then $iHorMin_{regionId}$ and $iHorMax_{regionId}$ are calculated as follows:

$$iHorMin_{regionId} = iHorMax - (iHorMax - iHorMin)/wIndex;$$

$$iHorMax_{regionId} = iHorMax.$$

Exemplarily, in some embodiments, when regionId is equal to 4, for example R5 of FIG. 14, four boundaries after limiting the search region, that is, four boundaries of the third selected region may be set to $iVerMin_{regionId}$, $iVerMax_{regionId}$, $iHorMin_{regionId}$ and $iHorMax_{regionId}$ respectively, then $iHorMin_{regionId}$ and $iHorMax_{regionId}$ are calculated as follows:

$$iHorMin_{regionId} = iHorMin + (iHorMax - iHorMin)/wIndex;$$

$$iHorMax_{regionId} = iHorMax.$$

Exemplarily, in some embodiments, when regionId is equal to 4, for example R5 of FIG. 14, four boundaries after limiting the search region, that is, four boundaries of the third selected region may be set to $iVerMin_{regionId}$, $iVerMax_{regionId}$, $iHorMin_{regionId}$ and $iHorMax_{regionId}$ respectively, then $iHorMin_{regionId}$ and $iHorMax_{regionId}$ are calculated as follows: when wIndex is 2, $iHorMin_{regionId}$ = (iHorMax + iHorMin)/wIndex;

$$iHorMax_{regionId} = iHorMax.$$

Exemplarily, in some embodiments, when regionId is equal to 4, for example R5 of FIG. 14, four boundaries after limiting the search region, that is, four boundaries of the third selected region may be set to $iVerMin_{regionId}$, $iVerMax_{regionId}$, $iHorMin_{regionId}$ and $iHorMax_{regionId}$ respectively, then $iVerMin_{regionId}$ and $iVerMax_{regionId}$ are calculated as follows:

$$iVerMin_{regionId} = iVerMin;$$

$$iVerMax_{regionId} = iVerMax - (iVerMax - iVerMin)/hIndex.$$

Exemplarily, in some embodiments, when regionId is equal to 4, for example R5 of FIG. 14, four boundaries after limiting the search region, that is, four boundaries of the third selected region may be set to $iVerMin_{regionId}$, $iVerMax_{regionId}$, $iHorMin_{regionId}$ and $iHorMax_{regionId}$ respectively, then $iVerMin_{regionId}$ and $iVerMax_{regionId}$ are calculated as follows:

$$iVerMin_{regionId} = iVerMin;$$

$$iVerMax_{regionId} = iVerMin + (iVerMax - iVerMin)/hIndex.$$

Exemplarily, in some embodiments, when regionId is equal to 4, for example R5 of FIG. 14, four boundaries after limiting the search region, that is, four boundaries of the third selected region may be set to $iVerMin_{regionId}$, $iVerMax_{regionId}$, $iHorMin_{regionId}$ and $iHorMax_{regionId}$ respectively, then $iVerMin_{regionId}$ and $iVerMax_{regionId}$ are calculated as follows:

$$iVerMin_{regionId} = iVerMin;$$

when hIndex is 2, $\text{iVerMax}_{\text{regionId}}$ = (iVerMax + iVerMin)/hIndex.

It may be understood that in the embodiments of the disclosure, for the search region such as R2, R3, R4 and R5 at the left side, upper left side or lower left side of the current block, when the region selection is performed on the second (or third) initial region, only a right half of the second (or third) initial region may be selected, then it is determined that wIndex is 2, $\text{iHorMin}_{\text{regionId}}$ = (iHorMax + iHorMin)/wIndexiHorMin, while $\text{iHorMax}_{\text{regionId}}$ = iHorMax, $\text{iVerMin}_{\text{regionId}}$ = iVerMin, $\text{iVerMax}_{\text{regionId}}$ = iVerMax are set.

It may be understood that in the embodiments of the disclosure, for the search region such as R2, R3, R4 and R5 at the left side, upper left side or lower left side of the current block, when the region selection is performed on the second (or third) initial region, only an upper half of the second (or third) initial region may be selected, then it is determined that hIndex is 2, $\text{iVerMax}_{\text{regionId}}$ = (iVerMax + iVerMin)/hIndex, while $\text{iHorMin}_{\text{regionId}}$ = iHorMin, $\text{iHorMax}_{\text{regionId}}$ = iHorMax, $\text{iVerMin}_{\text{regionId}}$ = iVerMin are set.

It may be understood that in the embodiments of the disclosure, in a process of performing the region selection according to the scaling parameters, the involved division operation may be implemented by right shift. For example, when wIndex is set to 2, the same result may be achieved by using a >> 1 operation.

Further, in the embodiments of the disclosure, when the region selection is performed on the fully reconstructed search region and/or the undetermined reconstructed search region according to the scaling parameters, to determine the selected fully reconstructed search region and/or the selected undetermined reconstructed search region, a fourth selected region may be determined from the fourth initial region according to the scaling parameters and position information of the fourth initial region, here the fourth selected region is any region in the fourth initial region. Then, the selected undetermined reconstructed search region may be determined according to the fourth selected region.

It may be understood that in the embodiments of the disclosure, for the search region such as R6 at the upper right side of the current block, after obtaining four boundaries iHorMin, iHorMax, iVerMin and iVerMax of the search region (the fourth initial region), the search region may be clipped, limited and reduced by using the scaling parameters wIndex and hIndex, to obtain the fourth selected region.

It should be noted that in the embodiments of the disclosure, for the search region such as R6 at the upper right side of the current block, the fourth selected region after scaling may be any region in the fourth initial region. That is, the fourth selected region may select sub-regions from the fourth initial region in different locations such as an upper sub-region, a lower sub-region, a left sub-region, a right sub-region, a middle sub-region or the like, which is not specifically limited in the disclosure.

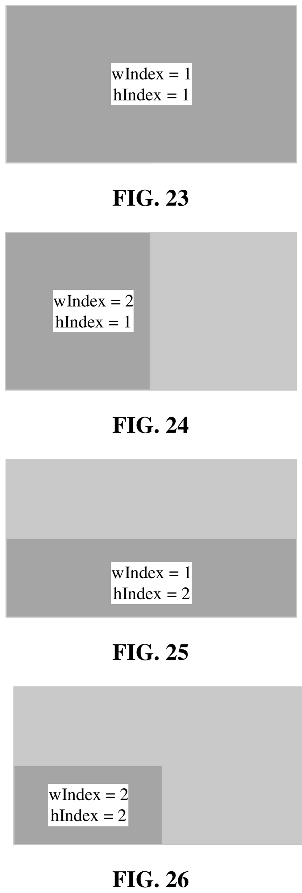

Exemplarily, in some embodiments, FIG. 23 is a ninth schematic diagram of region selection. As shown in FIG. 23, for the search region such as R6 at the upper right side of the current block, if value of each of the scaling parameters wIndex and hIndex is 1, the fourth selected region obtained after performing the region selection on the fourth initial region by using the scaling parameters wIndex and hIndex is the corresponding fourth initial region.

Exemplarily, in some embodiments, FIG. 24 is a tenth schematic diagram of region selection. As shown in FIG. 24, for the search region such as R6 at the upper right side of the current block, if the value of the scaling parameter wIndex is 2 and the value of the scaling parameter hIndex is 1, the fourth selected region obtained after performing the region selection on the fourth initial region by using the scaling parameters wIndex and hIndex is a left region of the corresponding fourth initial region.

Exemplarily, in some embodiments, FIG. 25 is an eleventh schematic diagram of region selection. As shown in FIG. 25, for the search region such as R6 at the upper right side of the current block, if the value of the scaling parameter wIndex is 1 and the value of the scaling parameter hIndex is 2, the fourth selected region obtained after performing the region selection on the fourth initial region by using the scaling parameters wIndex and hIndex is a lower region of the corresponding fourth initial region.

Exemplarily, in some embodiments, FIG. 26 is a twelfth schematic diagram of region selection. As shown in FIG. 26, for the search region such as R6 at the upper right side of the current block, if the value of the scaling parameter wIndex is 2 and the value of the scaling parameter hIndex is 2, the fourth selected region obtained after performing the region selection on the fourth initial region by using the scaling parameters wIndex and hIndex is a lower left region of the corresponding fourth initial region.

Exemplarily, in some embodiments, when regionId is equal to 5, for example R6 of FIG. 14, four boundaries after limiting the search region, that is, four boundaries of the first selected region may be set to $\text{iVerMin}_{\text{regionId}}$, $\text{iVerMax}_{\text{regionId}}$, $\text{iHorMin}_{\text{regionId}}$ and $\text{iHorMax}_{\text{regionId}}$ respectively, then $\text{iHorMin}_{\text{regionId}}$ and $\text{iHorMax}_{\text{regionId}}$ are calculated as follows:

$$\text{iHorMax}_{\text{regionId}} = \text{iHorMin} + (\text{iHorMax} - \text{iHorMin})/\text{wIndex};$$

$$\text{iHorMin}_{\text{regionId}} = \text{iHorMin}.$$

Exemplarily, in some embodiments, when regionId is equal to 5, for example R6 of FIG. 14, four boundaries after limiting the search region, that is, four boundaries of the first selected region may be set to $iVerMin_{regionId}$, $iVerMax_{regionId}$, $iHorMin_{regionId}$ and $iHorMax_{regionId}$ respectively, then $iHorMin_{regionId}$ and $iHorMax_{regionId}$ are calculated as follows:

$$iHorMax_{regionId} = iHorMax - (iHorMax - iHorMin)/wIndex;$$

$$iHorMin_{regionId} = iHorMin.$$

Exemplarily, in some embodiments, when regionId is equal to 5, for example R6 of FIG. 14, four boundaries after limiting the search region, that is, four boundaries of the first selected region may be set to $iVerMin_{regionId}$, $iVerMax_{regionId}$, $iHorMin_{regionId}$ and $iHorMax_{regionId}$ respectively, then $iHorMin_{regionId}$ and $iHorMax_{regionId}$ are calculated as follows: when wIndex is 2, $iHorMax_{regionId} = (iHorMax + iHorMin)/wIndex$;

$$iHorMin_{regionId} = iHorMin.$$

Exemplarily, in some embodiments, when regionId is equal to 5, for example R6 of FIG. 14, four boundaries after limiting the search region, that is, four boundaries of the first selected region may be set to $iVerMin_{regionId}$, $iVerMax_{regionId}$, $iHorMin_{regionId}$ and $iHorMax_{regionId}$ respectively, then $iVerMin_{regionId}$ and $iVerMax_{regionId}$ are calculated as follows:

$$iVerMin_{regionId} = iVerMin + (iVerMax - iVerMin)/hIndex;$$

$$iVerMax_{regionId} = iVerMax.$$

Exemplarily, in some embodiments, when regionId is equal to 5, for example R6 of FIG. 14, four boundaries after limiting the search region, that is, four boundaries of the first selected region may be set to $iVerMin_{regionId}$, $iVerMax_{regionId}$, $iHorMin_{regionId}$ and $iHorMax_{regionId}$ respectively, then $iVerMin_{regionId}$ and $iVerMax_{regionId}$ are calculated as follows:

$$iVerMin_{regionId} = iVerMax - (iVerMax - iVerMin)/hIndex;$$

$$iVerMax_{regionId} = iVerMax.$$

Exemplarily, in some embodiments, when regionId is equal to 5, for example R6 of FIG. 14, four boundaries after limiting the search region, that is, four boundaries of the first selected region may be set to $iVerMin_{regionId}$, $iVerMax_{regionId}$, $iHorMin_{regionId}$ and $iHorMax_{regionId}$ respectively, then $iVerMin_{regionId}$ and $iVerMax_{regionId}$ are calculated as follows: when hIndex is 2, $iVerMin_{regionId} = (iVerMax + iVerMin)/hIndex$;

$$iVerMax_{regionId} = iVerMax.$$

It may be understood that in the embodiments of the disclosure, for the search region such as R6 at the upper right side of the current block, when the region selection is performed on the fourth initial region, only a left half of the fourth initial region may be selected, then it is determined that wIndex is 2, $iHorMax_{regionId} = (iHorMax + iHorMin)/wIndex$, while $iHorMin_{regionId} = iHorMin$, $iVerMin_{regionId} = iVerMin$, $iVerMax_{regionId} = iVerMax$ are set.

It may be understood that in the embodiments of the disclosure, for the search region such as R6 at the upper right side of the current block, when the region selection is performed on the fourth initial region, only a lower half of the fourth initial region may be selected, then it is determined that hIndex is 2, $iVerMin_{regionId} = (iVerMax + iVerMin)/hIndex$, while $iHorMin_{regionId} = iHorMin$, $iHorMax_{regionId} = iHorMax$, $iVerMax_{regionId} = iVerMax$ are set.

It may be understood that in the embodiments of the disclosure, in a process of performing the region selection according to the scaling parameters, the involved division operation may be implemented by right shift. For example, when wIndex is set to 2, the same result may be achieved by using a >> 1 operation.

It may be seen that in the embodiments of the disclosure, for any sub-search region in the fully reconstructed search region and/or the undetermined reconstructed search region, after obtaining four boundaries iHorMin, iHorMax, iVerMin and iVerMax of the search region, when $wIndex \neq 1$ and/or $hindex \neq 1$ are met, the search region may be clipped according to the scaling parameters. For example, in FIG. 14, for the region Ri (i=2, 3, 4, 5), the search range takes a region at a right part or upper right part in the region Ri, and four solutions for limiting the search range are shown in FIG. 19 to FIG.

22. For the region R6, the search range takes a region at a left part or lower left part in the region R6, and four solutions for limiting the search range are shown in FIG. 23 to FIG. 26. For the region R1, the search range may take a middle position in the original search region, and four solutions for limiting the search range are shown in FIG. 15 to FIG. 18.

That is, in the embodiments of the disclosure, for search points in the search region, all search points in a specified search region may be traversed, or the search range may be limited to a local search range by different solutions, to balance computational complexity and encoding efficiency. For example, for the undetermined reconstructed search region (corresponding to two regions R5 and R6 in FIG. 14) or the fully reconstructed region (corresponding to four regions R1 to R4 in FIG. 14), the width of the search range may be limited to 1/wIndex times the original width, and the height of the search range may be limited to 1/hIndex times the original height, here each of wIndex and hIndex is arbitrary positive integer equal to or greater than 1.

It may be understood that in the embodiments of the disclosure, the limited search range, that is, the selected fully reconstructed search region and/or the selected undetermined reconstructed search region may take a region closer to a to-be-encoded unit (current block). For example, when the search range of the region R5 is reduced, the width of the search region R5 may be reduced to 1/2 times the original width, and the width may be reduced to 1/2 times the original width, then a final search range may select a 1/4 region at the upper right part in the region R5, as shown in FIG. 22.

In summary, in the embodiments of the disclosure, the region selection may be performed on different search regions in different manners. Specifically, the search regions may be divided into three types based on positions of the search regions relative to the reference block (for example, a left side of a current to-be-encoded block, an upper side of the current to-be-encoded block, or an upper right side of the current to-be-encoded block), and search region limitation for the Intra TMP is performed on the three types of search regions respectively.

It may be understood that in the embodiments of the disclosure, the region selection may be performed based on the fully reconstructed search region and/or the undetermined reconstructed search region after determining the fully reconstructed search region and/or the undetermined reconstructed search region according to the first template, to obtain the selected fully reconstructed search region and/or the selected undetermined reconstructed search region. Or, ranges of the fully reconstructed search region and/or the undetermined reconstructed search region may be directly set during determination of the fully reconstructed search region and/or the undetermined reconstructed search region. That is, the size of the search region including the fully reconstructed search region and/or the undetermined reconstructed search region may be directly limited to the size of the search region of the selected fully reconstructed search region and/or the selected undetermined reconstructed search region in the above solution.

Exemplarily, in some embodiments, when the search region is calculated, a weight value term or a clip operation may be added based on current formulas. For example, only a 1/2 region at the right part of the region R5 is selected.

When regionId is equal to 4, iVerMin, iVerMax, iHorMin and iHorMax may be calculated as follows:

iHorMin = max(iTemplateSizeW << iBvShift, (xTbCmp - offsetLCBX >> 1 - nTbW + 1) << iBvShift);

$$iHorMax = \min((xTbCmp - nTbW) \ll iBvShift, (picWidth - nTbW) \ll iBvShift);$$

$$iVerMin = (yTbCmp + 1) \ll iBvShift;$$

iVerMax = min((picHeight - nTbH) << iBvShift, (yTbCmp - offsetLCBY + CtbSizeH - nTbH) << iBvShift).

Exemplarily, in some embodiments, when the search region is calculated, a weight value term or a clip operation may be added based on current formulas. For example, only a 1/2 region at the upper part of the region R5 is selected.

When regionId is equal to 4, iVerMin, iVerMax, iHorMin and iHorMax may be calculated as follows:

iHorMin = max(iTemplateSizeW << iBvShift, (xTbCmp - offsetLCBX - nTbW + 1) << iBvShift);

$$iHorMax = \min((xTbCmp - nTbW) \ll iBvShift, (picWidth - nTbW) \ll iBvShift);$$

$$iVerMin = (yTbCmp + 1) \ll iBvShift;$$

iVerMax = min((picHeight - nTbH) << iBvShift, (yTbCmp - offsetLCBY + CtbSizeH >> 1 - nTbH) << iBvShift).

Exemplarily, in some embodiments, when the search region is calculated, a weight value term or a clip operation may be added based on current formulas. For example, only a 1/2 region at the left part of the region R6 is selected.

When regionId is equal to 5, iVerMin, iVerMax, iHorMin and iHorMax may be calculated as follows:

$$iHorMin = (xTbCmp + 1) \ll iBvShift;$$

iHorMax = min((xTbCmp - offsetLCBX + CtbSizeW - nTbW) << iBvShift, min((xTbCmp + searchRangeWidth >> 1) << iBvShift, ((picWidth - nTbW) << iBvShift)));

iVerMin = max(((iTemplateSizeH) << iBvShift), (yTbCmp - offsetLCBY - nTbH + 1) << iBvShift);

$$iVerMax = (yTbCmp - nTbH) \ll iBvShift.$$

Exemplarily, in some embodiments, when the search region is calculated, a weight value term or a clip operation may be added based on current formulas. For example, only a 1/2 region at the lower part of the region R6 is selected.

When regionId is equal to 5, iVerMin, iVerMax, iHorMin and iHorMax may be calculated as follows:

$$iHorMin = (xTbCmp + 1) \ll iBvShift;$$

iHorMax = min((xTbCmp - offsetLCBX + CtbSizeW - nTbW) << iBvShift, min((xTbCmp + searchRangeWidth) << iBv-Shift, ((picWidth - nTbW) << iBvShift)));

iVerMin = max(((iTemplateSizeH) << iBvShift), (yTbCmp - offsetLCBY >> 1 - nTbH + 1) << iBvShift);

$$iVerMax = (yTbCmp - nTbH) \ll iBvShift.$$

Exemplarily, in some embodiments, when the search region is calculated, a weight value term or a clip operation may be added based on current formulas. For example, only a 1/4 region at the upper right part of the region R5 is selected.

When regionId is equal to 4, iVerMin, iVerMax, iHorMin and iHorMax may be calculated as follows:

iHorMin = max(iTemplateSizeW << iBvShift, (xTbCmp - offsetLCBX >> 1 - nTbW + 1) << iBvShift);

$$iHorMax = min((xTbCmp - nTbW) \ll iBvShift, (picWidth - nTbW) \ll iBvShift);$$

$$iVerMin = (yTbCmp + 1) \ll iBvShift;$$

iVerMax = min((picHeight - nTbH) << iBvShift, (yTbCmp + (CtbSizeH - offsetLCBY) >> 1 - nTbH) << iBvShift).

Exemplarily, in some embodiments, when the search region is calculated, a weight value term or a clip operation may be added based on current formulas. For example, only a 1/4 region at the lower left part of the region R6 is selected.

When regionId is equal to 5, iVerMin, iVerMax, iHorMin and iHorMax may be calculated as follows:

$$iHorMin = (xTbCmp + 1) \ll iBvShift;$$

iHorMax = min((xTbCmp - offsetLCBX + CtbSizeW - nTbW) << iBvShift, min((xTbCmp + searchRangeWidth >> 1) << iBvShift, ((picWidth - nTbW) << iBvShift)));

iVerMin = max(((iTemplateSizeH) << iBvShift), (yTbCmp - offsetLCBY >> 1 - nTbH + 1) << iBvShift);

$$iVerMax = (yTbCmp - nTbH) << iBvShift.$$

Further, in the embodiments of the disclosure, when the region selection is performed based on the fully reconstructed search region and/or the undetermined reconstructed search region, to determine the selected fully reconstructed search region and/or the selected undetermined reconstructed search region, a region width threshold and a region height threshold may be determined first according to size parameters of the current block. Then, the region selection may be performed on the fully reconstructed search region and/or the undetermined reconstructed search region according to the region width threshold and/or the region height threshold, to determine the selected fully reconstructed search region and/or the selected undetermined reconstructed search region.

It should be noted that in the embodiments of the disclosure, the region width threshold and the region height threshold may limit the width and the height of the search region after the region selection respectively. The region width threshold may be derived by using the width nTbW of the current block, for example, the region width threshold is set to wIndex times the width nTbW of the current block. The region height threshold may be derived by using the height nTbH of the current block, for example, the region height threshold is set to hIndex times the height nTbH of the current block.

That is, in the embodiments of the disclosure, in a process of performing the region selection, limited sizes of the search region may also be derived by using the size of the current CB (size parameters of the current block). For example, when the width dw of the search region meets $dw > 2 \times nTbW$, the width of the search region is reduced to ensure that the width dw' of the search region after it is reduced does not exceed wIndex times the width nTbW of the current block; when the width dh of the search region meets $dh > 2 \times nTbH$, the height of the search region is reduced to ensure that the height dh' of the search region after it is reduced does not exceed hIndex times the height nTbH of the current block.

Exemplarily, in the embodiments of the disclosure, when regionId is equal to 0, $iVerMin_{regionId}$, $iVerMax_{regionId}$, $iHorMin_{regionId}$ and $iHorMax_{regionId}$ are calculated as follows:

$$iHorMin_{regionId} = (iHorMax + iHorMin)/2 - wIndex \times nTbW/2;$$

$$iHorMax_{regionId} = (iHorMax + iHorMin)/2 + wIndex \times nTbW/2;$$

$$iVerMin_{regionId} = (iVerMax + iVerMin)/2 - hIndex \times nTbH/2;$$

$$iVerMax_{regionId} = (iVerMax + iVerMin)/2 + hIndex \times nTbH/2.$$

Exemplarily, in the embodiments of the disclosure, when regionId is equal to 1, 2, 3 or 4, $iVerMin_{regionId}$, $iVerMax_{regionId}$, $iHorMin_{regionId}$ and $iHorMax_{regionId}$ are calculated as follows:

$$iHorMin_{regionId} = iHorMax - wIndex \times nTbW;$$

$$iHorMax_{regionId} = iHorMax;$$

$$iVerMax_{regionId} = iVerMax - hIndex \times nTbH;$$

$$iVerMin_{regionId} = iVerMin.$$

Exemplarily, in the embodiments of the disclosure, when regionId is equal to 5, $iVerMin_{regionId}$, $iVerMax_{regionId}$, $iHorMin_{regionId}$ and $iHorMax_{regionId}$ are calculated as follows:

$$iHorMax_{regionId} = iHorMin + wIndex \times nTbW;$$

$$iHorMin_{regionId} = iHorMin;$$

$$iVerMin_{regionId} = iVerMin + hIndex \times nTbH;$$

$$iVerMax_{regionId} = iVerMax.$$

Further, in the embodiments of the disclosure, a search region in the fully reconstructed search region where any pixel in a reference block corresponding to the search region overlaps with a current CTB corresponding to the current block, may be determined as a first overlapping region; while a search region in the undetermined reconstructed search region that overlaps with the current CTB corresponding to the current block, may be determined as a second overlapping region.

Correspondingly, in the embodiments of the disclosure, other regions in the fully reconstructed search region except the first overlapping region may also be determined as a first non-overlapping region; other regions in the undetermined reconstructed search region except the second overlapping region may also be determined as a second non-overlapping region.

Further, in the embodiments of the disclosure, when the region selection is performed based on the fully reconstructed search region and/or the undetermined reconstructed search region, to determine the selected fully reconstructed search region and/or the selected undetermined reconstructed search region, the region selection may be performed on the first overlapping region, to determine a fourth selected region. Then, the selected fully reconstructed search region may be determined according to the fourth selected region and a first non-overlapping region. Here, the first non-overlapping region consists of other regions in the fully reconstructed search region except the first overlapping region.

Further, in the embodiments of the disclosure, when the region selection is performed based on the fully reconstructed search region and/or the undetermined reconstructed search region, to determine the selected fully reconstructed search region and/or the selected undetermined reconstructed search region, the region selection may be performed on the first non-overlapping region, to determine a fifth selected region. Then, the selected fully reconstructed search region may be determined according to the fifth selected region and the first overlapping region.

Further, in the embodiments of the disclosure, when the region selection is performed based on the fully reconstructed search region and/or the undetermined reconstructed search region, to determine the selected fully reconstructed search region and/or the selected undetermined reconstructed search region, the region selection may be performed on the second overlapping region, to determine a sixth selected region. Then, the selected undetermined reconstructed search region may be determined according to the sixth selected region and a second non-overlapping region, here the second non-overlapping region consists of other regions in the undetermined reconstructed search region except the second overlapping region.

Further, in the embodiments of the disclosure, when the region selection is performed based on the fully reconstructed search region and/or the undetermined reconstructed search region, to determine the selected fully reconstructed search region and/or the selected undetermined reconstructed search region, the region selection may be performed on the second non-overlapping region, to determine a seventh selected region. Then, the selected undetermined reconstructed search region may be determined according to the seventh selected region and the second overlapping region.

Exemplarily, in the embodiments of the disclosure, only regions (such as the first overlapping region and/or the second overlapping region) that overlap with a current CTU may be limited, while the region reducing and limiting is not applied to other regions (such as the first non-overlapping region and/or the second non-overlapping region).

Exemplarily, in the embodiments of the disclosure, only regions (such as the first non-overlapping region and/or the second non-overlapping region) that do not overlap with the current CTU may be limited, while the region reducing and limiting is not applied to other regions (such as the first overlapping region and/or the second overlapping region).

Exemplarily, in the embodiments of the disclosure, it may also select to limit regions (such as the first non-overlapping region and/or the second non-overlapping region) that do not overlap with the current CTU and the undetermined reconstructed search region, while the region reducing and limitating is not applied to other regions (such as the first overlapping region).

Exemplarily, in some embodiments, if an encoded unit at a neighbouring position of the current to-be-encoded unit (the current block) is in the Intra TMP mode, its BV is recorded as $BV_{neighbor}$, an upper left corner of a reference block of a neighbouring block is found through the BV, the point at the upper left corner is used as a search starting point, the search is extended by nTbW in positive and negative directions of an X axis respectively and is extended by nTbH in positive and negative directions of an Y axis respectively, then a region that does not overlap with the fully reconstructed search region and the undetermined reconstructed search region is recorded as R7, and then search points in R7 are traversed, of which specific implementations are as follows.

Input: luma position (xCb, yCb), which specifies a position of an upper left sample in the current CB relative to an upper left luma sample in the current picture; a variable cbWidth, which specifies a width of the current CB in the luma samples; a variable cbHeight, which specifies a height of the current CB in the luma samples; a block vector bv; and a variable cIdx, which specifies an index of a color component of the current block.

Output: an array predSamples of prediction samples.

When cIdx is equal to 0, that is, in case of the luma component, for x = xCb..xCb + cbWidth - 1 and y = yCb..yCb + cbHeight - 1:

$$xVb = (x + (bvL[0] >> 4)) \& (IbcBufWidthY - 1);$$

$$yVb = (y + (bvL[1] >> 4)) \& (CtbSizeY - 1).$$

When cIdx is not equal to 0, that is, in case of the chroma component, for x = xCb/SubWidthC..xCb/SubWidthC + cbWidth/SubWidthC - 1 and y = yCb/SubHeightC..yCb/SubHeightC + cbHeight/SubHeightC - 1:

$$xVb = ( x + (bvC[0] >> 4)) \& (IbcBufWidthC - 1);$$

$$yVb = (y + (bvC[1] >> 4)) \& ((CtbSizeY/subHeightC) - 1).$$

Four boundaries of the region R7 are calculated as follows:

iHorMax = min(min((xTbCmp + searchRangeWidth) << iBvShift, ((picWidth - nTbW) << iBvShift)), xVb + nTbW);

iHorMin = max(max((iTemplateSizeW) << iBvShift, (xTbCmp - searchRangeWidth) << iBvShift), xVb - iHorMin);

iVerMin = max(max(((iTemplateSizeH) << iBvShift), ((yTbCmp - searchRangeHeight) << iBvShift)), iVerMin + nTbH);

iVerMax = min(min(picHeight - nTbH, (yTbCmp - offsetLCBY + CtbSizeH - nTbH) << iBvShift), iVerMax - nTbH).

After obtaining a range of the region R7, it is determined whether R7 overlaps with existing search regions. When at least one of the four boundaries of the region R7 falls into any search region in Ri (i=0, 1, 2, 3, 4, 5) (that is, when at least one of the following conditions is met), it is determined that the region R7 overlaps with the existing search regions. At this time, it needs to traverse a part of R7 that does not overlap with the existing search regions; otherwise, all search points in the search region R7 are traversed.

$$iHorMin[regionId] <= iHorMax <= iHorMax[regionId];$$

$$iHorMin[regionId] <= iHorMin <= iHorMax[regionId];$$

$$iVerMin[regionId] <= iVerMax <= iVerMax[regionId];$$

$$iVerMin[regionId] <= iVerMin <= iVerMax[regionId].$$

Further, in the embodiments of the disclosure, when a search range of a partial region is limited, searchRangeWidth and/or searchRangeHeight of the partial region take different values from those of other regions.

Exemplarily, in some embodiments, when a region corresponding to the undetermined reconstructed search region is limited, calculations may be performed as follows.

When regionId is equal to 4, iVerMin, iVerMax, iHorMin and iHorMax may be calculated as follows:

iHorMin = max(max(iTemplateSizeW << iBvShift, (xTbCmp - offsetLCBX - nTbW + 1) << iBvShift), (xTbCmp - searchRangeWidth × scaleFactorW)) << iBvShift);

$$iHorMax = min((xTbCmp - nTbW) << iBvShift, (picWidth - nTbW) << iBvShift);$$

$$iVerMin = (yTbCmp + 1) << iBvShift;$$

iVerMax = min(min((picHeight - nTbH) << iBvShift, (yTbCmp - offsetLCBY + CtbSizeH - nTbH) << iBvShift, (yTbCmp + searchRangeHeight $\times$ scaleFactorH) << iBvShift)).

It should be noted that in the embodiments of the disclosure, each of scaleFactorW and scaleFactorH may be 1/2 or other values.

It should be noted that in the embodiments of the disclosure, multiplication operations in the above calculation process may be replaced by division operations or shift operations.

It should be noted that in the embodiments of the disclosure, the << iBvShift operation in the above calculation process may also be an operation of comparison followed by shift.

It should be noted that in the embodiments of the disclosure, during determination of iHorMin, a term "xTbCmp - searchRangeWidth $\times$ scaleFactorW)) << iBvShift" is added, and a maximum value is taken from the term and previously existing terms. Such operation may be understood as an outer boundary moving closer to the current block.

It should be noted that in the embodiments of the disclosure, during determination of iVerMax, a term "yTbCmp + searchRangeHeight $\times$ scaleFactorH) << iBvShift" is added, and a minimum value is taken from the term and previously existing terms. Such operation may be understood as an outer boundary moving closer to the current block.

Exemplarily, in some embodiments, when a region corresponding to the undetermined reconstructed search region is limited, calculations may be performed as follows.

When regionId is equal to 5, iVerMin, iVerMax, iHorMin and iHorMax may be calculated as follows:

$$iHorMin = (xTbCmp + 1) << iBvShift;$$

iHorMax = min(min((xTbCmp - offsetLCBX + CtbSizeW - nTbW) << iBvShift, min((xTbCmp + searchRangeWidth) << iBvShift, ((picWidth - nTbW) << iBvShift))), (xTbCmp + searchRangeWidth $\times$ scaleFactorW) << iBvShift);

iVerMin = max(max(((iTemplateSizeH) << iBvShift), (yTbCmp - offsetLCBY - nTbH + 1) << iBvShift, ((yTbCmp - searchRangeHeight $\times$ scaleFactorH)) << iBvShift));

$$iVerMax = (yTbCmp - nTbH) << iBvShift.$$

It should be noted that in the embodiments of the disclosure, each of scaleFactorW and scaleFactorH may be 1/2 or other values.

It should be noted that in the embodiments of the disclosure, multiplication operations in the above calculation process may be replaced by division or shift operations.

It should be noted that in the embodiments of the disclosure, the << iBvShift operation in the above calculation process may also be an operation of comparison followed by shift.

It should be noted that in the embodiments of the disclosure, during determination of iHorMax, a term "xTbCmp + searchRangeWidth $\times$ scaleFactorW)) << iBvShift" is added, and a minimum value is taken from the term and previously existing terms. Such operation may be understood as an outer boundary moving closer to the current block.

It should be noted that in the embodiments of the disclosure, during determination of iVerMin, a term "yTbCmp - searchRangeHeight $\times$ scaleFactorH) << iBvShift" is added, and a maximum value is taken from the term and previously existing terms. Such operation may be understood as an outer boundary moving closer to the current block.

Further, in the embodiments of the disclosure, when the region selection is performed based on the fully reconstructed search region and/or the undetermined reconstructed search region, an offset operation such as a +1 operation may be appropriately added based on the determined iHorMin, iHorMax, iVerMin and iVerMax.

Further, in the embodiments of the disclosure, when the region selection is performed based on the fully reconstructed search region and/or the undetermined reconstructed search region, an operation of further limiting the selected fully reconstructed search region and/or the selected undetermined reconstructed search region may also be added. For example, minimum possible value ranges of the selected fully reconstructed search region and/or the selected undetermined reconstructed search region may be controlled by a min function, or maximum possible value ranges of the selected fully reconstructed search region and/or the selected undetermined reconstructed search region may be controlled by a max function.

In operation 104, search is performed in the selected fully reconstructed search region and/or the selected undetermined reconstructed search region respectively, to determine one or more BVs for the current block.

In the embodiments of the disclosure, after performing the region selection based on the fully reconstructed search region and/or the undetermined reconstructed search region, to determine the selected fully reconstructed search region and/or the selected undetermined reconstructed search region, search may be further performed in the selected fully reconstructed search region and/or the selected undetermined reconstructed search region respectively, to determine the one or more BVs for the current block.

Further, in the embodiments of the disclosure, when search is performed in the selected fully reconstructed search region and/or the selected undetermined reconstructed search region respectively, to determine the one or more BVs for the current block, on one hand, search points in the selected fully reconstructed search region may be traversed, and first matching cost values between matching templates corresponding to the search points in the selected fully reconstructed search region and the first template may be determined according to a preset matching criteria. On the other hand, search points in the selected undetermined reconstructed search region may be traversed, and second matching cost values between matching templates corresponding to search points in the selected undetermined reconstructed search region that meet a preset availability condition and the first template may be determined according to the preset matching criteria. Finally, the one or more BVs and one or more candidate templates corresponding to the one or more BVs may be determined according to the first matching cost values and the second matching cost values.

It should be noted that in the embodiments of the disclosure, since it may not determine whether samples in the selected undetermined reconstructed search region are reconstructed samples, it needs to determine first whether the samples in the selected undetermined reconstructed search region are available.

It may be understood that in the embodiments of the disclosure, it may determine first whether a current search point in the selected undetermined reconstructed search region meets the preset availability condition; and if the current search point meets the preset availability condition, the second matching cost value between a matching template corresponding to the current search point and the first template is determined according to the preset matching criteria.

Correspondingly, in the embodiments of the disclosure, after determining whether the current search point in the selected undetermined reconstructed search region meets the preset availability condition, if the current search point does not meet the preset availability condition, a process of determining the second matching cost values is not performed.

In some embodiments, the preset availability condition includes at least one or more of the following conditions: all samples in the matching template of the current search point do not exceed a coordinate range of a sample boundary corresponding to a current picture; all samples in a reconstructed block corresponding to the matching template of the current search point do not exceed the coordinate range of the sample boundary corresponding to the current picture; all the samples in the matching template of the current search point do not exceed a preset search window range; all the samples in the reconstructed block corresponding to the matching template of the current search point do not exceed the preset search window range; all the samples in the matching template of the current search point and the current CB are located in a same Tile; all the samples in the reconstructed block corresponding to the matching template of the current search point and the current CB are located in the same Tile; all the samples in the matching template of the current search point have been reconstructed; all the samples in the reconstructed block corresponding to the matching template of the current search point do not belong to the current CB; or all the samples in the reconstructed block corresponding to the matching template of the current search point have been reconstructed.

It should be noted that in the embodiments of the disclosure, the preset matching criteria includes any one of cost functions for measuring a mode, such as SAD, SATD, Sum of Squared Differences (SSE), MAD, Mean Absolute Error (MAE), MSE, NCC, etc.

Exemplarily, in the embodiments of the disclosure, when a BV is determined by search, bvYMins and bvYMaxs represent a minimum offset and a maximum offset of the BV in the vertical direction respectively.

bvXMinsregionId, bvXMaxsregionId, bvYMinsregionId and bvYMaxsregionId may be calculated by using the determined iVerMinregionId, iVerMaxregionId, iHorMinregionId and iHorMaxregionId:

$$bvXMinsregionId = iHorMinregionId - xTbCmp;$$

$$bvXMaxsregionId = iHorMaxregionId - xTbCmp;$$

$$bvYMinsregionId = iVerMinregionId - yTbCmp;$$

$$bvYMaxsregionId = iVerMaxregionId - yTbCmp.$$

bvXMinsregionId, bvXMaxsregionId, bvYMinsregionId and bvYMaxsregionId determine a range of horizontal and vertical offsets of the search point relative to the current block, that is, a range of the BV.

Exemplarily, in the embodiments of the disclosure, when search is performed in the selected fully reconstructed search region, by using each search point (iPosHor, iPoxVer) in the search region, that is, each BV (which is formed by a horizontal component and a vertical component: (pX, pY), here pX = iPosHor - xTbCmp, pY = iPosVer - yTbCmp, then pX is between bvXMins and bvXMaxs, and pY is between bvYMins and bvYMaxs), one or more matching reconstructed blocks of the current block may be found from the reconstructed region, and neighbouring reconstructed pixels of the one or more matching reconstructed blocks are matching templates. Therefore, first matching costs between a neighbouring template of the current block and neighbouring templates of the one or more reconstructed blocks may be calculated respectively, and are recorded as pDiff.

Exemplarily, in the embodiments of the disclosure, when search is performed in the selected undetermined reconstructed search region, by using each search point (iPosHor, iPoxVer) in the search region, that is, each BV (which is formed by a horizontal component and a vertical component: (pX, pY), here pX = iPosHor - xTbCmp, pY = iPosVer - yTbCmp, then pX is between bvXMins and bvXMaxs, and pY is between bvYMins and bvYMaxs), it is determined whether the search point is available. If the search point is available, one or more matching reconstructed blocks of the current block may be found from the reconstructed region, and neighbouring reconstructed pixels of the matching reconstructed blocks are matching templates. Therefore, second matching costs between a neighbouring template of the current block and neighbouring templates of the reconstructed blocks may be calculated respectively, and are also recorded as pDiff. If the search point is unavailable, calculation of template matching costs is not performed.

Exemplarily, in the embodiments of the disclosure, determination of availability includes, but is not limited to meeting one or more of the following conditions: each sample in the template does not exceed a valid coordinate range limited by the sample boundary of the picture; each sample in the reconstructed block corresponding to the template does not exceed the valid coordinate range limited by the sample boundary of the picture; each sample in the template and each sample in the corresponding reconstructed block do not exceed a specified search window range; whether each sample in the template and a current encoding region are located in the same Tile; whether each sample in the reconstructed block corresponding to the template and the current encoding region are located in the same Tile; each sample in the template has been reconstructed; each sample in the reconstructed block corresponding to the template is not located in the current encoding region; and each sample in the reconstructed block corresponding to the template has been reconstructed.

In some embodiments, the preset availability condition may further include at least one or more of the following conditions: all first identified samples in the matching template of the current search point do not exceed a coordinate range of a sample boundary corresponding to a current picture; all second identified samples in a reconstructed block corresponding to the matching template of the current search point do not exceed the coordinate range of the sample boundary corresponding to the current picture; all the first identified samples in the matching template of the current search point do not exceed a preset search window range; all the second identified samples in the reconstructed block corresponding to the matching template of the current search point do not exceed the preset search window range; all the first identified samples in the matching template of the current search point and the current CB are located in a same Tile; all the second identified samples in the reconstructed block corresponding to the matching template of the current search point and the current CB are located in the same Tile; all the first identified samples in the matching template of the current search point have been reconstructed; all the second identified samples in the reconstructed block corresponding to the matching template of the current search point do not belong to the current CB; or all the second identified samples in the reconstructed block corresponding to the matching template of the current search point have been reconstructed.

It should be noted that in the embodiments of the disclosure, the first identified samples are one or more samples in the matching template of the current search point; the second identified samples are one or more samples in the reconstructed block corresponding to the matching template of the current search point.

That is, when availability of the search point in the selected undetermined reconstructed search region is determined, all samples in the matching template corresponding to the search point are not traversed any more to determine availability, instead, whether the search point is available is determined by using identified samples in the matching template; correspondingly, all samples in the reconstructed block corresponding to the matching template of the search point are not traversed any more to determine availability, instead, whether the search point is available may be determined by using identified samples in the reconstructed block.

It may be understood that in the embodiments of the disclosure, the first identified samples may be any one or more samples in the matching template. For example, the first identified samples may be one or more samples located at corner positions of the matching template. For example, when there is only an upper template, the first identified samples may be samples at an upper left corner and a lower right corner of the upper template, or only samples at the lower right corner of the upper template.

It may be understood that in the embodiments of the disclosure, the second identified samples may be any one or more samples in the reconstructed block corresponding to the matching template of the current search point. For example, the second identified samples may be one or more samples located at corner positions of the reconstructed block, such as samples at an upper left corner and a lower right corner of the reconstructed block, or only samples at the lower right corner of the reconstructed block.

Further, in the embodiments of the disclosure, when availability of the search point in the selected undetermined reconstructed search region is determined, the first identified samples are traversed in a descending order of priorities based on the above preset availability condition. If a current first identified sample does not meet the preset availability condition, the traversal is stopped, and it is determined that the current search point does not meet the preset availability condition. If the current first identified sample meets the preset availability condition, it continues to traverse a next first identified sample. If all the first identified samples meet the preset availability condition, it is determined that the current search point meets the preset availability condition.

Further, in the embodiments of the disclosure, when availability of the search point in the selected undetermined reconstructed search region is determined, the second identified samples are traversed in a descending order of priorities based on the above preset availability condition. If a current second identified sample does not meet the preset availability condition, the traversal is stopped, and it is determined that the current search point does not meet the preset availability condition. If the current second identified sample meets the preset availability condition, it continues to traverse a next second identified sample. If all the second identified samples meet the preset availability condition, it is determined that the current search point meets the preset availability condition.

That is, in the embodiments of the disclosure, multiple identified samples may be used sequentially. For example, whether the sample at the upper left corner is available is determined first, and if this sample is unavailable, it returns "unavailable"; if this sample is available, whether the sample at the lower right corner is available is determined, and if this sample is unavailable, it returns "unavailable"; if this sample is available, it returns "available". The priority of the sample at the upper left corner is higher than that of the sample at the lower right corner.

It should be noted that in the embodiments of the disclosure, the BVs determined by search process may be one or more BVs. For example, N BVs for the current block may be determined, here N is an integer greater than 0.

Correspondingly, in the embodiments of the disclosure, when search is performed in the selected fully reconstructed search region and/or the selected undetermined reconstructed search region respectively to determine the one or more BVs, a preset number N corresponding to the candidate templates may be determined first. Then, search points in the selected fully reconstructed search region may be traversed, and first matching cost values between matching templates corresponding to the search points in the selected fully reconstructed search region and the first template may be determined according to a preset matching criteria, while search points in the selected undetermined reconstructed search region may be traversed, and second matching cost values between matching templates corresponding to search points in the selected undetermined reconstructed search region that meet a preset availability condition and the first template may be determined according to the preset matching criteria. Finally, N BVs and N candidate templates corresponding to the N BVs may be determined according to the first matching cost values and the second matching cost values.

That is, in the embodiments of the disclosure, when search is performed in the selected fully reconstructed search region and/or the selected undetermined reconstructed search region respectively, to determine N BVs corresponding to N matching templates, that is, a process of searching in the search region (the selected fully reconstructed search region and/or the selected undetermined reconstructed search region) to determine the BVs corresponding to the N matching templates may include that: value of the number N of candidate templates is determined, a matching template comparison criterion is determined, and the N BVs corresponding to the N matching templates (the selected N candidate templates) are recorded.

It may be understood that in the embodiments of the disclosure, when the preset number N corresponding to the candidate templates is determined, N may be determined by decoding a bitstream; or N may be determined according to a first preset value; or N may be determined according to a preset value range.

That is, in the embodiments of the disclosure, it needs to determine the value of N first, here N may be a preset constant, for example, N is 4; or, N may be in a certain value range, for example, the value of N may be any integer in [2, 8]. A range of the value of N is preset, a best value of N may be determined at an encoding side in a manner of coarse selection with a cost 1, or coarse selection with a cost 2, or coarse selection with a cost 3, or fine selection with a cost 4, or in other manners, and the best value of N may be transmitted to the decoding side in a form of a bitstream. Each of costs 1, 2, 3 and 4 may be one of cost functions for measuring a mode, such as SAD, SATD, MSE, MAD, Rate Distortion Optimization (RDO), etc. Manners of determining N are not specifically limited in the disclosure.

Further, in the embodiments of the disclosure, when N BVs and N candidate templates corresponding to the N BVs are determined according to the first matching cost values and the second matching cost values, that is, when one or more BVs and one or more candidate templates corresponding to the one or more BVs are determined, N minimum matching cost values may be determined first from the first matching cost values and the second matching cost values. Then, the N BVs and the N candidate templates corresponding to the N BVs may be determined based on N search points corresponding to the N minimum matching cost values.

N minimum matching cost values are determined from the matching cost values between matching templates corresponding to the search points in the selected fully reconstructed search region and the first template, and then N BVs and N candidate templates corresponding to the N minimum matching cost values are determined.

In some embodiments, all available search points in all search ranges (for example, regionId = 0, 1, 2, 3, 4, 5) are traversed, and N search points for which matching costs pDiff (including the first matching cost values and the second matching cost values) are minimum are obtained by comparison. Matching costs corresponding to the N search points are recorded as pDiff_BEST[n], n = 0, ..., N-1. BVs corresponding to the N search points are recorded as best BVs, BV_BEST[n], each of which is a coordinate pair (pX_BEST, pY_BEST), n = 0, ..., N-1. Matching templates corresponding to the N search points are best matching templates, T_BEST[n], n = 0, ..., N-1. N may be an integer value equal to or greater than 1 as required.

It should be noted that in the embodiments of the disclosure, when search is performed, search strategies that may be used may include, but are not limited to search manners based on different search step sizes, such as a coarse search based on a first search step size and/or a fine search based on a second search step size, here the first search step size is greater than the second search step size.

In some embodiments, each of the first search step size and the second search step size may be any value greater than 0, and may be an integer value or may not be an integer value, as long as it is ensured that the first search step size is greater than the second search step size. For example, the first search step size may be 3, and the second search step size may be 1/2.

Further, in the embodiments of the disclosure, search may be performed in the selected fully reconstructed search region and/or the selected undetermined reconstructed search region respectively according to a first search step size, to determine the first matching cost values corresponding to the search points in the selected fully reconstructed search region and the second matching cost values corresponding to the search points in the selected undetermined reconstructed search region that meet the preset availability condition, and the N BVs and the N candidate templates corresponding to the N BVs may be determined based on the first cost values and the second cost values.

Exemplarily, in the embodiments of the disclosure, the coarse search may specifically include that: best coarse matching templates are determined from the search region with a first preset step size (that is, the first search step size, such as 2), that is, final candidate templates are obtained, or the best coarse matching templates are determined from the search region by using a downsampling template (such as a downsampling factor of 2), that is, the final candidate templates are obtained.

Exemplarily, in the embodiments of the disclosure, if the search strategy is that only the coarse search is performed, then the coarse search may be performed with a large step size (the first search step size) (for example, with a step size of 2 or 3) in a search range where pX is between bvXMinsregionId and bvXMaxsregionId and pY is between bvYMinsregionId and bvYMaxsregionId within each region, first N best matching costs obtained by template matching are recorded as pDiff_BEST[n], n = 0, ..., N-1, and BVs corresponding to the N best matching costs are recorded as best BVs, BV_BEST[n], each of which is a coordinate pair (pX_BEST, pY_BEST), n = 0, ..., N-1. N may be an integer value equal to or greater than 1 as required.

Further, in the embodiments of the disclosure, search may be performed in the selected fully reconstructed search region and/or the selected undetermined reconstructed search region respectively according to a second search step size, to determine the first matching cost values corresponding to the search points in the selected fully reconstructed search region and the second matching cost values corresponding to the search points in the selected undetermined reconstructed search region that meet the preset availability condition, and the N BVs and the N candidate templates corresponding to the N BVs may be determined based on the first cost values and the second cost values, here the first search step size is greater than the second search step size.

Exemplarily, in the embodiments of the disclosure, the fine search may specifically include that: best fine matching templates are determined from the search region with a second preset step size (that is, the second search step size, such as 1), that is, final candidate templates are obtained, or the best fine matching templates are determined near the best coarse matching template after completing the coarse search, that is, the final candidate templates are obtained.

Exemplarily, in the embodiments of the disclosure, if the search strategy is that only the fine search is performed, the fine search may be performed with a small step size (the second search step size) (such as a step size of 1 or 1/2, when the step size is less than 1, sub-pixel interpolation is required) within a search range where pX is between bvXMinsregionId and bvXMaxsregionId and pY is between bvYMinsregionId and bvYMaxsregionId in each region, first N best matching costs obtained by template matching are recorded as pDiff_BEST[n], n = 0, ..., N-1, and BVs corresponding to the N best matching costs are recorded as best BVs, BV_BEST[n], each of which is a coordinate pair (pX_BEST, pY_BEST), n = 0, ..., N-1. N may be an integer value equal to or greater than 1 as required.

Further, in the embodiments of the disclosure, search may be performed first in the selected fully reconstructed search region and/or the selected undetermined reconstructed search region respectively according to a first search step size, to determine the first matching cost values corresponding to the search points in the selected fully reconstructed search region and the second matching cost values corresponding to the search points in the selected undetermined reconstructed search region that meet the preset availability condition, and the M reference BVs and M matching reconstructed blocks corresponding to the M reference BVs may be determined based on the first cost values and the second cost values. Here, M is an integer greater than 0. Then, a first search region may be determined according to the M matching reconstructed blocks, here the first search region is smaller than a total region consisting of the selected fully reconstructed search region and/or the selected undetermined reconstructed search region. Then, search may be performed in the first search region according to a second search step size, to determine third matching cost values between matching templates corresponding to search points in the first search region that meet the preset availability condition and the first template. Here the first search step size is greater than the second search step size. Finally, the N BVs and the N candidate templates corresponding to the N BVs may be determined according to the first matching cost values, the second matching cost values and/or the third matching cost values.

It may be understood that in the embodiments of the disclosure, when the N BVs and the N candidate templates corresponding to the N BVs are determined according to the first matching cost values, the second matching cost values and/or the third matching cost values, N minimum matching cost values may be determined first from the third matching cost values. Then, the N BVs and the N candidate templates corresponding to the N BVs may be determined based on N search points corresponding to the N minimum matching cost values.

It may be understood that in the embodiments of the disclosure, when the N BVs and the N candidate templates corresponding to the N BVs are determined according to the first matching cost values, the second matching cost values and/or the third matching cost values, T BVs and T candidate templates corresponding to the T BVs may also be determined first according to the third matching cost values, here T is an integer greater than 0 and less than N; and (N-T) BVs other than the M reference BVs and (N-T) candidate templates corresponding to the (N-T) BVs may be determined according to the first cost values and the second cost values.

It should be noted that in the embodiments of the disclosure, after performing the coarse search, P initial BVs may also be determined based on the first cost values and the second cost values, here P is an integer equal to or greater than M. Then, the M reference BVs may be determined according to the P initial BVs.

Exemplarily, in the embodiments of the disclosure, if the search strategy is that the coarse search is performed first and then the fine search is performed, the coarse search may be performed first with a step size of 2 (that is, the first search step size is 2), to record best coarse matching templates (initial matching templates) obtained by template matching, and then best fine matching templates may be determined near the best coarse matching templates with a step size of 1 (that is, the second search step size is 1), that is, final candidate templates are obtained.

In a coarse search stage, the coarse search may be performed with a large step size (for example, with a step size of 2 or 3) within a search range where pX is between bvXMinsregionId and bvXMaxsregionId and pY is between bvYMinsregionId and bvYMaxsregionId in each region. For example, the coarse search is performed with a step size of 2, to record first P best matching costs obtained by template matching as pDiff1_BEST[p], p = 0, ..., P-1. BVs corresponding to the P best matching costs are recorded as best BVs, BV1_BEST[p], p = 0, ..., P-1. P may be an integer value equal to 1 or greater than 1 as required. Search regions where best matching search points are located are bestRegionId[p], p = 0, ..., P-1. According to algorithm requirements, one or more (here recorded as M, 1 <= M <= P) fine search reference points will be given in the coarse search stage and sent to a next step. For example, M = 1 is set.

Next, in a fine search stage, the best BVs, BV1_BEST[p], p = 0, ..., M-1 obtained by the coarse search may be used as fine search reference points, to perform search near them. Specifically, for each fine search reference point, refined search ranges TmpRefineRangeHor and TmpRefineRangeVer are determined first. The refined search range may have a fixed size or may be related to the size of the CB. For example, each of the above TmpRefineRangeHor and TmpRefineRangeVer may be set to min(nTbW, nTbH)/2. Then, calculation may be performed on positions of best matching reconstructed blocks obtained by the coarse search to obtain reference positions in a fine search region: BestPosX = xTbCmp + pX1_BEST, BestPosY = yTbCmp + pY1_BEST.

In an embodiment, the search window may be used directly, and the fine search region may be treated as a whole selected undetermined reconstructed search region, to directly traverse it.

A new search range is acquired according to the position of the best matching block obtained by the coarse search, that is:

$$iHorMaxrefine = min(picWidth - nTbW, BestPosX + TmpRefineRangeHor);$$

$$iHorMinrefine = max(iTemplateSizeW, BestPosX - TmpRefineRangeHor);$$

$$iVerMaxrefine = min(picHeight - nTbH, BestPosY + TmpRefineRangeVer);$$

$$iVerMinrefine = max(iTemplateSizeH, BestPosY - TmpRefineRangeVer).$$

Then, the adjusted BVs bvXMins, bvXMaxs, bvYMins and bvYMaxs may be calculated by using iVerMinrefine, iVerMaxrefine, iHorMinrefine and iHorMaxrefine:

$$bvXMins = iHorMinrefine - xTbCmp;$$

$$bvXMaxs = iHorMaxrefine - xTbCmp;$$

$$bvYMins = iVerMinrefine - yTbCmp;$$

$$bvYMaxs = iVerMaxrefine - yTbCmp.$$

The fine search is performed within a BV range where pX is between bvXMinsrefine and bvXMaxsrefine and pY is between bvYMinsrefine and bvYMaxsrefine, that is, all search positions in a fine search window are traversed directly, and availability thereof is determined sequentially. For example, the search is performed with a step size of 1, first T best matching costs obtained by template matching for available points are recorded as pDiff_BEST[t], t = 0, ..., T-1, and BVs corresponding to the T best matching costs are recorded as best BVs, BV_BEST[t], t = 0, ..., T-1. T is equal to or greater than 1. For example, T = 1 is set.

After completing the above operations, one or more best BVs BV_BEST[n], n = 0, ..., N-1, for different algorithm requirements may be obtained according to results of coarse and fine selection processes (here the fine selection process includes searching with one or more reference points). Here each of the one or more best BVs is a coordinate pair (pX_BEST, pY_BEST). pX_BEST and pY_BEST are offsets of the best matching template relative to the template of the current CB in the horizontal direction and in the vertical direction respectively, and are also offsets of the best matching reconstructed block relative to the current CB in the horizontal direction and in the vertical direction respectively.

It should be noted that in the embodiments of the disclosure, there may be different BV selection solutions according to results of coarse and fine selection processes. For example, first N results are selected after all BVs are sorted in terms of template costs. For another example, T results of the fine search (obtained by performing fine search based on first M results of the coarse search) derived from M results of the coarse search are selected, followed by (N-T) results starting from the (M+1)-th result of the coarse search. During implementation, for example, M = 1, T = 1, N = 5; or M = 1, T = 1, N = 3.

It may be seen that in the embodiments of the disclosure, a process corresponding to searching in the search region to determine one or more BVs may include three search strategies as follows: only the coarse search is performed, only the fine search is performed, and the coarse search is performed first and then the fine search is performed.

Further, in the embodiments of the disclosure, after determining the one or more BVs corresponding to the current block, one or more reference blocks for the current block may be further determined according to the one or more BVs. Then, prediction values of the current block may be determined according to the one or more reference blocks.

Further, in the embodiments of the disclosure, when the one or more reference blocks corresponding to the current block are determined according to the one or more BVs, one or more initially reconstructed blocks corresponding to the current block may be determined first according to the one or more BVs. Then, the one or more initially reconstructed blocks may be corrected, to determine the one or more reference blocks.

That is, in the embodiments of the disclosure, other manners may be used when N candidate reconstructed blocks (reference blocks) are acquired, for example, initially reconstructed blocks corresponding to the obtained candidate templates are corrected first, to determine corresponding reference blocks.

Correspondingly, after acquiring N candidate reconstructed blocks (reference blocks) by copying matching reconstructed blocks (initially reconstructed blocks) corresponding to N BVs, the N candidate reconstructed blocks may be weighted directly to obtain the prediction values of the current block; or, candidate reconstructed blocks (reference blocks) may be obtained after correcting the matching reconstructed blocks (initially reconstructed blocks) corresponding to N BVs, and then the candidate reconstructed blocks (reference blocks) may be weighted to obtain the prediction values of the current block.

Further, in the embodiments of the disclosure, when the one or more initially reconstructed blocks are corrected to determine the one or more reference blocks, the one or more initially reconstructed blocks may be filtered to determine the one or more reference blocks.

Further, in the embodiments of the disclosure, when the one or more initially reconstructed blocks are corrected to determine the one or more reference blocks, one or more correction parameter vectors may be determined first according to one or more candidate templates corresponding to the one or more BVs. Then, the one or more initially reconstructed blocks may be corrected according to the one or more correction parameter vectors, to determine the one or more reference blocks.

Further, in the embodiments of the disclosure, when the one or more correction parameter vectors are determined according to the one or more candidate templates corresponding to the one or more BVs, autocorrelation matrices corresponding to the candidate templates may be determined first according to pixel values in the candidate templates. Then, cross-correlation vectors may be determined according to pixel values in the first template and pixel values in the candidate templates. Then, the correction parameter vectors may be determined according to the autocorrelation matrices and the cross-correlation vectors.

It may be understood that in the embodiments of the disclosure, the solution for correcting the initially reconstructed blocks may include that the initially reconstructed blocks are filtered directly, here a filtering solution used when they are filtered may be a traditional filtering method, such as bilateral filtering, mean filtering or the like, or may be a filtering enhancement based on a neural network.

It may be understood that in the embodiments of the disclosure, the solution for correcting the initially reconstructed blocks may further include that the matching reconstructed blocks (initially reconstructed blocks) are corrected by using matching template information (candidate templates).

Further, in the embodiments of the disclosure, prediction values of the current block may be determined according to one or more BVs. Specifically, a best BV for the current block may be determined first according to the one or more BVs for the current block. Then, at least one reference block corresponding to the current block may be determined according to the best BV. Finally, prediction values of the current block may be determined according to the at least one reference block.

It should be noted that in the embodiments of the disclosure, when the prediction values of the current block are determined according to the at least one reference block, at least one prediction block may be determined based on the at least one reference block first. Then, weighted fusion may be performed on the at least one prediction block, to determine the prediction values of the current block.

Exemplarily, in some embodiments, after determining the best BV for the current block, multiple points may be taken around the best BV, that is, multiple reference blocks may be acquired, and then weighted fusion may be performed on prediction values corresponding to the multiple points, to obtain the prediction values of the current block.

Further, in the embodiments of the disclosure, prediction values of the current block may be determined according to one or more BVs. Specifically, a first prediction value of the current block may be determined according to the one or more BVs for the current block. Then, a second prediction value of the current block may be determined according to a preset prediction mode, here the preset prediction mode includes a planar mode and/or a directional mode. Finally, prediction values of the current block may be determined according to the first prediction value and the second prediction value.

Exemplarily, in some embodiments, after determining the one or more BVs for the current block, prediction values acquired by using the one or more BVs and prediction values obtained in other Intra modes may be weighted and combined to obtain final prediction values. The other Intra modes may be other prediction modes other than the Intra TMP, such as a planar mode, or a directional mode, etc. The directional mode may be derived from TIMD, or may be obtained by locating in an Intra candidate table by using an Index signalled in a bitstream. This method may be referred to as an Intra TMP CIIP mode.

It may be understood that in the Intra TMP mode, besides acquiring the prediction values by using the basic copying method, a method for acquiring the prediction values by performing filtering fusion using positions corresponding to multiple BVs, as well as a method for prediction by fusing with a normal Intra mode may be used.

Further, in the embodiments of the disclosure, after determining the prediction values of the current block according to the BVs for the current block, reconstructed values of the current block may be further determined according to the prediction values of the current block.

It should be noted that in the embodiments of the disclosure, a bitstream may be decoded first, to determine prediction residuals corresponding to the current block. Then, reconstructed values of the current block may be further determined according to the prediction residuals and the prediction values of the current block.

In summary, according to the decoding method proposed in the above operations 101 to 104, the size of the search region may be reduced while reconstructed samples spatially neighbouring to the current encoding region are utilized effectively, thereby improving prediction accuracy while ensuring encoding complexity.

That is, the embodiments of the disclosure propose a method for limiting the search region for the Intra TMP region-wise, in which search regions at different positions are limited in respective targeted manners, and reconstructed samples relatively neighbouring to the current to-be-encoded unit are retained, such that the prediction accuracy is improved to a certain extent and the encoding complexity is also ensured.

It should be noted that the decoding method proposed in the embodiments of the disclosure is a method for reducing the search region of the Intra TMP region-wise. Specifically, search regions at different positions are limited in respective targeted manners, such that algorithm effectiveness is ensured while complexity is balanced, thereby improving encoding efficiency effectively.

Input for acquiring the Intra TMP-BV: the position (xTbCmp, yTbCmp) of the current CB (the current block), the width nTbW of the current CB, and the height nTbH of the current CB. Output for acquiring the Intra TMP-BV: one or more BVs for the current block and prediction values predSamples[x][y] of prediction blocks corresponding to the BVs, here x = 0..nTbW - 1, y = 0..nTbH-1. The prediction values of the prediction blocks may be used as final prediction values, or may be further processed to obtain final prediction values of the current block.

It may be understood that a specific process of acquiring the Intra TMP-BV proposed in the embodiments of the disclosure is divided into three steps as follows: determining the current template type, acquiring reconstructed pixels of the current template, and determining BVs within a predefined search range. A set of prediction values of the current block corresponding to each acquired BV may be obtained.

In the embodiments of the disclosure, the search range may include the selected fully reconstructed search region and/or the selected undetermined reconstructed search region obtained after performing the region selection based on the fully reconstructed search region and/or the undetermined reconstructed search region, here the fully reconstructed search region includes reconstructed samples, and the undetermined reconstructed search region includes reconstructed samples and/or unreconstructed samples.

The embodiments of the disclosure provides a decoding method, in which the decoder determines a first template corresponding to a current block; determines a fully reconstructed search region and/or an undetermined reconstructed search region according to the first template, here the fully reconstructed search region includes reconstructed samples, and the undetermined reconstructed search region includes reconstructed samples and/or unreconstructed samples; performs a region selection based on the fully reconstructed search region and/or the undetermined reconstructed search region, to determine a selected fully reconstructed search region and/or a selected undetermined reconstructed search region, here the selected fully reconstructed search region is smaller than or equal to the fully reconstructed search region, and the selected undetermined reconstructed search region is smaller than or equal to the undetermined reconstructed search region; and searches in the selected fully reconstructed search region and/or the selected undetermined reconstructed search region respectively, to determine one or more BVs for the current block. It may be seen that in the embodiments of the disclosure, after the fully reconstructed search region and/or the undetermined reconstructed search region including reconstructed samples and/or unreconstructed samples are determined according to the first template, the region selection may be performed on the fully reconstructed search region and/or the undetermined reconstructed search region, to obtain the selected fully reconstructed search region and/or the selected undetermined reconstructed search region with a relatively small range, and search in the selected fully reconstructed search region and/or the selected undetermined reconstructed search region. In other words, according to the encoding method and the decoding method proposed in the embodiments of the disclosure, available samples in the undetermined reconstructed search region may be utilized, while the search range may be limited to a certain extent, then encoding and decoding complexities may be reduced based on full acquisition of more effective reference information, therefore the efficiency and performance of encoding and decoding may be improved.

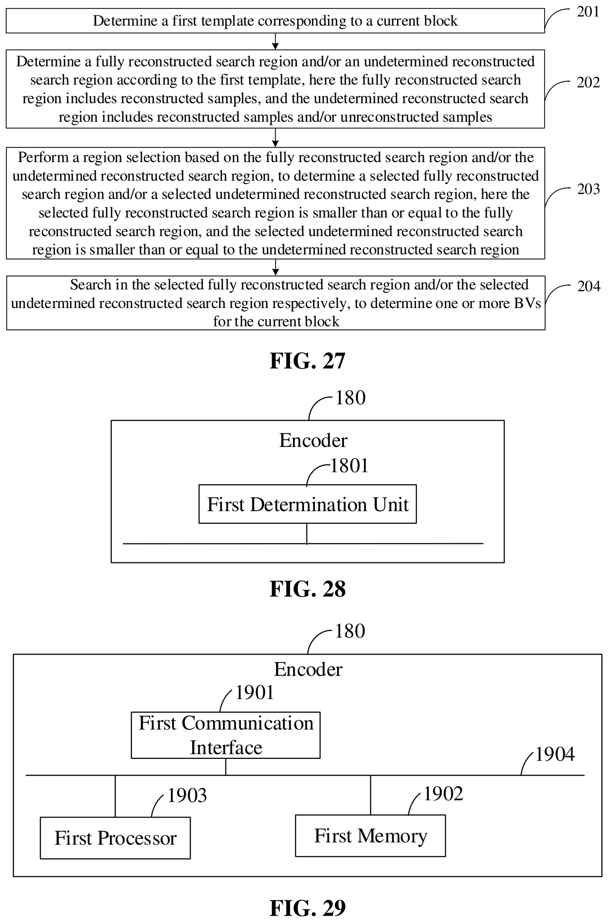

An embodiment of the disclosure proposes an encoding method. The encoding method is applied to an encoder. FIG. 27 is a schematic flowchart of an encoding method proposed in an embodiment of the disclosure. As shown in FIG. 27, the method for the encoder to perform an encoding process may include the following operations 201 to 204.

In operation 201, a first template corresponding to a current block is determined.

In the embodiments of the disclosure, the first template corresponding to the current block may be determined first. When the first template is acquired, a template type corresponding to the current block may be determined first, and then the first template corresponding to the current block may be further determined according to the template type.

It should be noted that the encoding method according to the embodiment of the disclosure is applied to the encoder. Furthermore, the encoding method may include an intra prediction method, more specifically, a method for predicting color components. A video picture may be divided into multiple encoding blocks, each encoding block may include a first color component, a second color component and a third color component. The current block in the embodiment of the disclosure refers to an encoding block, for which the intra prediction is to be performed currently in the video picture.

Here, when the first color component needs to be predicted, a to-be-predicted component is the first color component; when the second color component needs to be predicted, the to-be-predicted component is the second color component; when the third color component needs to be predicted, the to-be-predicted component is the third color component. Furthermore, assuming that the first color component is predicted for the current block, and the first color component is a luma component, that is, the to-be-predicted component is the luma component, then the current block may also be referred to as a luma block; or, assuming that the second color component is predicted for the current block, and the second color component is a chroma component, that is, the to-be-predicted component is the chroma component, then the current block may also be referred to as a chroma block.

It should also be noted that in the embodiment of the disclosure, reference pixels (reference samples) of the current block may refer to reference pixels neighbouring to the current block. "Neighbouring" here may be spatially neighbouring, but is not limited thereto. For example, "neighbouring" may also be temporally neighbouring or spatially and

EP 4 697 707 A1

temporally neighbouring, or even the reference pixels of the current block may be reference pixels obtained by performing some processing on spatially neighbouring reference pixels, temporally neighbouring reference pixels, spatially and temporally neighbouring reference pixels, or the like, and the embodiments of the disclosure does not make any limitation thereto.

Further, in the embodiments of the disclosure, the template type of the current block may be determined according to indication information in a bitstream; or, the template type of the current block may be determined according to a size of the current block.

Further, in the embodiments of the disclosure, the template type of the current block may also be determined according to reference pixels of the current block. The reference pixels of the current block include at least one of a left neighbouring reference pixels of the current block, an upper neighbouring reference pixels of the current block, an upper left neighbouring reference pixels of the current block, a lower left neighbouring reference pixels of the current block, or an upper right neighbouring reference pixels of the current block.

It may be understood that in the embodiments of the disclosure, the reference pixels of the current block may include neighbouring reconstructed pixels of the current block, that is, the neighbouring reconstructed pixels of the current block may be used as templates to search matching templates in a predefined search region.

It should be noted that in the embodiments of the disclosure, the reference pixels of the current block, that is, the neighbouring reconstructed pixels of the current block may include upper reference pixels, upper left reference pixels, upper right reference pixels, left reference pixels and lower left reference pixels of the current block.

It may be understood that in the embodiments of the disclosure, when the template type of the current block is determined by using the reference pixels of the current block, the template types may be classified and determined according to availability of neighbouring reference pixels.

It may be understood that in the embodiments of the disclosure, when the template type of the current block is determined, the template types may also be classified and determined according to an indication in the bitstream.

Further, in the embodiments of the disclosure, when the template type of the current block is determined according to the reference pixels of the current block, if all the left neighbouring reference pixels, the upper neighbouring reference pixels and the upper left neighbouring reference pixels of the current block are available, it is determined that the template type of the current block is a first value; if the left neighbouring reference pixels of the current block is available, it is determined that the template type of the current block is a second value; if the upper neighbouring reference pixels of the current block is available, it is determined that the template type of the current block is a third value; if both the left neighbouring reference pixels and the upper left neighbouring reference pixels of the current block are available, it is determined that the template type of the current block is a fourth value; if both the left neighbouring reference pixels and the lower left neighbouring reference pixels of the current block are available, it is determined that the template type of the current block is a fifth value; and if both the upper neighbouring reference pixels and the upper right neighbouring reference pixels of the current block are available, it is determined that the template type of the current block is a sixth value.

It should be noted that in the embodiments of the disclosure, each of the first value, the second value, the third value, the fourth value, the fifth value and the sixth value may be any value, which is not specifically limited in the disclosure. For example, the first value, the second value, the third value, the fourth value, the fifth value and the sixth value may take 1, 2, 3, 4, 5 and 6 sequentially.

Exemplarily, in the embodiments of the disclosure, the template type may be represented by refTemplateType. Correspondingly, as shown in the above FIG. 3, a block filled with grids is the current block, a neighbouring region of the current block is a template T, and six template types are shown here.

Exemplarily, the six template types are shown as follows: when all the upper left reference pixels, the upper reference pixels and the left reference pixels are available, refTemplateType has a value of 1, and the template shape is shown in (a) of FIG. 3; when only the left reference pixels are available, refTemplateType has a value of 2, and the template shape is shown in (b) of FIG. 3; when only the upper reference pixels are available, refTemplateType has a value of 3, and the template shape is shown in (c) of FIG. 3; when only the left reference pixels and the upper left reference pixels are available, refTemplateType has a value of 4, and the template shape is shown in (d) of FIG. 3; when only the left reference pixels and the lower left reference pixels are available, refTemplateType has a value of 5, and the template shape is shown in (e) of FIG. 3; and when only the upper reference pixels and the upper right reference pixels are available, refTemplateType has a value of 6, and the template shape is shown in (f) in FIG. 3.

In some embodiments, a template type for the Intra TMP may also be selected in combination with availability information of the above reference pixels and according to the indication in the bitstream. For example, a serial number of each template type is agreed on, and serial number information of an actually used template is transmitted in the bitstream, such that determination of the template type may be achieved at the decoding side.

That is, in the embodiments of the disclosure, the template type may be determined according to the availability information of the reference pixels of the current block, or the template type may be determined according to the information indicated in the bitstream, or the template type may be determined according to both the availability information of the reference pixels and the information indicated in the bitstream, which is not specifically limited in the disclosure.

Further, in the embodiments of the disclosure, when the first template corresponding to the current block is determined according to the template type, template reference pixels of the current block may be determined first according to the template type and a template size corresponding to the template type, and then the first template of the current block may be determined according to the template reference pixels.

It should be noted that in the embodiments of the disclosure, the first template of the current block may include the template reference pixels of the current block. The template reference pixels of the current block may be determined by the template type of the current block and the template size corresponding to the template type.

It should be noted that in the embodiments of the disclosure, the first template of the current block may consist of reconstructed pixels in one or more of an upper region, an upper right region, a left region, a lower left region and an upper left region of the current block, that is, the first template of the current block may consist of the reference pixels of the current block.

It should be noted that in the embodiments of the disclosure, the template size corresponding to the template type may be preset, or may be indicated by using a syntax element of the bitstream, or may be adaptively selected according to a block size or other information. For example, when a left template is acquired, a template width templateW_size may be set to 4, and when an upper template is acquired, a template height templateH_size may be set to 4.

Correspondingly, in the embodiments of the disclosure, it may determine to acquire which part of reconstructed pixels as the template reference pixels of the current block, by combining the value of the template type refTemplateType of the current block with the template size corresponding to refTemplateType, and then the corresponding first template may be determined.

Exemplarily, in the embodiment of the disclosure, when refTemplateType has a value of 1, it may select to acquire reconstructed pixels at the left side, the upper left side and the upper side of the current block; when refTemplateType has a value of 2, only reconstructed pixels on left four columns of the current block are acquired; when refTemplateType has a value of 3, only reconstructed pixels on upper four rows of the current CB are acquired.

Or, a preset value of the template size may be any integer greater than 0 and is not limited to 4, which is not specifically limited in the disclosure.

It may be understood that in the embodiments of the disclosure, the template reference pixels of the current block may be determined from the reference pixels of the current block according to the template type of the current block and the corresponding template size and may be used as the first template corresponding to the current block.

In operation 202, a fully reconstructed search region and/or an undetermined reconstructed search region are determined according to the first template, here the fully reconstructed search region includes reconstructed samples, and the undetermined reconstructed search region includes reconstructed samples and/or unreconstructed samples.

In the embodiments of the disclosure, after determining the first template corresponding to the current block, a fully reconstructed search region and/or an undetermined reconstructed search region may be further determined according to the first template, here the fully reconstructed search region includes reconstructed samples, and the undetermined reconstructed search region includes reconstructed samples and/or unreconstructed samples.

It may be understood that in the embodiments of the disclosure, during prediction precess of the Intra TMP, a search region selected based on the first template may include an undetermined reconstructed search region and/or a fully reconstructed search region. The fully reconstructed search region may include only reconstructed samples, that is, all samples in the fully reconstructed search region are reconstructed samples. For the undetermined reconstructed search region, it maynot determine whether samples in the undetermined reconstructed search region have been reconstructed, that is, the undetermined reconstructed search region may include only reconstructed samples, or may include only unreconstructed samples, or may include both the reconstructed samples and the unreconstructed samples.

Correspondingly, during traversal of the undetermined reconstructed search region, availability of each search position is reqired to be determined addtionally, such that full utilization of information of all neighbouring reconstructed samples may be achieved.

It should be noted that in the embodiments of the disclosure, the fully reconstructed search region and/or the undetermined reconstructed search region may be determined based on the first template, with a zero-value BV as a center, and according to a size of a search window and position information of a current picture.

That is, in the embodiments of the disclosure, the search region is near the zero-value BV, or it may be said that the search region is constrained by information such as the size of the search window, edges of the picture or the like, with the zero-value BV as a center.

Further, in the embodiments of the disclosure, the fully reconstructed search region is a search region including a set of positions corresponding to pixels at an upper left corner of a corresponding reference block at each search position, and the undetermined reconstructed search region is a search coverage region including a set of pixels of the corresponding reference block at each search position.

That is, in the embodiments of the disclosure, the search region refers to a set of positions corresponding to upper left pixels of a corresponding reference block at each search position; this region may not include unreconstructed samples. For the undetermined reconstructed search region, it is because lower right pixels in the reference block corresponding to each search position in this region, that are in an upper right or lower left region of the current CB, may be unreconstructed.

Correspondingly, in the embodiments of the disclosure, the search region may be a set of upper left pixels of a search point, and the search coverage region includes a set of pixels of reference blocks corresponding to all search points.

It should be noted that in the embodiments of the disclosure, a search process of the BV may include several parts as follows: an initialization process, a process of determining a search region of the first template in a current frame, and a process of searching and determining one or more best BVs in the search region. Therefore, when the search process is performed, initialization operations need to be completed first.

Exemplarily, as shown in the above FIG. 5, nTbW and nTbH represent sizes of the current block, templateW_size and templateH_size represent template sizes, and uiPatchWidth and uiPatchHeight represent a size of a block including the current block and its template.

Correspondingly, during initialization, uiPatchWidth may be initialized to nTbW + templateW_size, and uiPatch-Height may be initialized to nTbH + templateH_size. Here templateW_size and templateH_size may be fixed constants, or may be indicated by using syntax elements of the bitstream, or may be dynamically adjusted according to the size of the CB or other information; templateW_size may be equal or unequal to templateH_size. For example, templateW_size = 4, templateH_size = 4; or, when the width of the CB is greater than 8, templateW_size = 4 is set; when the width of the CB is less than or equal to 8, templateW_size = 2 is set; when the height of the CB is greater than 8, templateH_size = 4 is set; when the height of the CB is less than or equal to 8, templateH_size = 2 is set.

Further, a cost threshold between templates that is represented by diffThreshold, is initialized. For example, when the cost function is SAD, the threshold may be as follows: diffThreshold = ((1 << bitDepth) >> 2) $\times$ (uiPatchHeight $\times$ uiPatchWidth - nTbH $\times$ nTbW). When a bit depth bitDepth of the picture is 10, diffThreshold represents that a distortion threshold of each pixel in the region of the template is 256.

Further, a position ctbRsX, ctbRsY of a CTB where the current block CB is located, is initialized.

Further, position offsets of the current block CB in the current CTB are initialized to offsetLCBY = yTbCmp - ctbRsY, offsetLCBX = xTbCmp - ctbRsX.

Further, iTemplateSizeH = templateH_size, iTemplateSizeW = templateW_size are initialized.

Further, iBvShift is initialized, here iBvShift is a precision of the BV. For example, the precision of the BV may be an integer-pixel precision, and iBvShift is 0 at this time; or, the precision of the BV may be a sub-pixel precision, for example, when iBvShift is 1, it represents a 1/2 pixel precision, and when iBvShift is 2, it represents a 1/4 pixel precision, which is not specifically limited here.

Further, a preset search range for the template is initialized, and the preset search range for the template may be set to a fixed size, or the search range may be dynamically adjusted according to the size of the CB. For example, searchRangeWidth = TMP_SEARCH_RANGE_MULT_FACTOR $\times$ nTbW, searchRangeHeight = TMP_SEARCH_RAN-GE_MULT_FACTOR $\times$ nTbH; here value of TMP_SEARCH_RANGE_MULT_FACTOR may be a preset value, or may be indicated by using a syntax element in the bitstream, or may be adaptively adjusted according to the size of the CB or other information, for example, it is set to 5.

Further, in the embodiments of the disclosure, when one or more BVs corresponding to the current block are determined according to the first template, the fully reconstructed search region may be determined first according to the first template, and then search may be performed in the fully reconstructed search region, to determine one or more BVs.

It should be noted that in the embodiments of the disclosure, the search region is a reconstructed part in the current picture and is limited by the size of the search range. As shown in the above FIG. 6, a background region filled with dark color is a reconstructed region, a background block filled with black is the current block, and a dotted box is a window of the search range. Therefore, in the Intra TMP technology, the search region is not larger than an overlapping part between the reconstructed region represented by dark background and a region marked by the dotted box.

It may be seen that the search region for the template of the current block may be a reconstructed part in the CTB where the current block is located, or may be other reconstructed regions in the CTB. The search region here is actually a set of all search points. The shape of the region may not be often represented by a single rectangular region, therefore during specific implementation, search may also be performed in multiple rectangular regions, and then a final best matching block and a best BV may be obtained according to search results from different regions.

Exemplarily, in some embodiments, the reconstructed region within the dotted box of FIG. 6 is processed region-wise, and upper, lower, left and right boundaries of each region are determined. Then, search is performed in multiple rectangular regions, and then a final best matching module and a best BV may be obtained according to search results from different regions.

Exemplarily, with reference to FIG. 13, four different sub-region division manners are shown here. As shown in FIG. 13, a background block filled with black is the current block; all the four division manners (a), (b), (c) and (d) divide the search region into four sub-search regions, here each of different filling patterns represents a respective one of sub-search regions. All available search ranges are considered in each of (a), (b), (c) and (d).

Exemplarily, assuming that different search regions are distinguished and represented by regionId, considering that pixels of the template of the current CB need to be obtained from a reconstructed region of the picture and pixels of the reconstructed block corresponding to the template also need to be obtained from the reconstructed region, then it needs to further determine positions that may be searched in search regions represented by different regionId, according to the position (xTbCmp, yTbCmp) of the current CB, the size (nTbW, nTbH) of the current CB, the size (picWidth, picHeight) of the current picture, the size (CtbSizeW, CtbSizeH) of the CTB where the current CB is located, the preset search range (searchRangeWidth, searchRangeHeight) for the template and the position offset (offsetLCBY, offsetLCBX) of the current CB in the current CTB, thereby determining the BV. Specifically, iVerMin and iVerMax represent an minimum absolute coordinate position that may be searched in a vertical direction and an minimum absolute coordinate position that may be searched in the vertical direction respectively, and iHorMin and iHorMax represent an minimum absolute coordinate position that may be searched in a horizontal direction and an maximum absolute coordinate position that may be searched in the horizontal direction respectively. Values of iVerMin, iVerMax, iHorMin and iHorMax are different in search regions represented by different regionId.

Further, in the embodiments of the disclosure, the search region may be divided according to the shape of the reconstructed region and determinacy of availability of the reconstructed pixels, which may balance computational complexity and encoding efficiency. For example, a CTB region encoded before the CTB where the current block is located and regions located at upper left of, directly left of and directly above the current CB in the CTB where the current CB is located, all belong to regions that have definitely been reconstructed, therefore such region where it may be determined that all samples contained in the region have been reconstructed may be determined as the fully reconstructed search region. Correspondingly, in the CTB where the current CB is located, regions located at lower left and upper right of the current CB belong to regions that may or may not have been reconstructed therefore such region where it maynot determine that all samples contained in the region have been reconstructed, is determined as the undetermined reconstructed search region.

In some embodiments, based on considerations of the fully reconstructed search region and the undetermined reconstructed search region, taking (a) in FIG. 13 as an example, the search region is divided into six sub-search regions, of which implementations are as follows:

When regionId is equal to 0, iVerMin, iVerMax, iHorMin and iHorMax may be calculated as follows:

$iHorMax_0 = min((xTbCmp + searchRangeWidth) << iBvShift, ((picWidth - nTbW) << iBvShift));$

$iHorMin_0 = max((iTemplateSizeW) << iBvShift, (xTbCmp - searchRangeWidth) << iBvShift);$

$$iVerMax_0 = (yTbCmp - nTbH - offsetLCBY) << iBvShift;$$

$iVerMin_0 = max(((iTemplateSizeH) << iBvShift), ((yTbCmp - searchRangeHeight) << iBvShift)).$

When regionId is equal to 1, iVerMin, iVerMax, iHorMin and iHorMax may be calculated as follows:

$iHorMin_1 = max((iTemplateSizeW) << iBvShift, (xTbCmp - searchRangeWidth) << iBvShift);$

$$iHorMax_1 = (xTbCmp - offsetLCBX - nTbW) << iBvShift;$$

$$iVerMin_1 = (yTbCmp + 1) << iBvShift;$$

$iVerMax_1 = min((picHeight - nTbH) << iBvShift, (yTbCmp - offsetLCBY + CtbSizeH - nTbH) << iBvShift).$

When regionId is equal to 2, iVerMin, iVerMax, iHorMin and iHorMax may be calculated as follows:

$$iHorMax_2 = (xTbCmp - offsetLCBX - nTbW) << iBvShift;$$

$iHorMin_2 = max((iTemplateSizeW) << iBvShift, (xTbCmp - searchRangeWidth) << iBvShift);$

$iVerMin_2 = max((iTemplateSizeH) \ll iBvShift, (yTbCmp - nTbH - offsetLCBY) \ll iBvShift);$

$$iVerMax_2 = (yTbCmp) \ll iBvShift.$$

When regionId is equal to 3, iVerMin, iVerMax, iHorMin and iHorMax may be calculated as follows:

$iHorMin_3 = max((iTemplateSizeW) \ll iBvShift, (xTbCmp - offsetLCBX - nTbW + 1) \ll iBvShift);$

$$iHorMax_3 = (xTbCmp - nTbW) \ll iBvShift;$$

$iVerMin_3 = max(((iTemplateSizeH) \ll iBvShift), (yTbCmp - offsetLCBY - nTbH + 1) \ll iBvShift);$

$$iVerMax_3 = (yTbCmp - nTbH) \ll iBvShift.$$

When regionId is equal to 4, iVerMin, iVerMax, iHorMin and iHorMax may be calculated as follows:

$$iHorMin = (xTbCmp - offsetLCBX - nTbW) \ll iBvShift;$$

$$iHorMax = (xTbCmp - nTbW) \ll iBvShift;$$

$$iVerMin = (yTbCmp + 1) \ll iBvShift;$$

$iVerMax = min((picHeight - nTbH) \ll iBvShift, (yTbCmp - offsetLCBY + CtbSizeH - nTbH) \ll iBvShift).$

When regionId is equal to 5, iVerMin, iVerMax, iHorMin and iHorMax may be calculated as follows:

$$iHorMin = (xTbCmp) \ll iBvShift;$$

$iHorMax = min((xTbCmp + CtbSizeW - nTbW) \ll iBvShift, min((xTbCmp + searchRangeWidth) \ll iBvShift, ((picWidth - nTbW) \ll iBvShift)));$

$iVerMin = max(((iTemplateSizeH) \ll iBvShift), (yTbCmp - offsetLCBY - nTbH + 1) \ll iBvShift);$

$$iVerMax = (yTbCmp - nTbH) \ll iBvShift.$$

In an actual application, $iHorMin_{regionId}$, $iHorMax_{regionId}$, $iVerMin_{regionId}$ and $iVerMax_{regionId}$ here represent a left edge, a right edge, an upper edge and a lower edge of each of different sub-search regions respectively.

In order to intuitively describe different sub-search regions corresponding to different regionId, FIG. 14 shows a second schematic diagram of a process of determining a search region. As shown in FIG. 14, R1, R2, R3, R4, R5 and R6 represent six different sub-search regions, here R1, R2, R3 and R4 are the fully reconstructed search regions, and R5 and R6 are the undetermined reconstructed search regions. It should be noted that FIG. 14 is represented by a pixel range which may be aligned with an upper left pixel of the block.

That is, in some embodiments, the search region may be divided into two types, one type of search region is a region (referred to as a fully reconstructed search region) where it is sure that all samples in the region have been reconstructed, for example, this type of search region includes four regions R1, R2, R3 and R4 in FIG. 14; another type of search region is a region (referred to as an undetermined reconstructed search region) where it is not sure whether all samples in the region have been reconstructed, for example, this type of search region includes two regions R5 and R6 in FIG. 14.

Further, in the embodiments of the disclosure, in order to achieve a smaller number of search regions to reduce an amount of codes, part of the fully reconstructed search region may be selectively merged with part of the undetermined reconstructed search region, to form a new undetermined reconstructed search region, thereby reducing the number of search regions.

In some embodiments, the fully reconstructed search region and/or the undetermined reconstructed search region may be merged and updated to determine an updated fully reconstructed search region and an updated undetermined reconstructed search region. Here a first total region number of the updated fully reconstructed search region and the updated undetermined reconstructed search region is less than a second total region number of the fully reconstructed search region and/or the undetermined reconstructed search region.

That is, in the embodiments of the disclosure, an initially specified undetermined reconstructed search region is relatively large, and a total region number thereof is relatively small.

Exemplarily, in the embodiments of the disclosure, for the four fully reconstructed search regions R1, R2, R3 and R4 and the two undetermined reconstructed search regions R5 and R6 in above FIG. 13, R2 may be merged with R5, to form a new undetermined reconstructed search region. The updated fully reconstructed search region includes R1, R3 and R4, and the updated undetermined reconstructed search region includes R6 and the new undetermined reconstructed search region consisting of R2 and R5.

Exemplarily, in the embodiments of the disclosure, for the four fully reconstructed search regions R1, R2, R3 and R4 and the two undetermined reconstructed search regions R5 and R6 in above FIG. 13, R4 may be merged with R6, to form a new undetermined reconstructed search region. The updated fully reconstructed search region includes R1, R2 and R3, and the updated undetermined reconstructed search region includes R5 and the new undetermined reconstructed search region consisting of R4 and R6.

In operation 203, a region selection is performed based on the fully reconstructed search region and/or the undetermined reconstructed search region, to determine a selected fully reconstructed search region and/or a selected undetermined reconstructed search region, here the selected fully reconstructed search region is smaller than or equal to the fully reconstructed search region, and the selected undetermined reconstructed search region is smaller than or equal to the undetermined reconstructed search region.

In the embodiments of the disclosure, after determining the search region according to the first template, that is, determining the fully reconstructed search region and/or the undetermined reconstructed search region, the region selection may be further performed based on the fully reconstructed search region and/or the undetermined reconstructed search region, such that the corresponding selected fully reconstructed search region and/or selected undetermined reconstructed search region may be determined.

It should be noted that in the embodiments of the disclosure, the operation of performing the region selection based on the fully reconstructed search region and/or the undetermined reconstructed search region may be understood as reducing and limiting the fully reconstructed search region and/or the undetermined reconstructed search region, such that the range of the search region where search is performed finally may be reduced, thereby reducing encoding and decoding complexities.

Correspondingly, in the embodiments of the disclosure, after performing the region selection based on the fully reconstructed search region and/or the undetermined reconstructed search region, the determined selected fully reconstructed search region is smaller than or equal to the fully reconstructed search region, and the determined selected undetermined reconstructed search region is smaller than or equal to the undetermined reconstructed search region.

Further, in the embodiments of the disclosure, when the region selection is performed based on the fully reconstructed search region and/or the undetermined reconstructed search region, the fully reconstructed search region may be determined as the selected fully reconstructed search region, while the region selection is performed on the undetermined reconstructed search region, to determine the selected undetermined reconstructed search region.

That is, in the embodiments of the disclosure, only the undetermined reconstructed search region may be reduced and limited, to obtain the corresponding selected undetermined reconstructed search region. The selected undetermined reconstructed search region and the fully reconstructed search region form the search region where search is performed finally.

Further, in the embodiments of the disclosure, when the region selection is performed based on the fully reconstructed search region and/or the undetermined reconstructed search region, the region selection is performed on the fully reconstructed search region, to determine the selected fully reconstructed search region, while the undetermined reconstructed search region may be determined as the selected undetermined reconstructed search region.

That is, in the embodiments of the disclosure, only the fully reconstructed search region may be reduced and limited, to obtain the corresponding selected fully reconstructed search region, and the selected fully reconstructed search region and the undetermined reconstructed search region form the search region where search is performed finally.

Further, in the embodiments of the disclosure, when the region selection is performed based on the fully reconstructed search region and/or the undetermined reconstructed search region, the region selection may be performed on the fully reconstructed search region, to determine the selected fully reconstructed search region, while the region selection may be performed on the undetermined reconstructed search region, to determine the selected undetermined reconstructed search region.

That is, in the embodiments of the disclosure, both the fully reconstructed search region and the undetermined reconstructed search region may be reduced and limited, to obtain the corresponding selected fully reconstructed search region and selected undetermined reconstructed search region. The selected fully reconstructed search region and the selected undetermined reconstructed search region form the search region where search is performed finally.

Further, in the embodiments of the disclosure, when the region selection is performed based on the fully reconstructed search region and/or the undetermined reconstructed search region, the fully reconstructed search region may be determined as the selected fully reconstructed search region, while the undetermined reconstructed search region may be determined as the selected undetermined reconstructed search region.

That is, in the embodiments of the disclosure, the fully reconstructed search region and the undetermined reconstructed search region may not be reduced and limited, instead, the fully reconstructed search region and the undetermined reconstructed search region directly form the search region where search is performed finally.

Further, in the embodiments of the disclosure, when the region selection is performed based on the fully reconstructed search region and/or the undetermined reconstructed search region, to determine the selected fully reconstructed search region and/or the selected undetermined reconstructed search region, scaling parameters may be determined first. Then, the region selection is performed on the fully reconstructed search region and/or the undetermined reconstructed search region according to the scaling parameters, to finally determine the selected fully reconstructed search region and/or the selected undetermined reconstructed search region.

It should be noted that in the embodiments of the disclosure, the scaling parameters may include a height scaling parameter hIndex and a width scaling parameter wIndex. Each of the height scaling parameter hIndex and the width scaling parameter wIndex is equal to or greater than 1.

Exemplarily, in some embodiments, for search points in the search region, all search points in a specified search region may be traversed, or the search range may be limited to a local search range in different manners, to balance computational complexity and encoding efficiency. For example, the width of the search range may be limited to 1/wIndex times the original width, and the height of the search range may be limited to l/hIndex times the original height, here each of wIndex and hIndex is arbitrary value equal to or greater than 1.

It should be noted that in the embodiments of the disclosure, the scaling parameters may be determined, and the scaling parameters may be signalled into a bitstream. The scaling parameters are signalled through any one of sps layer syntax information, pps layer syntax information, aps layer syntax information, sh layer syntax information, or cu layer syntax information.

It should be noted that in the embodiments of the disclosure, the scaling parameters may also be determined according to preset values, for example, each of wIndex and hIndex is 2.

That is, in the embodiments of the disclosure, the scaling parameters for limiting the size of the search region may be signalled through an sps layer syntax, or a pps layer syntax, or an aps layer syntax, or an sh layer syntax, or a cu layer syntax, etc.

It should be noted that in the embodiments of the disclosure, the region selection may be performed for different search regions in different manners, that is, different search regions may correspond to different reducing strategies.

Further, in the embodiments of the disclosure, a search region in the fully reconstructed search region that is located at an upper side of the current block, may be determined as a first initial region; a search region in the fully reconstructed search region that is located at a left side or an upper left side of the current block, may be determined as a second initial region; a search region in the undetermined reconstructed search region that is located at a lower left side of the current block, may be determined as a third initial region; and a search region in the undetermined reconstructed search region that is located at an upper right side of the current block, may be determined as a fourth initial region.

Exemplarily, in some embodiments, as shown in FIG. 14, R1, R2, R3, R4, R5 and R6 represent six different sub-search regions, here each of R1, R2, R3 and R4 is the fully reconstructed search region, and each of R5 and R6 is the undetermined reconstructed search region. According to a positional relationship between each sub-search region and the current block, the search region R1 in the fully reconstructed search region that is located at the upper side of the current block, may be determined as the first initial region; search regions R2, R3 and R4 in the fully reconstructed search region that is located at the left side or the upper left side of the current block, may be determined as the second initial region; the search region R5 in the undetermined reconstructed search region that is located at the lower left side of the current block, may be determined as the third initial region; and the search region R6 in the undetermined reconstructed search region that is located at the upper right side of the current block, may be determined as the fourth initial region.

Further, in the embodiments of the disclosure, when the region selection is performed on the fully reconstructed search region and/or the undetermined reconstructed search region according to the scaling parameters, to determine the selected fully reconstructed search region and/or the selected undetermined reconstructed search region, a first selected region may be determined from the first initial region according to the scaling parameters and position information of the first initial region. Here, the first selected region is any region in the first initial region. Then, the selected fully reconstructed search region may be determined according to the first selected region.

It may be understood that in the embodiments of the disclosure, for the search region such as R1 at the upper side of the current block, after obtaining four boundaries iHorMin, iHorMax, iVerMin and iVerMax of the search region (the first initial region), the search region may be clipped, limited and reduced by using the scaling parameters wIndex and hIndex, to obtain the first selected region.

It should be noted that in the embodiments of the disclosure, for the search region such as R1 at the upper side of the current block, the first selected region after scaling may be any region in the first initial region. That is, the first selected region may be sub-regions from the first initial region at different locations such as an upper sub-region, a lower sub-region, a left sub-region, a right sub-region, a middle sub-region or the like, which is not specifically limited in the disclosure.

Exemplarily, in some embodiments, FIG. 15 is a first schematic diagram of region selection. As shown in FIG. 15, for the search region such as R1 at the upper side of the current block, if value of each of the scaling parameters wIndex and hIndex is 1, the first selected region obtained after performing the region selection on the first initial region by using the scaling parameters wIndex and hIndex is the corresponding first initial region.

Exemplarily, in some embodiments, FIG. 16 is a second schematic diagram of region selection. As shown in FIG. 16, for the search region such as R1 at the upper side of the current block, if the value of the scaling parameter wIndex is 2 and the value of the scaling parameter hIndex is 1, the first selected region obtained after performing the region selection on the first initial region by using the scaling parameters wIndex and hIndex is a middle region of the corresponding first initial region.

Exemplarily, in some embodiments, FIG. 17 is a third schematic diagram of region selection. As shown in FIG. 17, for the search region such as R1 at the upper side of the current block, if the value of the scaling parameter wIndex is 1 and the value of the scaling parameter hIndex is 2, the first selected region obtained after performing the region selection on the first initial region by using the scaling parameters wIndex and hIndex is a middle region of the corresponding first initial region.

Exemplarily, in some embodiments, FIG. 18 is a fourth schematic diagram of region selection. As shown in FIG. 18, for the search region such as R1 at the upper side of the current block, if the value of the scaling parameter wIndex is 2 and the value of the scaling parameter hIndex is 2, the first selected region obtained after performing the region selection on the first initial region by using the scaling parameters wIndex and hIndex is a middle region of the corresponding first initial region.

Exemplarily, in some embodiments, when regionId is equal to 0, for example R1 of FIG. 14, four boundaries after limiting the search region, that is, four boundaries of the first selected region may be set to $iVerMin_{regionId}$, $iVerMax_{regionId}$, $iHorMin_{regionId}$ and $iHorMax_{regionId}$ respectively, then $iVerMin_{regionId}$, $iVerMax_{regionId}$, $iHorMin_{regionId}$ and $iHorMax_{regionId}$ are calculated as follows:

$$iHorMin_{regionId} = iHorMin + (iHorMax - iHorMin)/(2 \times wIndex);$$

$$iHorMax_{regionId} = iHorMax - (iHorMax - iHorMin)/(2 \times wIndex);$$

$$iVerMin_{regionId} = iVerMin + (iVerMax - iVerMin)/(2 \times hIndex);$$

$$iVerMax_{regionId} = iVerMax - (iVerMax - iVerMin)/(2 \times hIndex).$$

It may be understood that in the embodiments of the disclosure, in a process of performing the region selection according to the scaling parameters, the involved division operation may be implemented by right shift. For example, when wIndex is set to 2, the same result may be achieved by using a >> 1 operation.

Further, in the embodiments of the disclosure, when the region selection is performed on the fully reconstructed search region and/or the undetermined reconstructed search region according to the scaling parameters, to determine the selected fully reconstructed search region and/or the selected undetermined reconstructed search region, a second selected region may be determined from the second initial region according to the scaling parameters and position information of the second initial region. Here, the second selected region is any region in the second initial region. Then, the selected fully reconstructed search region may be determined according to the second selected region.

Further, in the embodiments of the disclosure, when the region selection is performed on the fully reconstructed search region and/or the undetermined reconstructed search region according to the scaling parameters, to determine the selected fully reconstructed search region and/or the selected undetermined reconstructed search region, a third selected region may be determined from the third initial region according to the scaling parameters and position information of the third initial region. Here the third selected region is any region in the third initial region. Then, the selected fully reconstructed search region may be determined according to the third selected region.

It may be understood that in the embodiments of the disclosure, for the search region such as R2, R3, R4 and R5 at the left side, upper left side or lower left side of the current block, after obtaining four boundaries iHorMin, iHorMax, iVerMin and iVerMax of the search region (the second initial region or the third initial region), the search region may be clipped, limited and reduced by using the scaling parameters wIndex and hIndex, to obtain the second (or third) selected region.

It should be noted that in the embodiments of the disclosure, for the search region such as R2, R3, R4 and R5 at the left side, upper left side or lower left side of the current block, the second (or third) selected region after scaling may be any region in the second (or third) initial region. That is, the second (or third) selected region may be a sub-region at a different location from the second (or third) initial region such as an upper sub-region, a lower sub-region, a left sub-region, a right sub-region, a middle sub-region or the like, which is not specifically limited in the disclosure.

Exemplarily, in some embodiments, FIG. 19 is a fifth schematic diagram of region selection. As shown in FIG. 19, for the search region such as R2, R3, R4 and R5 at the left side, upper left side or lower left side of the current block, if value of each of the scaling parameters wIndex and hIndex is 1, the first selected region obtained after performing the region selection on the first initial region by using the scaling parameters wIndex and hIndex is the corresponding first initial region.

Exemplarily, in some embodiments, FIG. 20 is a sixth schematic diagram of region selection. As shown in FIG. 20, for the search region such as R2, R3, R4 and R5 at the left side, upper left side or lower left side of the current block, if the value of the scaling parameter wIndex is 2 and the value of the scaling parameter hIndex is 1, the first selected region obtained after performing the region selection on the first initial region by using the scaling parameters wIndex and hIndex is a right region of the corresponding first initial region.

Exemplarily, in some embodiments, FIG. 21 is a seventh schematic diagram of region selection. As shown in FIG. 21, for the search region such as R2, R3, R4 and R5 at the left side, upper left side or lower left side of the current block, if the value of the scaling parameter wIndex is 1 and the value of the scaling parameter hIndex is 2, the first selected region obtained after performing the region selection on the first initial region by using the scaling parameters wIndex and hIndex is an upper region of the corresponding first initial region.

Exemplarily, in some embodiments, FIG. 22 is an eighth schematic diagram of region selection. As shown in FIG. 22, for the search region such as R2, R3, R4 and R5 at the left side, upper left side or lower left side of the current block, if the value of the scaling parameter wIndex is 2 and the value of the scaling parameter hIndex is 2, the first selected region obtained after performing the region selection on the first initial region by using the scaling parameters wIndex and hIndex is an upper right region of the corresponding first initial region.

Exemplarily, in some embodiments, when regionId is equal to 1, 2 or 3, for example R2, R3 or R4 of FIG. 14, four boundaries after limiting the search region, that is, four boundaries of the second selected region may be set to $iVerMin_{regionId}$, $iVerMax_{regionId}$, $iHorMin_{regionId}$ and $iHorMax_{regionId}$ respectively, then $iHorMin_{regionId}$ and $iHorMax_{regionId}$ are calculated as follows:

$$iHorMin_{regionId} = iHorMax - (iHorMax - iHorMin)/wIndex;$$

$$iHorMax_{regionId} = iHorMax.$$

Exemplarily, in some embodiments, when regionId is equal to 1, 2 or 3, for example R2, R3 or R4 of FIG. 14, four boundaries after limiting the search region, that is, four boundaries of the second selected region may be set to $iVerMin_{regionId}$, $iVerMax_{regionId}$, $iHorMin_{regionId}$ and $iHorMax_{regionId}$ respectively, then $iHorMin_{regionId}$ and $iHorMax_{regionId}$ are calculated as follows:

$$iHorMin_{regionId} = iHorMin + (iHorMax - iHorMin)/wIndex;$$

$$iHorMax_{regionId} = iHorMax.$$

Exemplarily, in some embodiments, when regionId is equal to 1, 2 or 3, for example R2, R3 or R4 of FIG. 14, four boundaries after limiting the search region, that is, four boundaries of the second selected region may be set to $iVerMin_{regionId}$, $iVerMax_{regionId}$, $iHorMin_{regionId}$ and $iHorMax_{regionId}$ respectively, then $iHorMin_{regionId}$ and $iHorMax_{regionId}$ are calculated as follows:
when wIndex is 2, $iHorMin_{regionId} = (iHorMax + iHorMin)/wIndex$;

$$iHorMax_{regionId} = iHorMax.$$

Exemplarily, in some embodiments, when regionId is equal to 1, 2 or 3, for example R2, R3 or R4 of FIG. 14, four boundaries after limiting the search region, that is, four boundaries of the second selected region may be set to $iVerMin_{regionId}$, $iVerMax_{regionId}$, $iHorMin_{regionId}$ and $iHorMax_{regionId}$ respectively, then $iVerMin_{regionId}$ and $iVerMax_{regionId}$ are calculated as follows:

$$iVerMin_{regionId} = iVerMin;$$

$$iVerMax_{regionId} = iVerMax - (iVerMax - iVerMin)/hIndex.$$

Exemplarily, in some embodiments, when regionId is equal to 1, 2 or 3, for example R2, R3 or R4 of FIG. 14, four boundaries after limiting the search region, that is, four boundaries of the second selected region may be set to $iVerMin_{regionId}$, $iVerMax_{regionId}$, $iHorMin_{regionId}$ and $iHorMax_{regionId}$ respectively, then $iVerMin_{regionId}$ and $iVerMax_{regionId}$ are calculated as follows:

$$iVerMin_{regionId} = iVerMin;$$

$$iVerMax_{regionId} = iVerMin + (iVerMax - iVerMin)/hIndex.$$

Exemplarily, in some embodiments, when regionId is equal to 1, 2 or 3, for example R2, R3 or R4 of FIG. 14, four boundaries after limiting the search region, that is, four boundaries of the second selected region may be set to $iVerMin_{regionId}$, $iVerMax_{regionId}$, $iHorMin_{regionId}$ and $iHorMax_{regionId}$ respectively, then $iVerMin_{regionId}$ and $iVerMax_{regionId}$ are calculated as follows:

$$iVerMin_{regionId} = iVerMin;$$

when hIndex is 2, $iVerMax_{regionId}$ = (iVerMax + iVerMin)/hIndex.
Exemplarily, in some embodiments, when regionId is equal to 4, for example R5 of FIG. 14, four boundaries after limiting the search region, that is, four boundaries of the third selected region may be set to $iVerMin_{regionId}$, $iVerMax_{regionId}$, $iHorMin_{regionId}$ and $iHorMax_{regionId}$ respectively, then $iHorMin_{regionId}$ and $iHorMax_{regionId}$ are calculated as follows:

$$iHorMin_{regionId} = iHorMax - (iHorMax - iHorMin)/wIndex;$$

$$iHorMax_{regionId} = iHorMax.$$

Exemplarily, in some embodiments, when regionId is equal to 4, for example R5 of FIG. 14, four boundaries after limiting the search region, that is, four boundaries of the third selected region may be set to $iVerMin_{regionId}$, $iVerMax_{regionId}$, $iHorMin_{regionId}$ and $iHorMax_{regionId}$ respectively, then $iHorMin_{regionId}$ and $iHorMax_{regionId}$ are calculated as follows:

$$iHorMin_{regionId} = iHorMin + (iHorMax - iHorMin)/wIndex;$$

$$iHorMax_{regionId} = iHorMax.$$

Exemplarily, in some embodiments, when regionId is equal to 4, for example R5 of FIG. 14, four boundaries after limiting the search region, that is, four boundaries of the third selected region may be set to $iVerMin_{regionId}$, $iVerMax_{regionId}$, $iHorMin_{regionId}$ and $iHorMax_{regionId}$ respectively, then $iHorMin_{regionId}$ and $iHorMax_{regionId}$ are calculated as follows:
when wIndex is 2, $iHorMin_{regionId}$ = (iHorMax + iHorMin)/wIndex;

$$iHorMax_{regionId} = iHorMax.$$

Exemplarily, in some embodiments, when regionId is equal to 4, for example R5 of FIG. 14, four boundaries after limiting the search region, that is, four boundaries of the third selected region may be set to $iVerMin_{regionId}$, $iVerMax_{regionId}$, $iHorMin_{regionId}$ and $iHorMax_{regionId}$ respectively, then $iVerMin_{regionId}$ and $iVerMax_{regionId}$ are calculated as follows:

$$iVerMin_{regionId} = iVerMin;$$

$$iVerMax_{regionId} = iVerMax - (iVerMax - iVerMin)/hIndex.$$

Exemplarily, in some embodiments, when regionId is equal to 4, for example R5 of FIG. 14, four boundaries after limiting the search region, that is, four boundaries of the third selected region may be set to $iVerMin_{regionId}$, $iVerMax_{regionId}$, $iHorMin_{regionId}$ and $iHorMax_{regionId}$ respectively, then $iVerMin_{regionId}$ and $iVerMax_{regionId}$ are calculated as follows:

$$iVerMin_{regionId} = iVerMin;$$

$$iVerMax_{regionId} = iVerMin + (iVerMax - iVerMin)/hIndex.$$

Exemplarily, in some embodiments, when regionId is equal to 4, for example R5 of FIG. 14, four boundaries after limiting the search region, that is, four boundaries of the third selected region may be set to $iVerMin_{regionId}$, $iVerMax_{regionId}$, $iHorMin_{regionId}$ and $iHorMax_{regionId}$ respectively, then $iVerMin_{regionId}$ and $iVerMax_{regionId}$ are calculated as follows:

$$iVerMin_{regionId} = iVerMin;$$

when hIndex is 2, $iVerMax_{regionId}$ = (iVerMax + iVerMin)/hIndex.

It may be understood that in the embodiments of the disclosure, for the search region such as R2, R3, R4 and R5 at the left side, upper left side or lower left side of the current block, when the region selection is performed on the second (or third) initial region, only a right half of the second (or third) initial region may be selected, then it is determined that wIndex is 2, $iHorMin_{regionId}$ = (iHorMax + iHorMin)/wIndexiHorMin, while $iHorMax_{regionId}$ = iHorMax, $iVerMin_{regionId}$ = iVerMin, $iVerMax_{regionId}$ = iVerMax are set.

It may be understood that in the embodiments of the disclosure, for the search region such as R2, R3, R4 and R5 at the left side, upper left side or lower left side of the current block, when the region selection is performed on the second (or third) initial region, only an upper half of the second (or third) initial region may be selected, then it is determined that hIndex is 2, $iVerMax_{regionId}$ = (iVerMax + iVerMin)/hIndex, while $iHorMin_{regionId}$ = iHorMin, $iHorMax_{regionId}$ = iHorMax, $iVerMin_{regionId}$ = iVerMin are set.

It may be understood that in the embodiments of the disclosure, in a process of performing the region selection according to the scaling parameters, the involved division operation may be implemented by right shift. For example, when wIndex is set to 2, the same result may be achieved by using a >> 1 operation.

Further, in the embodiments of the disclosure, when the region selection is performed on the fully reconstructed search region and/or the undetermined reconstructed search region according to the scaling parameters, to determine the selected fully reconstructed search region and/or the selected undetermined reconstructed search region, a fourth selected region may be determined from the fourth initial region according to the scaling parameters and position information of the fourth initial region. Here the fourth selected region is any region in the fourth initial region. Then, the selected undetermined reconstructed search region may be determined according to the fourth selected region.

It may be understood that in the embodiments of the disclosure, for the search region such as R6 at the upper right side of the current block, after obtaining four boundaries iHorMin, iHorMax, iVerMin and iVerMax of the search region (the fourth initial region), the search region may be clipped, limited and reduced by using the scaling parameters wIndex and hIndex, such that the fourth selected region may be obtained.

It should be noted that in the embodiments of the disclosure, for the search region such as R6 at the upper right side of the current block, the fourth selected region after scaling may be any region in the fourth initial region. That is, the fourth selected region may be sub-regions in the fourth initial region at different locations such as an upper sub-region, a lower sub-region, a left sub-region, a right sub-region, a middle sub-region or the like, which is not specifically limited in the disclosure.

Exemplarily, in some embodiments, FIG. 23 is a ninth schematic diagram of region selection. As shown in FIG. 23, for the search region such as R6 at the upper right side of the current block, if value of each of the scaling parameters wIndex and hIndex is 1, the fourth selected region obtained after performing the region selection on the fourth initial region by using the scaling parameters wIndex and hIndex is the corresponding fourth initial region.

Exemplarily, in some embodiments, FIG. 24 is a tenth schematic diagram of region selection. As shown in FIG.

24, for the search region such as R6 at the upper right side of the current block, if the value of the scaling parameter wIndex is 2 and the value of the scaling parameter hIndex is 1, the fourth selected region obtained after performing the region selection on the fourth initial region by using the scaling parameters wIndex and hIndex is a left region of the corresponding fourth initial region.

Exemplarily, in some embodiments, FIG. 25 is an eleventh schematic diagram of region selection. As shown in FIG. 25, for the search region such as R6 at the upper right side of the current block, if the value of the scaling parameter wIndex is 1 and the value of the scaling parameter hIndex is 2, the fourth selected region obtained after performing the region selection on the fourth initial region by using the scaling parameters wIndex and hIndex is a lower region of the corresponding fourth initial region.

Exemplarily, in some embodiments, FIG. 26 is a twelfth schematic diagram of region selection. As shown in FIG. 26, for the search region such as R6 at the upper right side of the current block, if the value of the scaling parameter wIndex is 2 and the value of the scaling parameter hIndex is 2, the fourth selected region obtained after performing the region selection on the fourth initial region by using the scaling parameters wIndex and hIndex is a lower left region of the corresponding fourth initial region.

Exemplarily, in some embodiments, when regionId is equal to 5, for example R6 of FIG. 14, four boundaries after limiting the search region, that is, four boundaries of the first selected region may be set to $iVerMin_{regionId}$, $iVerMax_{regionId}$, $iHorMin_{regionId}$ and $iHorMax_{regionId}$ respectively, then $iHorMin_{regionId}$ and $iHorMax_{regionId}$ are calculated as follows:

$$iHorMax_{regionId} = iHorMin + (iHorMax - iHorMin)/wIndex;$$

$$iHorMin_{regionId} = iHorMin.$$

Exemplarily, in some embodiments, when regionId is equal to 5, for example R6 of FIG. 14, four boundaries after limiting the search region, that is, four boundaries of the first selected region may be set to $iVerMin_{regionId}$, $iVerMax_{regionId}$, $iHorMin_{regionId}$ and $iHorMax_{regionId}$ respectively, then $iHorMin_{regionId}$ and $iHorMax_{regionId}$ are calculated as follows:
$iHorMax_{regionId} = iHorMax - (iHorMax - iHorMin)/wIndex;$

$$iHorMin_{regionId} = iHorMin.$$

Exemplarily, in some embodiments, when regionId is equal to 5, for example R6 of FIG. 14, four boundaries after limiting the search region, that is, four boundaries of the first selected region may be set to $iVerMin_{regionId}$, $iVerMax_{regionId}$, $iHorMin_{regionId}$ and $iHorMax_{regionId}$ respectively, then $iHorMin_{regionId}$ and $iHorMax_{regionId}$ are calculated as follows:
when wIndex is 2, $iHorMax_{regionId} = (iHorMax + iHorMin)/wIndex;$

$$iHorMin_{regionId} = iHorMin.$$

Exemplarily, in some embodiments, when regionId is equal to 5, for example R6 of FIG. 14, four boundaries after limiting the search region, that is, four boundaries of the first selected region may be set to $iVerMin_{regionId}$, $iVerMax_{regionId}$, $iHorMin_{regionId}$ and $iHorMax_{regionId}$ respectively, then $iVerMin_{regionId}$ and $iVerMax_{regionId}$ are calculated as follows:

$$iVerMin_{regionId} = iVerMin + (iVerMax - iVerMin)/hIndex;$$

$$iVerMax_{regionId} = iVerMax.$$

Exemplarily, in some embodiments, when regionId is equal to 5, for example R6 of FIG. 14, four boundaries after limiting the search region, that is, four boundaries of the first selected region may be set to $iVerMin_{regionId}$, $iVerMax_{regionId}$, $iHorMin_{regionId}$ and $iHorMax_{regionId}$ respectively, then $iVerMin_{regionId}$ and $iVerMax_{regionId}$ are calculated as follows:

$$iVerMin_{regionId} = iVerMax - (iVerMax - iVerMin)/hIndex;$$

$$iVerMax_{regionId} = iVerMax.$$

Exemplarily, in some embodiments, when regionId is equal to 5, for example R6 of FIG. 14, four boundaries after limiting the search region, that is, four boundaries of the first selected region may be set to $iVerMin_{regionId}$, $iVerMax_{regionId}$, $iHorMin_{regionId}$ and $iHorMax_{regionId}$ respectively, then $iVerMin_{regionId}$ and $iVerMax_{regionId}$ are calculated as follows: when hIndex is 2, $iVerMin_{regionId}$ = (iVerMax + iVerMin)/hIndex;

$$iVerMax_{regionId} = iVerMax.$$

It may be understood that in the embodiments of the disclosure, for the search region such as R6 at the upper right side of the current block, when the region selection is performed on the fourth initial region, only a left half of the fourth initial region may be selected, then it is determined that wIndex is 2, $iHorMax_{regionId}$ = (iHorMax + iHorMin)/wIndex, while $iHorMin_{regionId}$ = iHorMin, $iVerMin_{regionId}$ = iVerMin, $iVerMax_{regionId}$ = iVerMax are set.

It may be understood that in the embodiments of the disclosure, for the search region such as R6 at the upper right side of the current block, when the region selection is performed on the fourth initial region, only a lower half of the fourth initial region may be selected, then it is determined that hIndex is 2, $iVerMin_{regionId}$ = (iVerMax + iVerMin)/hIndex, while $iHorMin_{regionId}$ = iHorMin, $iHorMax_{regionId}$ = iHorMax, $iVerMax_{regionId}$ = iVerMax are set.

It may be understood that in the embodiments of the disclosure, in a process of performing the region selection according to the scaling parameters, the involved division operation may be implemented by right shift. For example, when wIndex is set to 2, the same result may be achieved by using a >> 1 operation.

It may be seen that in the embodiments of the disclosure, for any sub-search region in the fully reconstructed search region and/or the undetermined reconstructed search region, after obtaining four boundaries iHorMin, iHorMax, iVerMin and iVerMax of the search region, when *wIndex* ≠ 1 and/or *hIndex* ≠ 1 are met, the search region may be clipped according to scaling parameters. For example, in FIG. 14, for the region Ri (i=2, 3, 4, 5), the search range takes a region at a right part or upper right part in the region Ri, and four solutions for limiting the search range are shown in FIG. 19 to FIG. 22. For the region R6, the search range takes a region at a left part or lower left part of the region R6, and four solutions for limiting the search range are shown in FIG. 23 to FIG. 26. For the region R1, the search range may take a middle position of the original search region, and four solutions for limiting the search range are shown in FIG. 15 to FIG. 18.

That is, in the embodiments of the disclosure, for search points in the search region, all search points in a specified search region may be traversed, or the search range may be limited to a local search range by different solutions, to balance computational complexity and encoding efficiency. For example, for the undetermined reconstructed search region (corresponding to two regions R5 and R6 in FIG. 14) or the fully reconstructed region (corresponding to four regions R1 to R4 in FIG. 14), the width of the search range may be limited to 1/wIndex times the original width, and the height of the search range may be limited to 1/hIndex times the original height, here each of wIndex and hIndex is arbitrary positive integer equal to or greater than 1.

It may be understood that in the embodiments of the disclosure, the limited search range, that is, the selected fully reconstructed search region and/or the selected undetermined reconstructed search region may take a region closer to a to-be-encoded unit (current block). For example, when the search range of the region R5 is reduced, the width of the search region R5 may be reduced to 1/2 times the original width, and the width may be reduced to 1/2 times the original width, then a final search range may select a 1/4 region at the upper right part in the region R5, as shown in FIG. 22.

In summary, in the embodiments of the disclosure, the region selection may be performed on different search regions in different manners. Specifically, the search regions may be divided into three types based on positions of the search regions relative to the reference block (for example, at a left side of a current to-be-encoded block, an upper side of the current to-be-encoded block, or an upper right side of the current to-be-encoded block), and search region limitation of the Intra TMP is performed on the three types of search regions respectively.

It may be understood that in the embodiments of the disclosure, the region selection may be performed based on the fully reconstructed search region and/or the undetermined reconstructed search region after determining the fully reconstructed search region and/or the undetermined reconstructed search region according to the first template, to obtain the selected fully reconstructed search region and/or the selected undetermined reconstructed search region. Or, ranges of the fully reconstructed search region and/or the undetermined reconstructed search region may be directly set during determination of the fully reconstructed search region and/or the undetermined reconstructed search region. That is, the size of the search region including the fully reconstructed search region and/or the undetermined reconstructed search region may be directly limited to the size of the search region of the selected fully reconstructed search region and/or the selected undetermined reconstructed search region in the above solution.

Exemplarily, in some embodiments, when the search region is calculated, a weight value term or a clip operation may be added based on current formulas. For example, only a 1/2 region at the right part of the region R5 is selected.

When regionId is equal to 4, iVerMin, iVerMax, iHorMin and iHorMax may be calculated as follows:

iHorMin = max(iTemplateSizeW << iBvShift, (xTbCmp - offsetLCBX >> 1 - nTbW + 1) << iBvShift);

$$iHorMax = min((xTbCmp - nTbW) << iBvShift, (picWidth - nTbW) << iBvShift);$$

$$iVerMin = (yTbCmp + 1) << iBvShift;$$

iVerMax = min((picHeight - nTbH) << iBvShift, (yTbCmp - offsetLCBY + CtbSizeH - nTbH) << iBvShift).

Exemplarily, in some embodiments, when the search region is calculated, a weight value term or a clip operation may be added based on current formulas. For example, only a 1/2 region at the upper part of the region R5 is selected.

When regionId is equal to 4, iVerMin, iVerMax, iHorMin and iHorMax may be calculated as follows:

iHorMin = max(iTemplateSizeW << iBvShift, (xTbCmp - offsetLCBX - nTbW + 1) << iBvShift);

$$iHorMax = min((xTbCmp - nTbW) << iBvShift, (picWidth - nTbW) << iBvShift);$$

$$iVerMin = (yTbCmp + 1) << iBvShift;$$

iVerMax = min((picHeight - nTbH) << iBvShift, (yTbCmp - offsetLCBY + CtbSizeH >> 1 - nTbH) << iBvShift).

Exemplarily, in some embodiments, when the search region is calculated, a weight value term or a clip operation may be added based on current formulas. For example, only a 1/2 region at the left part of the region R6 is selected.

When regionId is equal to 5, iVerMin, iVerMax, iHorMin and iHorMax may be calculated as follows:

$$iHorMin = (xTbCmp + 1) << iBvShift;$$

iHorMax = min((xTbCmp - offsetLCBX + CtbSizeW - nTbW) << iBvShift, min((xTbCmp + searchRangeWidth >> 1) << iBvShift, ((picWidth - nTbW) << iBvShift)));

iVerMin = max(((iTemplateSizeH) << iBvShift), (yTbCmp - offsetLCBY - nTbH + 1) << iBvShift);

$$iVerMax = (yTbCmp - nTbH) << iBvShift.$$

Exemplarily, in some embodiments, when the search region is calculated, a weight value term or a clip operation may be added based on current formulas. For example, only a 1/2 region at the lower part of the region R6 is selected.

When regionId is equal to 5, iVerMin, iVerMax, iHorMin and iHorMax may be calculated as follows:

$$iHorMin = (xTbCmp + 1) << iBvShift;$$

iHorMax = min((xTbCmp - offsetLCBX + CtbSizeW - nTbW) << iBvShift, min((xTbCmp + searchRangeWidth) << iBvShift, ((picWidth - nTbW) << iBvShift)));

iVerMin = max(((iTemplateSizeH) << iBvShift), (yTbCmp - offsetLCBY >> 1 - nTbH + 1) << iBvShift);

$$iVerMax = (yTbCmp - nTbH) << iBvShift.$$

Exemplarily, in some embodiments, when the search region is calculated, a weight value term or a clip operation may be added based on current formulas. For example, only a 1/4 region at the upper right part of the region R5 is selected.

When regionId is equal to 4, iVerMin, iVerMax, iHorMin and iHorMax may be calculated as follows:

iHorMin = max(iTemplateSizeW << iBvShift, (xTbCmp - offsetLCBX >> 1 - nTbW + 1) << iBvShift);

$$iHorMax = min((xTbCmp - nTbW) << iBvShift, (picWidth - nTbW) << iBvShift);$$

$$iVerMin = (yTbCmp + 1) << iBvShift;$$

iVerMax = min((picHeight - nTbH) << iBvShift, (yTbCmp + (CtbSizeH - offsetLCBY) >> 1 - nTbH) << iBvShift).

Exemplarily, in some embodiments, when the search region is calculated, a weight value term or a clip operation may be added based on current formulas. For example, only a 1/4 region at the lower left part of the region R6 is selected.

When regionId is equal to 5, iVerMin, iVerMax, iHorMin and iHorMax may be calculated as follows:

$$iHorMin = (xTbCmp + 1) << iBvShift;$$

iHorMax = min((xTbCmp - offsetLCBX + CtbSizeW - nTbW) << iBvShift, min((xTbCmp + searchRangeWidth >> 1) << iBvShift, ((picWidth - nTbW) << iBvShift)));

iVerMin = max(((iTemplateSizeH) << iBvShift), (yTbCmp - offsetLCBY >> 1 - nTbH + 1) << iBvShift);

$$iVerMax = (yTbCmp - nTbH) << iBvShift.$$

Further, in the embodiments of the disclosure, when the region selection is performed based on the fully reconstructed search region and/or the undetermined reconstructed search region, to determine the selected fully reconstructed search region and/or the selected undetermined reconstructed search region, a region width threshold and a region height threshold may be determined first according to size parameters of the current block. Then, the region selection may be performed on the fully reconstructed search region and/or the undetermined reconstructed search region according to the region width threshold and/or the region height threshold, to determine the selected fully reconstructed search region and/or the selected undetermined reconstructed search region.

It should be noted that in the embodiments of the disclosure, the region width threshold and the region height threshold may limit the width and the height of the search region after the region selection respectively. The region width threshold may be derived by using the width nTbW of the current block, for example, the region width threshold is set to wIndex times the width nTbW of the current block. The region height threshold may be derived by using the height nTbH of the current block, for example, the region height threshold is set to hIndex times the height nTbH of the current block.

That is, in the embodiments of the disclosure, in a process of performing the region selection, limited sizes of the search region may also be derived by the size of the current CB (size parameters of the current block). For example, when the width dw of the search region meets dw > 2 × nTbW, the width of the search region is reduced to ensure that the width dw' of the search region after it is reduced does not exceed wIndex times the width nTbW of the current block; when the width dh of the search region meets dh > 2 × nTbH, the height of the search region is reduced to ensure that the height dh' of the search region after it is reduced does not exceed hIndex times the height nTbH of the current block.

Exemplarily, in the embodiments of the disclosure, when regionId is equal to 0, $iVerMin_{regionId}$, $iVerMax_{regionId}$, $iHorMin_{regionId}$ and $iHorMax_{regionId}$ are calculated as follows:

$$iHorMin_{regionId} = (iHorMax + iHorMin)/2 - wIndex \times nTbW/2;$$

$$iHorMax_{regionId} = (iHorMax + iHorMin)/2 + wIndex \times nTbW/2;$$

$$iVerMin_{regionId} = (iVerMax + iVerMin)/2 - hIndex \times nTbH/2;$$

$$iVerMax_{regionId} = (iVerMax + iVerMin)/2 + hIndex \times nTbH/2.$$

Exemplarily, in the embodiments of the disclosure, when regionId is equal to 1, 2, 3 or 4, $iVerMin_{regionId}$, $iVerMax_{regionId}$, $iHorMin_{regionId}$ and $iHorMax_{regionId}$ are calculated as follows:

$$iHorMin_{regionId} = iHorMax - wIndex \times nTbW;$$

$$iHorMax_{regionId} = iHorMax;$$

$$iVerMax_{regionId} = iVerMax - hIndex \times nTbH;$$

$$iVerMin_{regionId} = iVerMin.$$

Exemplarily, in the embodiments of the disclosure, when regionId is equal to 5, $iVerMin_{regionId}$, $iVerMax_{regionId}$, $iHorMin_{regionId}$ and $iHorMax_{regionId}$ are calculated as follows:

$$iHorMax_{regionId} = iHorMin + wIndex \times nTbW;$$

$$iHorMin_{regionId} = iHorMin;$$

$$iVerMin_{regionId} = iVerMin + hIndex \times nTbH;$$

$$iVerMax_{regionId} = iVerMax.$$

Further, in the embodiments of the disclosure, a search region in the fully reconstructed search region where any pixel in a reference block corresponding to the search region overlaps with a current CTB corresponding to the current block, may be determined as a first overlapping region; while a search region in the undetermined reconstructed search region that overlaps with the current CTB corresponding to the current block, may be determined as a second overlapping region.

Correspondingly, in the embodiments of the disclosure, other regions in the fully reconstructed search region except the first overlapping region may also be determined as a first non-overlapping region; other regions in the undetermined reconstructed search region except the second overlapping region may also be determined as a second non-overlapping region.

Further, in the embodiments of the disclosure, when the region selection is performed based on the fully reconstructed search region and/or the undetermined reconstructed search region, to determine the selected fully reconstructed search region and/or the selected undetermined reconstructed search region, the region selection may be performed on the first overlapping region, to determine a fourth selected region. Then, the selected fully reconstructed search region may be determined according to the fourth selected region and a first non-overlapping region. Here, the first non-overlapping region consists of other regions in the fully reconstructed search region except the first overlapping region.

Further, in the embodiments of the disclosure, when the region selection is performed based on the fully reconstructed search region and/or the undetermined reconstructed search region, to determine the selected fully reconstructed search region and/or the selected undetermined reconstructed search region, the region selection may be performed on the first non-overlapping region, to determine a fifth selected region. Then, the selected fully reconstructed search region may be determined according to the fifth selected region and the first overlapping region.

Further, in the embodiments of the disclosure, when the region selection is performed based on the fully reconstructed search region and/or the undetermined reconstructed search region, to determine the selected fully reconstructed search region and/or the selected undetermined reconstructed search region, the region selection may be performed on the second overlapping region, to determine a sixth selected region. Then, the selected undetermined reconstructed search region may be determined according to the sixth selected region and a second non-overlapping region, here the second non-overlapping region consists of other regions in the undetermined reconstructed search region except the second overlapping region.

Further, in the embodiments of the disclosure, when the region selection is performed based on the fully reconstructed search region and/or the undetermined reconstructed search region, to determine the selected fully reconstructed search region and/or the selected undetermined reconstructed search region, the region selection may be performed on the second non-overlapping region, to determine a seventh selected region. Then, the selected undetermined reconstructed search region may be determined according to the seventh selected region and the second overlapping region.

Exemplarily, in the embodiments of the disclosure, only regions (such as the first overlapping region and/or the second overlapping region) that overlap with a current CTU may be limited, while the region reducing and limiting is not applied to other regions (such as the first non-overlapping region and/or the second non-overlapping region).

Exemplarily, in the embodiments of the disclosure, only regions (such as the first non-overlapping region and/or the second non-overlapping region) that do not overlap with the current CTU may be limited, while the region reducing and limiting is not applied to other regions (such as the first overlapping region and/or the second overlapping region).

Exemplarily, in the embodiments of the disclosure, regions (such as the first non-overlapping region and/or the second non-overlapping region) that do not overlap with the current CTU and the undetermined reconstructed search region may be limited, while the region reducing and limiting is not applied to other regions (such as the first overlapping region).

Exemplarily, in some embodiments, if an encoded unit at a neighbouring position of the current to-be-encoded unit (the current block) is in the Intra TMP mode, its BV is recorded as $BV_{neighbor}$, an upper left corner of a reference block of a neighbouring block is found through the BV, the point at the upper left corner is used as a search starting point, the search is extended by nTbW in positive and negative directions of an X axis respectively and is extended by nTbH in positive and negative directions of an Y axis respectively, then a region that does not overlap with the fully reconstructed search region and the undetermined reconstructed search region is recorded as R7, and then search points in R7 are traversed, of which specific implementations are as follows.

Input: luma position (xCb, yCb), which specifies a position of an upper left sample in the current CB relative to an upper left luma sample in the current picture; a variable cbWidth, which specifies a width of the current CB in the luma samples; a variable cbHeight, which specifies a height of the current CB in the luma samples; a block vector bv; and a variable cIdx, which specifies an index of a color component of the current block.

Output: an array predSamples of prediction samples.

When cIdx is equal to 0, that is, in case of the luma component, for x = xCb..xCb + cbWidth - 1 and y = yCb..yCb + cbHeight - 1:

$$xVb = (x + (bvL[0] >> 4)) \ \& \ (IbcBufWidthY - 1);$$

$$yVb = (y + (bvL[1] >> 4)) \ \& \ (CtbSizeY - 1).$$

When cIdx is not equal to 0, that is, in case of the chroma component, for x = xCb/SubWidthC..xCb/SubWidthC + cbWidth/SubWidthC - 1 and y = yCb/SubHeightC..yCb/SubHeightC + cbHeight/SubHeightC - 1:

$$xVb = ( x + (bvC[0] >> 4)) \ \& \ (IbcBufWidthC - 1);$$

$$yVb = (y + (bvC[1] >> 4)) \ \& \ ((CtbSizeY/subHeightC) - 1).$$

Four boundaries of the region R7 are calculated as follows:

iHorMax = min(min((xTbCmp + searchRangeWidth) << iBvShift, ((picWidth - nTbW) << iBvShift)), xVb + nTbW);

iHorMin = max(max((iTemplateSizeW) << iBvShift, (xTbCmp - searchRangeWidth) << iBvShift), xVb - iHorMin);

iVerMin = max(max(((iTemplateSizeH) << iBvShift), ((yTbCmp - searchRangeHeight) << iBvShift)), iVerMin + nTbH);

iVerMax = min(min(picHeight - nTbH, (yTbCmp - offsetLCBY + CtbSizeH - nTbH) << iBvShift), iVerMax - nTbH).

After obtaining a range of the region R7, it is determined whether R7 overlaps with existing search regions. When at least one of the four boundaries of the region R7 falls into any search region in Ri (i=0, 1, 2, 3, 4, 5) (that is, when at least one of the following conditions is met), it is determined that the region R7 overlaps with the existing search regions. At this time, it needs to traverse a part of R7 that does not overlap with the existing search regions; otherwise, all search points in the search region R7 are traversed.

$$iHorMin[regionId] \le iHorMax \le iHorMax[regionId];$$

$$iHorMin[regionId] \le iHorMin \le iHorMax[regionId];$$

$$iVerMin[regionId] \le iVerMax \le iVerMax[regionId];$$

$$iVerMin[regionId] \le iVerMin \le iVerMax[regionId].$$

Further, in the embodiments of the disclosure, when a search range of a partial region is limited, searchRangeWidth and/or searchRangeHeight of the partial region take different values from those of other regions.

Exemplarily, in some embodiments, when a region corresponding to the undetermined reconstructed search region is limited, calculations may be performed as follows.

When regionId is equal to 4, iVerMin, iVerMax, iHorMin and iHorMax may be calculated as follows:

iHorMin = max(max(iTemplateSizeW << iBvShift, (xTbCmp - offsetLCBX - nTbW + 1) << iBvShift), (xTbCmp - searchRangeWidth × scaleFactorW)) << iBvShift);

$$iHorMax = min((xTbCmp - nTbW) << iBvShift, (picWidth - nTbW) << iBvShift);$$

$$iVerMin = (yTbCmp + 1) << iBvShift;$$

iVerMax = min(min((picHeight - nTbH) << iBvShift, (yTbCmp - offsetLCBY + CtbSizeH - nTbH) << iBvShift, (yTbCmp + searchRangeHeight × scaleFactorH) << iBvShift)).

It should be noted that in the embodiments of the disclosure, each of scaleFactorW and scaleFactorH may be 1/2 or other values.

It should be noted that in the embodiments of the disclosure, multiplication operations in the above calculation process may be replaced by division operations or shift operations.

It should be noted that in the embodiments of the disclosure, the << iBvShift operation in the above calculation process may also be an operation of comparison followed by shift.

It should be noted that in the embodiments of the disclosure, during determination of iHorMin, a term "xTbCmp - searchRangeWidth × scaleFactorW)) << iBvShift" is added, and a maximum value is taken from the term and previously existing terms. Such operation may be understood as an outer boundary moving closer to the current block.

It should be noted that in the embodiments of the disclosure, during determination of iVerMax, a term "yTbCmp + searchRangeHeight × scaleFactorH) << iBvShift" is added, and a minimum value is taken from the term and previously existing items. Such operation may be understood as an outer boundary moving closer to the current block.

Exemplarily, in some embodiments, when a region corresponding to the undetermined reconstructed search region is limited, calculations may be performed as follows.

When regionId is equal to 5, iVerMin, iVerMax, iHorMin and iHorMax may be calculated as follows:

$$iHorMin = (xTbCmp + 1) << iBvShift;$$

iHorMax = min(min((xTbCmp - offsetLCBX + CtbSizeW - nTbW) << iBvShift, min((xTbCmp + searchRangeWidth) << iBvShift, ((picWidth - nTbW) << iBvShift))), (xTbCmp + searchRangeWidth × scaleFactorW) << iBvShift);

iVerMin = max(max(((iTemplateSizeH) << iBvShift), (yTbCmp - offsetLCBY - nTbH + 1) << iBvShift, ((yTbCmp - searchRangeHeight × scaleFactorH)) << iBvShift));

$$iVerMax = (yTbCmp - nTbH) << iBvShift.$$

It should be noted that in the embodiments of the disclosure, each of scaleFactorW and scaleFactorH may be 1/2 or other values.

It should be noted that in the embodiments of the disclosure, multiplications in the above calculation process may be replaced by division operations or shift operations.

It should be noted that in the embodiment of the disclosure, the << iBvShift operation in the above calculation process may also be an operation of comparison followed by shift.

It should be noted that in the embodiment of the disclosure, during determination of iHorMax, a term "xTbCmp + searchRangeWidth × scaleFactorW)) << iBvShift" is added, and a minimum value is taken from the term and previously existing items. Such operation may be understood as an outer boundary moving closer to the current block.

It should be noted that in the embodiments of the disclosure, during determination of iVerMin, a term "yTbCmp - searchRangeHeight × scaleFactorH) << iBvShift" is added, and a maximum value is taken from the term and previously existing items. Such operation may be understood as an outer boundary moving closer to the current block.

Further, in the embodiments of the disclosure, when the region selection is performed based on the fully reconstructed search region and/or the undetermined reconstructed search region, it may select to appropriately add an offset operation such as a + 1 operation, based on the determined iHorMin, iHorMax, iVerMin and iVerMax.

Further, in the embodiments of the disclosure, when the region selection is performed based on the fully reconstructed search region and/or the undetermined reconstructed search region, an operation of further limiting the selected fully reconstructed search region and/or the selected undetermined reconstructed search region may also be added, for example, minimum possible value ranges of the selected fully reconstructed search region and/or the selected undetermined reconstructed search region may be controlled by a min function, or maximum possible value ranges of the selected fully reconstructed search region and/or the selected undetermined reconstructed search region may be controlled by a max function.

In operation 204, search is performed in the selected fully reconstructed search region and/or the selected undetermined reconstructed search region respectively, to determine one or more BVs for the current block.

In the embodiments of the disclosure, after performing the region selection based on the fully reconstructed search region and/or the undetermined reconstructed search region, to determine the selected fully reconstructed search region and/or the selected undetermined reconstructed search region, search may be further performed in the selected fully reconstructed search region and/or the selected undetermined reconstructed search region respectively, to determine the one or more BVs for the current block.

Further, in the embodiments of the disclosure, when search is performed in the selected fully reconstructed search region and/or the selected undetermined reconstructed search region respectively, to determine the one or more BVs for the current block, on one hand, search points in the selected fully reconstructed search region may be traversed, and first matching cost values between matching templates corresponding to the search points in the selected fully reconstructed search region and the first template may be determined according to a preset matching criteria. On the other hand, search points in the selected undetermined reconstructed search region may be traversed, and second matching cost values between matching templates corresponding to search points in the selected undetermined reconstructed search region that meet a preset availability condition and the first template may be determined according to the preset matching criteria. Finally, the one or more BVs and one or more candidate templates corresponding to the one or more BVs may be determined according to the first matching cost values and the second matching cost values.

It should be noted that in the embodiments of the disclosure, since it may not determine whether samples in the selected undetermined reconstructed search region are reconstructed samples, it needs to determine first whether the samples in the selected undetermined reconstructed search region are available.

It may be understood that in the embodiments of the disclosure, it may determine first whether a current search point in the selected undetermined reconstructed search region meets the preset availability condition; and if the current search point meets the preset availability condition, the second matching cost value between a matching template corresponding to the current search point and the first template is determined according to the preset matching criteria.

Correspondingly, in the embodiments of the disclosure, after determining whether the current search point in the selected undetermined reconstructed search region meets the preset availability condition, if the current search point does not meet the preset availability condition, a process of determining the second matching cost values is not performed.

In some embodiments, the preset availability condition includes at least one or more of the following conditions: all samples in the matching template of the current search point do not exceed a coordinate range of a sample boundary corresponding to a current picture; all samples in a reconstructed block corresponding to the matching template of the current search point do not exceed the coordinate range of the sample boundary corresponding to the current picture; all the samples in the matching template of the current search point do not exceed a preset search window range; all the samples in the reconstructed block corresponding to the matching template of the current search point do not exceed the preset search window range; all the samples in the matching template of the current search point and the current CB are located in a same Tile; all the samples in the reconstructed block corresponding to the matching template of the current search point and the current CB are located in the same Tile; all the samples in the matching template of the current search point have been reconstructed; all the samples in the reconstructed block corresponding to the matching template of the current search point do not belong to the current CB; or all the samples in the reconstructed block corresponding to the matching template of the current search point have been reconstructed.

It should be noted that in the embodiments of the disclosure, the preset matching criteria includes any one of cost functions for measuring a mode, such as SAD, SATD, SSE, MAD, MAE, MSE, NCC, etc.

Exemplarily, in the embodiments of the disclosure, when a BV is determined by search, bvYMins and bvYMaxs represent a minimum offset and a maximum offset of the BV in the vertical direction respectively.

bvXMinsregionId, bvXMaxsregionId, bvYMinsregionId and bvYMaxsregionId may be calculated by using the determined iVerMinregionId, iVerMaxregionId, iHorMinregionId and iHorMaxregionId:

$$bvXMinsregionId = iHorMinregionId - xTbCmp;$$

$$bvXMaxsregionId = iHorMaxregionId - xTbCmp;$$

$$bvYMinsregionId = iVerMinregionId - yTbCmp;$$

$$bvYMaxsregionId = iVerMaxregionId - yTbCmp.$$

bvXMinsregionId, bvXMaxsregionId, bvYMinsregionId and bvYMaxsregionId determine a range of horizontal and vertical offsets of the search point relative to the current block, that is, a range of the BV.

Exemplarily, in the embodiments of the disclosure, when search is performed in the selected fully reconstructed search region, by using each search point (iPosHor, iPoxVer) in the search region, that is, each BV (which is formed by a horizontal component and a vertical component: (pX, pY), here pX = iPosHor - xTbCmp, pY = iPosVer - yTbCmp, then pX is between bvXMins and bvXMaxs, and pY is between bvYMins and bvYMaxs), one or more matching reconstructed blocks of the current block may be found from the reconstructed region, and neighbouring reconstructed pixels of the one or more matching reconstructed blocks are matching templates. Therefore, first matching costs between a neighbouring template of the current block and neighbouring templates of the one or more reconstructed blocks may be calculated respectively, and are recorded as pDiff.

Exemplarily, in the embodiments of the disclosure, when search is performed in the selected undetermined reconstructed search region, by using each search point (iPosHor, iPoxVer) in the search region, that is, each BV (which is formed by a horizontal component and a vertical component: (pX, pY), here pX = iPosHor - xTbCmp, pY = iPosVer - yTbCmp, then pX is between bvXMins and bvXMaxs, and pY is between bvYMins and bvYMaxs), it is determined whether the search point is available. If the search point is available, one or more matching reconstructed blocks of the current block may be found from the reconstructed region, and neighbouring reconstructed pixels of the matching reconstructed blocks are matching templates. Therefore, second matching costs between a neighbouring template of the current block and neighbouring templates of the reconstructed blocks may be calculated respectively, and are also recorded as pDiff. If the search point is unavailable, calculation of template matching costs is not performed.

Exemplarily, in the embodiments of the disclosure, determination of availability includes, but is not limited to meeting one or more of the following conditions: each sample in the template does not exceed a valid coordinate range limited by the sample boundary of the picture; each sample in the reconstructed block corresponding to the template does not exceed the valid coordinate range limited by the sample boundary of the picture; each sample in the template and each sample in the corresponding reconstructed block do not exceed a specified search window range; whether each sample in the template and a current encoding region are located in the same Tile; whether each sample in the reconstructed block corresponding to the template and the current encoding region are located in the same Tile; each sample in the template has been reconstructed; each sample in the reconstructed block corresponding to the template is not located in the current encoding region; and each sample in the reconstructed block corresponding to the template has been reconstructed.

In some embodiments, the preset availability condition may further include at least one or more of the following conditions: all first identified samples in the matching template of the current search point do not exceed a coordinate range of a sample boundary corresponding to a current picture; all second identified samples in a reconstructed block corresponding to the matching template of the current search point do not exceed the coordinate range of the sample boundary corresponding to the current picture; all the first identified samples in the matching template of the current search point do not exceed a preset search window range; all the second identified samples in the reconstructed block corresponding to the matching template of the current search point do not exceed the preset search window range; all the first identified samples in the matching template of the current search point and the current CB are located in a same Tile; all the second identified samples in the reconstructed block corresponding to the matching template of the current search point and the current CB are located in the same Tile; all the first identified samples in the matching template of the current search point have been reconstructed; all the second identified samples in the reconstructed block corresponding to the matching template of the current search point do not belong to the current CB; or all the second identified samples in the reconstructed block corresponding to the matching template of the current search point have been reconstructed.

It should be noted that in the embodiments of the disclosure, the first identified samples are one or more samples in the matching template of the current search point; the second identified samples are one or more samples in the reconstructed block corresponding to the matching template of the current search point.

That is, when availability of the search point in the selected undetermined reconstructed search region is determined, all samples in the matching template corresponding to the search point are not traversed any more to determine availability, instead, whether the search point is available is determined by using identified samples in the matching template; correspondingly, all samples in the reconstructed block corresponding to the matching template of the search point are not traversed any more to determine availability, instead, whether the search point is available may be determined by using identified samples in the reconstructed block.

It may be understood that in the embodiments of the disclosure, the first identified samples may be any one or more samples in the matching template. For example, the first identified samples may be one or more samples located at a corner position of the matching template. For example, when there is only an upper template, the first identified samples may be samples at an upper left corner and a lower right corner of the upper template, or only samples at the lower right corner of the upper template.

It may be understood that in the embodiments of the disclosure, the second identified samples may be any one or more samples in the reconstructed block corresponding to the matching template of the current search point. For example, the second identified samples may be one or more samples located at a corner position of the reconstructed block, such as samples at an upper left corner and a lower right corner of the reconstructed block, or only samples at the lower right corner of the reconstructed block.

Further, in the embodiments of the disclosure, when availability of the search point in the selected undetermined reconstructed search region is determined, the first identified samples are traversed in a descending order of priorities based on the above preset availability condition. If a current first identified sample does not meet the preset availability condition, the traversal is stopped, and it is determined that the current search point does not meet the preset availability condition. If the current first identified sample meets the preset availability condition, it continues to traverse a next first identified sample. If all the first identified samples meet the preset availability condition, it is determined that the current search point meets the preset availability condition.

Further, in the embodiments of the disclosure, when availability of the search point in the selected undetermined reconstructed search region is determined, the second identified samples are traversed in a descending order of priorities based on the above preset availability condition. If a current second identified sample does not meet the preset availability condition, the traversal is stopped, and it is determined that the current search point does not meet the preset availability condition. If the current second identified sample meets the preset availability condition, it continues to traverse a next second identified sample. If all the second identified samples meet the preset availability condition, it is determined that the current search point meets the preset availability condition.

That is, in the embodiments of the disclosure, multiple identified samples may be used sequentially. For example, whether the sample at the upper left corner is available is determined first, and if this sample is unavailable, it returns "unavailable"; if this sample is available, whether the sample at the lower right corner is available is determined, and if this sample is unavailable, it returns "unavailable"; if this sample is available, it returns "available". The priority of the sample at the upper left corner is higher than that of the sample at the lower right corner.

It should be noted that in the embodiments of the disclosure, the BVs determined by search may be one or more BVs. For example, N BVs for the current block may be determined, here N is an integer greater than 0.

Correspondingly, in the embodiments of the disclosure, when search is performed in the selected fully reconstructed search region and/or the selected undetermined reconstructed search region respectively to determine the one or more BVs, a preset number N corresponding to the candidate templates may be determined first. Then, search points in the selected fully reconstructed search region may be traversed, and first matching cost values between matching templates corresponding to the search points in the selected fully reconstructed search region and the first template may be determined according to a preset matching criteria, while search points in the selected undetermined reconstructed search region may be traversed, and second matching cost values between matching templates corresponding to search points in the selected undetermined reconstructed search region that meet a preset availability condition and the first template may be determined according to the preset matching criteria. Finally, N BVs and N candidate templates corresponding to the N BVs may be determined according to the first matching cost values and the second matching cost values.

That is, in the embodiments of the disclosure, when search is performed in the selected fully reconstructed search region and/or the selected undetermined reconstructed search region respectively, to determine N BVs corresponding to N matching templates, that is, a process of searching and determining the BVs corresponding to the N matching templates in the search region (the selected fully reconstructed search region and/or the selected undetermined reconstructed search region) may include that: value of the number N of candidate templates is determined, a matching template comparison criterion is determined, and the N BVs corresponding to the N matching templates (the selected N candidate templates) are recorded.

It may be understood that in the embodiments of the disclosure, when the preset number N corresponding to the candidate templates is determined, N may be determined; or N may be determined according to a first preset value; or N may be determined according to a preset value range.

That is, in the embodiments of the disclosure, it needs to determine the value of N first, here N may be a preset constant, for example, N is 4; or, N may be in a certain value range, for example, the value of N may be any integer in [2, 8]. A range of the value of N is preset, a best value of N may be determined at an encoding side by coarse selection with a cost 1, or coarse selection with a cost 2, or coarse selection with a cost 3, or fine selection with a cost 4, or in other manners, and the best value of N may be signalled to the decoding side in a form of a bitstream. Each of costs 1, 2, 3 and 4 may be one of cost functions for measuring a mode, such as SAD, SATD, MSE, MAD, RDO, etc. Manners of determining N are not specifically limited in the disclosure.

Further, in the embodiments of the disclosure, when N BVs and N candidate templates corresponding to the N BVs are determined according to the first matching cost values and the second matching cost values, that is, when one or more BVs and one or more candidate templates corresponding to the one or more BVs are determined, N minimum matching cost values may be determined first from the first matching cost values and the second matching cost values. Then, the N BVs and the N candidate templates corresponding to the N BVs may be determined based on N search points corresponding to the N minimum matching cost values.

N minimum matching cost values are determined from the matching cost values between matching templates corresponding to the search points in the selected fully reconstructed search region and the first template, and then N BVs and N candidate templates corresponding to the N minimum matching cost values are determined.

In some embodiments, all available search points in all search ranges (for example, regionId = 0, 1, 2, 3, 4, 5) are traversed, and N search points of which matching costs pDiff (including the first matching cost values and the second matching cost values) are minimum are obtained by comparison. Matching costs corresponding to the N search points are recorded as pDiff_BEST[n], n = 0, ..., N-1. BVs corresponding to the N search points are recorded as best BVs, BV_BEST [n], here each item is a coordinate pair (pX_BEST, pY_BEST), n = 0, ..., N-1. Matching templates corresponding to the N search points are best matching templates, T_BEST[n], n = 0, ..., N-1. N may be an integer value equal to or greater than 1 as required.

It should be noted that in the embodiments of the disclosure, when search is performed, search strategies that may be used may include, but are not limited to search manners based on different search step sizes, such as a coarse search based on a first search step size and/or a fine search based on a second search step size, here the first search step size is greater than the second search step size.

In some embodiments, each of the first search step size and the second search step size may be any value greater than 0, and may be an integer value or may not be an integer value, as long as it is ensured that the first search step size is greater than the second search step size. For example, the first search step size may be 3, and the second search step size may be 1/2.

Further, in the embodiments of the disclosure, search may be performed in the selected fully reconstructed search region and/or the selected undetermined reconstructed search region respectively according to a first search step size, to determine the first matching cost values corresponding to the search points in the selected fully reconstructed search region and the second matching cost values corresponding to the search points in the selected undetermined reconstructed search region that meet the preset availability condition, and the N BVs and the N candidate templates corresponding to the N BVs may be determined based on the first cost values and the second cost values.

Exemplarily, in the embodiments of the disclosure, the coarse search may specifically include that: best coarse matching templates is determined from the search region with a first preset step size (that is, the first search step size, such as 2), that is, final candidate templates are obtained, or the best coarse matching templates are determined in the search region by using a downsampling template (such as a downsampling factor of 2), that is, the final candidate templates are obtained.

Exemplarily, in the embodiments of the disclosure, if the search strategy is that only the coarse search is performed, the coarse search may be performed with a large step size (the first search step size) (for example, with a step size of 2 or 3) in a search range where pX is between bvXMinsregionId and bvXMaxsregionId and pY is between bvYMinsregionId and bvYMaxsregionId within each region, first N best matching costs obtained by template matching are recorded as pDiff_BEST[n], n = 0, ..., N-1, and BVs corresponding to the N best matching costs are recorded as best BVs, BV_BEST[n], each of which is a coordinate pair (pX_BEST, pY_BEST), n = 0, ..., N-1. N may be an integer value equal to or greater than 1 as required.

Further, in the embodiments of the disclosure, search may be performed in the selected fully reconstructed search region and/or the selected undetermined reconstructed search region respectively according to a second search step size, to determine the first matching cost values corresponding to the search points in the selected fully reconstructed search region and the second matching cost values corresponding to the search points in the selected undetermined reconstructed search region that meet the preset availability condition, and the N BVs and the N candidate templates corresponding to the N BVs may be determined based on the first cost values and the second cost values, here the first search step size is greater than the second search step size.

Exemplarily, in the embodiments of the disclosure, the fine search may specifically include that: best fine matching templates are determined from the search region with a second preset step size (that is, the second search step size, such as 1), that is, final candidate templates are obtained, or the best fine matching templates are determined near the best coarse matching templates after completing the coarse search, that is, the final candidate templates are obtained.

Exemplarily, in the embodiments of the disclosure, if the search strategy is that only the fine search is performed, the fine search may be performed with a small step size (the second search step size) (for example, with a step size of 1 or 1/2, when the step size is less than 1, sub-pixel interpolation is required) in a search range where pX is between bvXMinsregionId and bvXMaxsregionId and pY is between bvYMinsregionId and bvYMaxsregionId within each region, first N best matching costs obtained by template matching are recorded as pDiff_BEST[n], n = 0, ..., N-1, and BVs corresponding to the N best matching costs are recorded as best BVs, BV_BEST[n], each of which is a coordinate pair (pX_BEST, pY_BEST), n = 0, ..., N-1. N may be an integer value equal to or greater than 1 as required.

Further, in the embodiments of the disclosure, search may be performed first in the selected fully reconstructed search region and/or the selected undetermined reconstructed search region respectively according to a first search step size, to determine the first matching cost values corresponding to the search points in the selected fully reconstructed search region and the second matching cost values corresponding to the search points in the selected undetermined reconstructed search region that meet the preset availability condition, and the M reference BVs and M matching reconstructed blocks corresponding to the M reference BVs may be determined based on the first cost values and the second cost values, here M is an integer greater than 0. Then, a first search region may be determined according to the M matching reconstructed blocks, here the first search region is smaller than a total region consisting of the selected fully reconstructed search region and/or the selected undetermined reconstructed search region. Then, search may be performed in the first search region according to a second search step size, to determine third matching cost values between matching templates corresponding to search points in the first search region that meet the preset availability condition and the first template, here the first search step size is greater than the second search step size. Finally, the N BVs and the N candidate templates corresponding to the N BVs may be determined according to the first matching cost values, the second matching cost values and/or the third matching cost values.

It may be understood that in the embodiments of the disclosure, when the N BVs and the N candidate templates corresponding to the N BVs are determined according to the first matching cost values, the second matching cost values and/or the third matching cost values, N minimum matching cost values may be determined first from the third matching cost values. Then, the N BVs and the N candidate templates corresponding to the N BVs may be determined based on N search points corresponding to the N minimum matching cost values.

It may be understood that in the embodiments of the disclosure, when the N BVs and the N candidate templates corresponding to the N BVs are determined according to the first matching cost values, the second matching cost values and/or the third matching cost values, T BVs and T candidate templates corresponding to the T BVs may also be determined first according to the third matching cost values, here T is an integer greater than 0 and less than N; and (N-T) BVs other than the M reference BVs and (N-T) candidate templates corresponding to the (N-T) BVs may be determined according to the first cost values and the second cost values.

It should be noted that in the embodiments of the disclosure, after performing the coarse search, P initial BVs may also be determined based on the first cost values and the second cost values, here P is an integer equal to or greater than M. Then, the M reference BVs may be determined according to the P initial BVs.

Exemplarily, in the embodiments of the disclosure, if the search strategy is that the coarse search is performed first and then the fine search is performed, the coarse search may be performed first with a step size of 2 (that is, the first search step size is 2), to record best coarse matching templates (initial matching templates) obtained by template matching, and then best fine matching templates may be determined near the best coarse matching templates with a step size of 1 (that is, the second search step size is 1), that is, final candidate templates are obtained.

In a coarse search stage, the coarse search may be performed with a large step size (for example, with a step size of 2 or 3) within a search range where pX is between bvXMinsregionId and bvXMaxsregionId and pY is between bvYMinsregionId and bvYMaxsregionId in each region. For example, the coarse search is performed with a step size of 2, to record first P best matching costs obtained by template matching as pDiff1_BEST[p], p = 0, ..., P-1. BVs corresponding to the P best matching costs are recorded as best BVs, BV1_BEST[p], p = 0, ..., P-1. P may be an integer value equal to or greater than 1 as required. Search regions where best matching search points are located are bestRegionId[p], p = 0, ..., P-1. According to algorithm requirements, one or more (here recorded as M, 1 <= M <= P) fine search reference points will be given in the coarse search stage and sent to a next step. For example, M = 1 is set.

Next, in a fine search stage, the best BVs, BV1_BEST[p], p = 0, ..., M-1 obtained by the coarse search may be used as fine search reference points, to perform search near them. Specifically, for each fine search reference point, refined search ranges TmpRefineRangeHor and TmpRefineRangeVer are determined first. The refined search range may have a fixed size or may be related to the size of the CB. For example, each of the above TmpRefineRangeHor and TmpRefineRangeVer may be set to min(nTbW, nTbH)/2. Then, position of a best matching reconstructed block obtained by the coarse search is calculated as a reference position of a fine search region: BestPosX = xTbCmp + pX1_BEST, BestPosY = yTbCmp + pY1_BEST.

In an embodiment, the search window may be used directly, and the fine search region may be treated as a whole selected undetermined reconstructed search region, to directly traverse it.

A new search range is acquired according to the position of the best matching block obtained by the coarse search, that is:

$$iHorMaxrefine = min(picWidth - nTbW, BestPosX + TmpRefineRangeHor);$$

$$iHorMinrefine = max(iTemplateSizeW, BestPosX - TmpRefineRangeHor);$$

$$iVerMaxrefine = min(picHeight - nTbH, BestPosY + TmpRefineRangeVer);$$

$$iVerMinrefine = max(iTemplateSizeH, BestPosY - TmpRefineRangeVer).$$

Then, the adjusted BVs bvXMins, bvXMaxs, bvYMins and bvYMaxs may be calculated by using iVerMinrefine, iVerMaxrefine, iHorMinrefine and iHorMaxrefine:

$$bvXMins = iHorMinrefine - xTbCmp;$$

$$bvXMaxs = iHorMaxrefine - xTbCmp;$$

$$bvYMins = iVerMinrefine - yTbCmp;$$

$$bvYMaxs = iVerMaxrefine - yTbCmp.$$

The fine search is performed within a BV range where pX is between bvXMinsrefine and bvXMaxsrefine and pY is between bvYMinsrefine and bvYMaxsrefine, that is, all search positions in a fine search window are traversed directly, and availability thereof is determined sequentially. For example, the search is performed with a step size of 1, first T best matching costs obtained by template matching for available points are recorded as pDiff_BEST[t], t = 0, ..., T-1, and BVs corresponding to the T best matching costs are recorded as best BVs, BV_BEST[t], t = 0, ..., T-1. T is an integer of 1 or greater than 1. For example, T = 1 is set.

After completing the above operations, one or more best BVs BV_BEST[n], n = 0, ..., N-1, for different algorithm requirements may be obtained according to results of coarse and fine selection processes (here the fine selection process includes searching for one or more reference points). Here, each of the one or more best BVs is a coordinate pair (pX_BEST, pY_BEST). pX_BEST and pY_BEST are offsets of the best matching template relative to the template of the current CB in the horizontal direction and in the vertical direction respectively, and are also offsets of the best matching reconstructed block relative to the current CB in the horizontal direction and in the vertical direction respectively.

It should be noted that in the embodiments of the disclosure, there may be different BV selection solutions according to results of coarse and fine selection processes. For example, first N results are selected after all BVs are sorted in terms of template costs. For another example, T results of the fine search (obtained by performing fine search based on first M results of the coarse search) derived from M results of the coarse search are selected, followed by (N-T) results starting from the (M+1)-th result of the coarse search. During implementation, for example, M = 1, T = 1, N = 5; or M = 1, T = 1, N = 3.

It may be seen that in the embodiments of the disclosure, a process corresponding to searching in the search region to determine one or more BVs may include three search strategies as follows: only the coarse search is performed, only the fine search is performed, and the coarse search is performed first and then the fine search is performed.

Further, in the embodiments of the disclosure, after determining the one or more BVs corresponding to the current block, one or more reference blocks for the current block may be further determined according to the one or more BVs.

Then, prediction values of the current block may be determined according to the one or more reference blocks.

Further, in the embodiments of the disclosure, when the one or more reference blocks corresponding to the current block are determined according to the one or more BVs, one or more initially reconstructed blocks corresponding to the current block may be determined first according to the one or more BVs. Then, the one or more initially reconstructed blocks may be corrected, to determine the one or more reference blocks.

That is, in the embodiments of the disclosure, other manners may be used when N candidate reconstructed blocks (reference blocks) are acquired, for example, initially reconstructed blocks corresponding to the obtained candidate templates are corrected first, to determine corresponding reference blocks.

Correspondingly, after acquiring N candidate reconstructed blocks (reference blocks) by copying matching reconstructed blocks (initially reconstructed blocks) corresponding to N BVs, the N candidate reconstructed blocks may be weighted directly to obtain the prediction values of the current block; or, candidate reconstructed blocks (reference blocks) may be obtained after correcting the matching reconstructed blocks (initially reconstructed blocks) corresponding to N BVs, and then the candidate reconstructed blocks (reference blocks) may be weighted to obtain the prediction values of the current block.

Further, in the embodiments of the disclosure, when the one or more initially reconstructed blocks are corrected to determine the one or more reference blocks, the one or more initially reconstructed blocks may be filtered to determine the one or more reference blocks.

Further, in the embodiments of the disclosure, when the one or more initially reconstructed blocks are corrected to determine the one or more reference blocks, one or more correction parameter vectors may be determined first according to one or more candidate templates corresponding to the one or more BVs. Then, the one or more initially reconstructed blocks may be corrected according to the one or more correction parameter vectors, to determine the one or more reference blocks.

Further, in the embodiments of the disclosure, when the one or more correction parameter vectors are determined according to the one or more candidate templates corresponding to the one or more BVs, autocorrelation matrices corresponding to the candidate templates may be determined first according to pixel values in the candidate templates. Then, cross-correlation vectors may be determined according to pixel values in the first template and pixel values in the candidate templates. Then, the correction parameter vectors may be determined according to the autocorrelation matrices and the cross-correlation vectors.

It may be understood that in the embodiments of the disclosure, the solution for correcting the initially reconstructed blocks may include that the initially reconstructed blocks are filtered directly, here a filtering solution used when they are filtered may be a traditional filtering method, such as bilateral filtering, mean filtering or the like, or may be a filtering enhancement based on a neural network.

It may be understood that in the embodiments of the disclosure, the solution for correcting the initially reconstructed blocks may further include that the matching reconstructed blocks (initially reconstructed blocks) are corrected by using matching template information (candidate templates).

Further, in the embodiments of the disclosure, prediction values of the current block may be determined according to one or more BVs. Specifically, a best BV for the current block may be determined first according to the one or more BVs for the current block. Then, at least one reference block corresponding to the current block may be determined according to the best BV. Finally, prediction values of the current block may be determined according to the at least one reference block.

It should be noted that in the embodiments of the disclosure, when the prediction values of the current block are determined according to the at least one reference block, at least one prediction block may be determined based on the at least one reference block first. Then, weighted fusion may be performed on the at least one prediction block, to determine the prediction values of the current block.

Exemplarily, in some embodiments, after determining the best BV for the current block, multiple points may be taken around the best BV, that is, multiple reference blocks may be acquired, and then weighted fusion may be performed on prediction values corresponding to the multiple points, to obtain the prediction values of the current block.

Further, in the embodiments of the disclosure, prediction values of the current block may be determined according to one or more BVs. Specifically, a first prediction value of the current block may be determined according to the one or more BVs for the current block. Then, a second prediction value of the current block may be determined according to a preset prediction mode, here the preset prediction mode includes a planar mode and/or a directional mode. Finally, prediction values of the current block may be determined according to the first prediction value and the second prediction value.

Exemplarily, in some embodiments, after determining the one or more BVs for the current block, prediction values acquired by using the one or more BVs and prediction values obtained in other Intra modes may be weighted and combined to obtain final prediction values. The other Intra modes may be other prediction modes other than the Intra TMP, such as a planar mode, or a directional mode, etc. The directional mode may be derived from TIMD, or may be obtained by locating in an Intra candidate table by using an Index signalled in a bitstream. This method may be referred to as an Intra TMP CIIP mode.

It may be understood that in the Intra TMP mode, besides acquiring the prediction values by using the basic copying method, a method for acquiring the prediction values by performing filtering fusion using corresponding positions of multiple BVs, as well as a method for prediction by fusing with a normal Intra mode may be used.

Further, in the embodiments of the disclosure, after determining the prediction values of the current block according to the BVs for the current block, reconstructed values of the current block may be further determined according to the prediction values of the current block.

It should be noted that in the embodiments of the disclosure, prediction residuals corresponding to the current block may be determined first, and the prediction residuals corresponding to the current block may be written into a bitstream. Then, reconstructed values of the current block may be further determined according to the prediction residuals and the prediction values of the current block.

In summary, according to the encoding method proposed in the above operations 201 to 204, the size of the search region may be reduced while reconstructed samples spatially neighbouring to the current encoding region are utilized effectively, thereby improving prediction accuracy while ensuring encoding complexity.

That is, the embodiments of the disclosure proposes a method for limiting the search region for the Intra TMP region-wise, in which search regions at different positions are limited in respective targeted manners, and reconstructed samples relatively neighbouring to the current to-be-encoded unit are retained, such that the prediction accuracy is improved to a certain extent and the encoding complexity is also ensured.

It should be noted that the encoding method proposed in the embodiments of the disclosure is a method for reducing the search region for the Intra TMP region-wise. Specifically, search regions at different positions are limited in respective targeted manners, such that algorithm effectiveness is ensured while complexity is balanced, thereby improving encoding efficiency effectively.

Input for acquiring the Intra TMP-BV: the position (xTbCmp, yTbCmp) of the current CB (the current block), the width nTbW of the current CB, and the height nTbH of the current CB. Output for acquiring the Intra TMP-BV: one or more BVs for the current block and prediction values predSamples[x][y] of corresponding prediction blocks, here x = 0..nTbW - 1, y = 0..nTbH-1. The prediction values of the prediction blocks may be used as final prediction values, or may be further processed to obtain final prediction values of the current block.

It may be understood that a specific process of acquiring the Intra TMP-BV proposed in the embodiments of the disclosure is divided into three steps as follows: determining the current template type, acquiring reconstructed pixels of the current template, and determining BVs within a predefined search range. Corresponding to each acquired BV, a set of prediction values of the current block may be obtained.

In the embodiments of the disclosure, the search range may include the selected fully reconstructed search region and/or the selected undetermined reconstructed search region obtained after performing the region selection based on the fully reconstructed search region and/or the undetermined reconstructed search region. Here, the fully reconstructed search region includes reconstructed samples, and the undetermined reconstructed search region includes reconstructed samples and/or unreconstructed samples.

The embodiments of the disclosure provide an encoding method. The encoder determines a first template corresponding to a current block; determines a fully reconstructed search region and/or an undetermined reconstructed search region according to the first template, here the fully reconstructed search region includes reconstructed samples, and the undetermined reconstructed search region includes reconstructed samples and/or unreconstructed samples; performs a region selection based on the fully reconstructed search region and/or the undetermined reconstructed search region, to determine a selected fully reconstructed search region and/or a selected undetermined reconstructed search region, here the selected fully reconstructed search region is smaller than or equal to the fully reconstructed search region, and the selected undetermined reconstructed search region is smaller than or equal to the undetermined reconstructed search region; and searches in the selected fully reconstructed search region and/or the selected undetermined reconstructed search region respectively, to determine one or more BVs for the current block. It may be seen that in the embodiments of the disclosure, after the fully reconstructed search region and/or the undetermined reconstructed search region including reconstructed samples and/or unreconstructed samples are determined according to the first template, the region selection may be performed on the fully reconstructed search region and/or the undetermined reconstructed search region, to obtain the selected fully reconstructed search region and/or the selected undetermined reconstructed search region with a relatively small range, and search in the selected fully reconstructed search region and/or the selected undetermined reconstructed search region. In other words, according to the encoding method and the decoding method proposed in the embodiments of the disclosure, available samples in the undetermined reconstructed search region may be utilized, while the search range may be limited to a certain extent, then encoding and decoding complexities may be reduced based on full acquisition of more effective reference information, therefore efficiency and performance of encoding and decoding may be improved.

In another embodiment of the disclosure, with reference to FIG. 28, a schematic structural diagram of an encoder provided in an embodiment of the disclosure is shown. As shown in FIG. 28, the encoder 180 may include a first determination unit 1801.

The first determination unit 1801 is configured to: determine a first template corresponding to a current block; determine a fully reconstructed search region and/or an undetermined reconstructed search region according to the first template, here the fully reconstructed search region includes reconstructed samples, and the undetermined reconstructed search region includes reconstructed samples and/or unreconstructed samples; perform a region selection based on the fully reconstructed search region and/or the undetermined reconstructed search region, to determine a selected fully reconstructed search region and/or a selected undetermined reconstructed search region, here the selected fully reconstructed search region is smaller than or equal to the fully reconstructed search region, and the selected undetermined reconstructed search region is smaller than or equal to the undetermined reconstructed search region; and search in the selected fully reconstructed search region and/or the selected undetermined reconstructed search region respectively, to determine one or more BVs for the current block.

It may be understood that in the embodiment of the disclosure, the "unit" may be a part of a circuit, a part of a processor, a part of a program or software, etc. Or, the "unit" may be a module, or may be non-modular. Furthermore, various components in the embodiment may be integrated into a processing unit, or each unit may physically exist separately, or two or more than two units may be integrated into a unit. The above integrated unit may be implemented in a form of hardware or in a form of software functional module.

If the integrated unit is implemented in a form of software functional module and is not sold or used as an independent product, the integrated unit may be stored in a computer-readable storage medium. Based on such understanding, the technical solution of the embodiment substantially, or parts making contributions to the related art, or all or part of the technical solution may be embodied in a form of software product, and the computer software product is stored in a storage medium, and includes several instructions configured to enable a computer device (which may be a personal computer, a server, a network device, etc.) or a processor to perform all or part of operations of the method described in the embodiment. The foregoing storage medium includes various media capable of storing program codes, such as a U disk, a mobile hard disk, a Read Only Memory (ROM), a Random Access Memory (RAM), a magnetic disk, or an optical disk, etc.

Therefore, an embodiment of the disclosure provides a computer-readable storage medium, the computer-readable storage medium is applied to the encoder 180. The computer-readable storage medium has stored thereon a computer program, and when the computer program is executed by a first processor, the method described in any one of the foregoing embodiments is implemented.

Based on configurations of the encoder 180 and the computer-readable storage medium, with reference to FIG. 29, a schematic diagram of specific hardware structures of the encoder 180 provided in an embodiment of the disclosure is shown. As shown in FIG. 29, the encoder 180 may include a first communication interface 1901, a first memory 1902 and a first processor 1903, various components are coupled together through a first bus system 1904. It may be understood that the first bus system 1904 is configured to achieve connection and communication between these components. The first bus system 1904 includes a power bus, a control bus and a status signal bus, besides a data bus. However, for the sake of clear explanations, various buses are marked as the first bus system 1904.

The first communication interface 1901 is configured to receive/send signals in a process of receiving/sending information from/to other external network elements.

The first memory 1902 is configured to store a computer program executable on the first processor 1903.

The first processor 1903 is configured to execute the computer program, to perform operations of: determining a first template corresponding to a current block; determining a fully reconstructed search region and/or an undetermined reconstructed search region according to the first template, here the fully reconstructed search region includes reconstructed samples, and the undetermined reconstructed search region includes reconstructed samples and/or unreconstructed samples; performing a region selection based on the fully reconstructed search region and/or the undetermined reconstructed search region, to determine a selected fully reconstructed search region and/or a selected undetermined reconstructed search region, here the selected fully reconstructed search region is smaller than or equal to the fully reconstructed search region, and the selected undetermined reconstructed search region is smaller than or equal to the undetermined reconstructed search region; and searching in the selected fully reconstructed search region and/or the selected undetermined reconstructed search region respectively, to determine one or more BVs for the current block.

It may be understood that the first memory 1902 in the embodiment of the disclosure may be a volatile memory or a non-volatile memory, or may include both volatile and non-volatile memories. The non-volatile memory may be a ROM, a Programmable ROM (PROM), an Erasable PROM (EPROM), an electrically EPROM (EEPROM), or a flash memory. The volatile memory may be a RAM, which is used as an external cache. Through an exemplary rather than limiting description, many forms of RAMs are available, such as a Static RAM (SRAM), a Dynamic RAM (DRAM), a Synchronous DRAM (SDRAM), a Double Data Rate SDRAM (DDRSDRAM), an Enhanced SDRAM (ESDRAM), a synchlink DRAM (SLDRAM), and a Direct Rambus RAM (DR RAM). The first memory 1902 of the system and method described in the disclosure is intended to include, but is not limited to these memories and any other suitable types of memories.

The first processor 1903 may be an integrated circuit chip with a signal processing capability. During implementation, each operation of the above method may be completed by an integrated logical circuit in a form of hardware in the first processor 1903 or instructions in a form of software. The above first processor 1903 may be a general purpose processor, a Digital Signal Processor (DSP), an Application Specific Integrated Circuit (ASIC), a Field Programmable Gate Array (FPGA) or other programmable logical devices, a discrete gate or transistor logical device, a discrete hardware component, etc. The methods, operations and logic block diagrams disclosed in the embodiments of the disclosure may be implemented or performed. The general purpose processor may be a microprocessor, or the processor may be any conventional processor, etc. Operations in the methods disclosed according to the embodiments of the disclosure may be directly embodied as being performed and completed by a hardware decoding processor, or performed and completed by a combination of hardware in the decoding processor and a software module. The software module may be located in a mature storage medium in this field such as a RAM, a flash memory, a ROM, a PROM or an EEPROM, a register, etc. The storage medium is located in the first memory 1902, and the first processor 1903 reads information in the first memory 1902, and completes the operations in the above methods in combination with the hardware thereof.

It may be understood that these embodiments described in the disclosure may be implemented in hardware, software, firmware, middleware, microcode or a combination thereof. For implementation in hardware, the processing unit may be implemented in one or more ASICs, DSPs, DSP Devices (DSPDs), Programmable Logic Devices (PLDs), FPGAs, general purpose processors, controllers, microcontrollers, microprocessors, other electronic units configured to perform functions described in the disclosure, or combinations thereof. For implementation in software, technologies described in the disclosure may be implemented by modules (such as processes, functions, etc.) performing the functions described in the disclosure. Software codes may be stored in a memory and executed by a processor. The memory may be implemented in or out of the processor.

Optionally, as another embodiment, the first processor 1903 is further configured to perform the method described in any one of the foregoing embodiments when it executes the computer program.

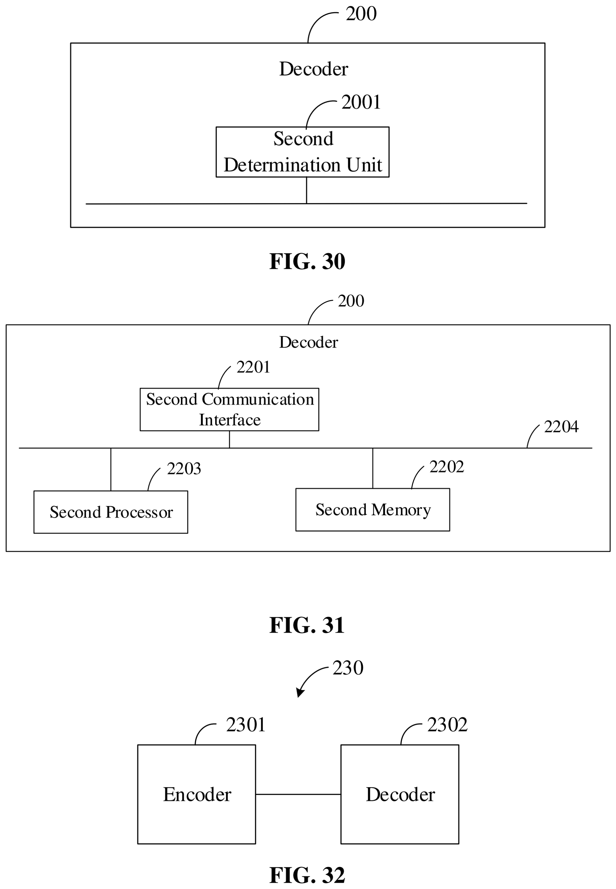

In yet another embodiment of the disclosure, with reference to FIG. 30, a schematic structural diagram of a decoder provided in an embodiment of the disclosure is shown. As shown in FIG. 30, the decoder 200 may include a second determination unit 2001.

The second determination unit 2001 is configured to: determine a first template corresponding to a current block; determine a fully reconstructed search region and/or an undetermined reconstructed search region according to the first template, here the fully reconstructed search region includes reconstructed samples, and the undetermined reconstructed search region includes reconstructed samples and/or unreconstructed samples; perform a region selection based on the fully reconstructed search region and/or the undetermined reconstructed search region, to determine a selected fully reconstructed search region and/or a selected undetermined reconstructed search region, here the selected fully reconstructed search region is smaller than or equal to the fully reconstructed search region, and the selected undetermined reconstructed search region is smaller than or equal to the undetermined reconstructed search region; and search in the selected fully reconstructed search region and/or the selected undetermined reconstructed search region respectively, to determine one or more BVs for the current block.

It may be understood that in the embodiment of the disclosure, the "unit" may be a part of a circuit, a part of a processor, a part of a program or software, etc. Or, the "unit" may be a module, or may be non-modular. Furthermore, various components in the embodiment may be integrated into a processing unit, or each unit may physically exist separately, or two or more than two units may be integrated into a unit. The above integrated unit may be implemented in a form of hardware or in a form of software functional module.

If the integrated unit is implemented in a form of software functional module and is not sold or used as an independent product, the integrated unit may be stored in a computer-readable storage medium. Based on such understanding, the embodiment provides a computer-readable storage medium, the computer-readable storage medium is applied to the decoder 200. The computer-readable storage medium has stored thereon a computer program, and when the computer program is executed by a second processor, the method described in any one of the foregoing embodiments is implemented.

Based on configuration of the decoder 200 and the computer-readable storage medium, with reference to FIG. 31, a schematic diagram of specific hardware structures of the decoder 200 provided in an embodiment of the disclosure is shown. As shown in FIG. 31, the decoder 200 may include a second communication interface 2201, a second memory 2202 and a second processor 2203, various components are coupled together through a second bus system 2204. It may be understood that the second bus system 2204 is configured to achieve connection and communication between these components. The second bus system 2204 includes a power bus, a control bus and a status signal bus, besides a data bus. However, for the sake of clear explanations, various buses are marked as the second bus system 2204.

The second communication interface 2201 is configured to receive/send signals in a process of receiving/sending information from/to other external network elements.

The second memory 2202 is configured to store a computer program executable on the second processor 2203.

The second processor 2203 is configured to execute the computer program, to perform operations of: determining a first template corresponding to a current block; determining a fully reconstructed search region and/or

**EP 4 697 707 A1**

an undetermined reconstructed search region according to the first template, here the fully reconstructed search region includes reconstructed samples, and the undetermined reconstructed search region includes reconstructed samples and/or unreconstructed samples; performing a region selection based on the fully reconstructed search region and/or the undetermined reconstructed search region, to determine a selected fully reconstructed search region and/or a selected undetermined reconstructed search region, here the selected fully reconstructed search region is smaller than or equal to the fully reconstructed search region, and the selected undetermined reconstructed search region is smaller than or equal to the undetermined reconstructed search region; and searching in the selected fully reconstructed search region and/or the selected undetermined reconstructed search region respectively, to determine one or more BVs for the current block.

Optionally, as another embodiment, the second processor 2203 is further configured to perform the method described in any one of the foregoing embodiments when it executes the computer program.

It may be understood that hardware functions of the second memory 2202 are similar to those of the first memory 1902, and hardware functions of the second processor 2203 are similar to those of the first processor 1903, which will not be described in detail here.

The embodiments provide a codec, the codec determines a first template corresponding to a current block; determines a fully reconstructed search region and/or an undetermined reconstructed search region according to the first template, here the fully reconstructed search region includes reconstructed samples, and the undetermined reconstructed search region includes reconstructed samples and/or unreconstructed samples; performs a region selection based on the fully reconstructed search region and/or the undetermined reconstructed search region, to determine a selected fully reconstructed search region and/or a selected undetermined reconstructed search region, here the selected fully reconstructed search region is smaller than or equal to the fully reconstructed search region, and the selected undetermined reconstructed search region is smaller than or equal to the undetermined reconstructed search region; and searches in the selected fully reconstructed search region and/or the selected undetermined reconstructed search region respectively, to determine one or more BVs for the current block. It may be seen that in the embodiments of the disclosure, after the fully reconstructed search region and/or the undetermined reconstructed search region including reconstructed samples and/or unreconstructed samples are determined according to the first template, he region selection may be performed on the fully reconstructed search region and/or the undetermined reconstructed search region, to obtain the selected fully reconstructed search region and/or the selected undetermined reconstructed search region with a relatively small range, and search in the selected fully reconstructed search region and/or the selected undetermined reconstructed search region. In other words, according to the encoding method and the decoding method proposed in the embodiments of the disclosure, available samples in the undetermined reconstructed search region may be utilized, while the search range may be limited to a certain extent, then encoding and decoding complexities may be reduced based on full acquisition of more effective reference information, therefore the efficiency and performance of encoding and decoding may be improved.

In yet another embodiment of the disclosure, with reference to FIG. 32, a schematic structural diagram of an encoding and decoding system provided in an embodiment of the disclosure is shown. As shown in FIG. 32, the encoding and decoding system 230 may include an encoder 2301 and a decoder 2302.

In the embodiment of the disclosure, the encoder 2301 may be the encoder described in any one of the foregoing embodiments, and the decoder 2302 may be the decoder described in any one of the foregoing embodiments.

Further, an embodiment of the disclosure further provides a bitstream, the bitstream is generated by bit encoding according to to-be-encoded information, here the to-be-encoded information includes at least one of: prediction residuals of a current block, a preset number N, scaling parameters, a template size, or indication information of a template type.

It should be noted that in the disclosure, terms "including", "include" or any other variants thereof are intended to encompass a non-exclusive inclusion, such that a process, method, article or apparatus including a series of elements includes not only those elements, but also other elements which are not explicitly listed, or elements inherent to such process, method, article or apparatus. Without further limitation, an element defined by a statement "including a..." does not preclude presence of additional identical elements in a process, method, article or apparatus including the element.

The above serial numbers of the embodiments of the disclosure are only for the purpose of descriptions, and do not represent advantages and disadvantages of the embodiments.

The methods disclosed in several method embodiments provided in the disclosure may be arbitrarily combined without conflict, to obtain new method embodiments.

The features disclosed in several product embodiments provided in the disclosure may be arbitrarily combined without conflict, to obtain new product embodiments.

The features disclosed in several method or device embodiments provided in the disclosure may be arbitrarily combined without conflict, to obtain new method or device embodiments.

The above descriptions are only specific implementations of the disclosure, however, the scope of protection of the disclosure is not limited thereto. Variation or replacement easily conceived by any technician familiar with this technical field within the technical scope disclosed in the disclosure, should fall within the scope of protection of the disclosure. Therefore, the scope of protection of the disclosure should be subject to the scope of protection of the claims.

Industrial Applicability

The embodiments of the disclosure provide an encoding method, a decoding method, a bitstream, an encoder, a decoder, and a storage medium. Both the encoder and the decoder determine a first template corresponding to a current block; determine a fully reconstructed search region and/or an undetermined reconstructed search region according to the first template, here the fully reconstructed search region includes reconstructed samples, and the undetermined reconstructed search region includes reconstructed samples and/or unreconstructed samples; perform a region selection based on the fully reconstructed search region and/or the undetermined reconstructed search region, to determine a selected fully reconstructed search region and/or a selected undetermined reconstructed search region, here the selected fully reconstructed search region is smaller than or equal to the fully reconstructed search region, and the selected undetermined reconstructed search region is smaller than or equal to the undetermined reconstructed search region; and search in the selected fully reconstructed search region and/or the selected undetermined reconstructed search region respectively, to determine one or more BVs for the current block. It may be seen that in the embodiments of the disclosure, after the fully reconstructed search region and/or the undetermined reconstructed search region including reconstructed samples and/or unreconstructed samples are determined according to the first template, the region selection may be performed on the fully reconstructed search region and/or the undetermined reconstructed search region, to obtain the selected fully reconstructed search region and/or the selected undetermined reconstructed search region with a relatively small range, and search in the selected fully reconstructed search region and/or the selected undetermined reconstructed search region. In other words, according to the encoding method and the decoding method proposed in the embodiments of the disclosure, available samples in the undetermined reconstructed search region may be utilized, while the search range may be limited to a certain extent, then encoding and decoding complexities may be reduced based on full acquisition of more effective reference information, therefore the efficiency and performance of encoding and decoding may be improved.

**Claims**

1. A method of decoding, applied to a decoder, comprising:

   determining a first template corresponding to a current block;
   determining at least one of a fully reconstructed search region or an undetermined reconstructed search region according to the first template, wherein the fully reconstructed search region comprises reconstructed samples, and the undetermined reconstructed search region comprises at least one of reconstructed samples or unreconstructed samples;
   performing a region selection based on at least one of the fully reconstructed search region or the undetermined reconstructed search region, to determine at least one of a selected fully reconstructed search region or a selected undetermined reconstructed search region, wherein the selected fully reconstructed search region is smaller than or equal to the fully reconstructed search region, and the selected undetermined reconstructed search region is smaller than or equal to the undetermined reconstructed search region; and
   searching in at least one of the selected fully reconstructed search region or the selected undetermined reconstructed search region respectively, to determine one or more Block Vectors (BVs) for the current block.

2. The method of claim 1, wherein determining at least one of the fully reconstructed search region or the undetermined reconstructed search region according to the first template comprises:
   determining at least one of the fully reconstructed search region or the undetermined reconstructed search region based on the first template, with a zero-value BV as a center, and according to a size of a search window and position information of a current picture.

3. The method of claim 2, wherein the fully reconstructed search region is a search region comprising a set of positions corresponding to upper left pixels of a corresponding reference block at each search position,
   the undetermined reconstructed search region is a search coverage region comprising a set of pixels of the corresponding reference block at each search position.

4. The method of claim 1, wherein performing the region selection based on at least one of the fully reconstructed search region or the undetermined reconstructed search region, to determine at least one of the selected fully reconstructed search region or the selected undetermined reconstructed search region comprises:

   determining the fully reconstructed search region as the selected fully reconstructed search region; and

performing the region selection on the undetermined reconstructed search region, to determine the selected undetermined reconstructed search region.

5. The method of claim 1, wherein performing the region selection based on at least one of the fully reconstructed search region or the undetermined reconstructed search region, to determine at least one of the selected fully reconstructed search region or the selected undetermined reconstructed search region comprises:

performing the region selection on the fully reconstructed search region, to determine the selected fully reconstructed search region; and
determining the undetermined reconstructed search region as the selected undetermined reconstructed search region.

6. The method of claim 1, wherein performing the region selection based on at least one of the fully reconstructed search region or the undetermined reconstructed search region, to determine at least one of the selected fully reconstructed search region or the selected undetermined reconstructed search region comprises:

performing the region selection on the fully reconstructed search region, to determine the selected fully reconstructed search region; and
performing the region selection on the undetermined reconstructed search region, to determine the selected undetermined reconstructed search region.

7. The method of claim 1, wherein performing the region selection based on at least one of the fully reconstructed search region or the undetermined reconstructed search region, to determine at least one of the selected fully reconstructed search region or the selected undetermined reconstructed search region comprises:

etermining scaling parameters, wherein the scaling parameters comprise a height scaling parameter and a width scaling parameter, and each of the height scaling parameter and the width scaling parameter is equal to or greater than 1; and
performing the region selection on at least one of the fully reconstructed search region or the undetermined reconstructed search region according to the scaling parameters, to determine at least one of the selected fully reconstructed search region or the selected undetermined reconstructed search region.

8. The method of claim 7, wherein determining the scaling parameters comprises:

decoding a bitstream, to determine the scaling parameters; or
determining the scaling parameters according to preset values.

9. The method of claim 8, wherein the scaling parameters are transmitted through any one of sequence parameter set (sps) layer syntax information, picture parameter set (pps) layer syntax information, application parameter set (aps) layer syntax information, shell (sh) layer syntax information, or centralized unit (cu) layer syntax information.

10. The method of claim 7, further comprising:

determining a search region at an upper side of the current block from the fully reconstructed search region, as a first initial region;
determining a search region at a left side or an upper left side of the current block from the fully reconstructed search region, as a second initial region;
determining a search region at a lower left side of the current block from the undetermined reconstructed search region, as a third initial region; and
determining a search region at an upper right side of the current block from the undetermined reconstructed search region, as a fourth initial region.

11. The method of claim 10, wherein performing the region selection on at least one of the fully reconstructed search region or the undetermined reconstructed search region according to the scaling parameters, to determine at least one of the selected fully reconstructed search region or the selected undetermined reconstructed search region comprises at least one of:

determining a first selected region from the first initial region according to the scaling parameters and position information of the first initial region, wherein the first selected region is any region in the first initial region; and determining the selected fully reconstructed search region according to the first selected region,

or,

determining a second selected region from the second initial region according to the scaling parameters and position information of the second initial region, wherein the second selected region is any region in the second initial region; and determining the selected fully reconstructed search region according to the second selected region.

12. The method of claim 10, wherein performing the region selection on at least one of the fully reconstructed search region or the undetermined reconstructed search region according to the scaling parameters, to determine at least one of the selected fully reconstructed search region or the selected undetermined reconstructed search region comprises:

determining a third selected region from the third initial region according to the scaling parameters and position information of the third initial region, wherein the third selected region is any region in the third initial region; and determining the selected undetermined reconstructed search region according to the third selected region.

13. The method of claim 10, wherein performing the region selection on at least one of the fully reconstructed search region or the undetermined reconstructed search region according to the scaling parameters, to determine at least one of the selected fully reconstructed search region or the selected undetermined reconstructed search region comprises:

determining a fourth selected region from the fourth initial region according to the scaling parameters and position information of the fourth initial region, wherein the fourth selected region is any region in the fourth initial region; and
determining the selected undetermined reconstructed search region according to the fourth selected region.

14. The method of claim 1, wherein performing the region selection based on at least one of the fully reconstructed search region or the undetermined reconstructed search region, to determine at least one of the selected fully reconstructed search region or the selected undetermined reconstructed search region comprises:

determining a region width threshold and a region height threshold according to size parameters of the current block; and
performing the region selection on at least one of the fully reconstructed search region or the undetermined reconstructed search region according to at least one of the region width threshold or the region height threshold, to determine at least one of the selected fully reconstructed search region or the selected undetermined reconstructed search region.

15. The method of claim 1, wherein performing the region selection based on at least one of the fully reconstructed search region or the undetermined reconstructed search region, to determine at least one of the selected fully reconstructed search region or the selected undetermined reconstructed search region comprises:

determining the fully reconstructed search region as the selected fully reconstructed search region; and
determining the undetermined reconstructed search region as the selected undetermined reconstructed search region.

16. The method of claim 1, further comprising:
determining, from the fully reconstructed search region, a search region where any pixel in a reference block corresponding to the search region overlaps with a current Coding Tree Block (CTB) corresponding to the current block, as a first overlapping region.

17. The method of claim 16, wherein performing the region selection based on at least one of the fully reconstructed search region or the undetermined reconstructed search region, to determine at least one of the selected fully reconstructed search region or the selected undetermined reconstructed search region comprises:

performing the region selection on the first overlapping region, to determine a fourth selected region; and
determining the selected fully reconstructed search region according to the fourth selected region and a first non-overlapping region, wherein the first non-overlapping region consists of other regions in the fully reconstructed search region except the first overlapping region.

18. The method of claim 17, wherein performing the region selection based on at least one of the fully reconstructed search region or the undetermined reconstructed search region, to determine at least one of the selected fully reconstructed search region or the selected undetermined reconstructed search region comprises:

performing the region selection on the first non-overlapping region, to determine a fifth selected region; and determining the selected fully reconstructed search region according to the fifth selected region and the first overlapping region.

19. The method of claim 1, wherein searching in at least one of the selected fully reconstructed search region or the selected undetermined reconstructed search region respectively, to determine the one or more BVs for the current block comprises:

traversing search points in the selected fully reconstructed search region, and determining first matching cost values between matching templates corresponding to the search points in the selected fully reconstructed search region and the first template according to a preset matching criteria;
traversing search points in the selected undetermined reconstructed search region, and determining second matching cost values between matching templates corresponding to search points in the selected undetermined reconstructed search region that meet a preset availability condition and the first template according to the preset matching criteria; and
determining the one or more BVs and one or more candidate templates corresponding to the one or more BVs, according to the first matching cost values and the second matching cost values.

20. The method of claim 19, further comprising:

determining whether a current search point in the selected undetermined reconstructed search region meets the preset availability condition; and
if the current search point meets the preset availability condition, determining the second matching cost value between a matching template corresponding to the current search point and the first template according to the preset matching criteria.

21. The method of claim 20, further comprising:
if the current search point does not meet the preset availability condition, not performing a process of determining the second matching cost values.

22. The method of claim 20 or 21, wherein the preset availability condition comprises at least one or more of the following conditions:

all samples in the matching template of the current search point do not exceed a coordinate range of a sample boundary corresponding to a current picture;
all samples in a reconstructed block corresponding to the matching template of the current search point do not exceed the coordinate range of the sample boundary corresponding to the current picture;
all the samples in the matching template of the current search point do not exceed a preset search window range;
all the samples in the reconstructed block corresponding to the matching template of the current search point do not exceed the preset search window range;
all the samples in the matching template of the current search point and a current Coding Block (CB) are located in a same Tile;
all the samples in the reconstructed block corresponding to the matching template of the current search point and the current CB are located in a same Tile;
all the samples in the matching template of the current search point have been reconstructed;
all the samples in the reconstructed block corresponding to the matching template of the current search point do not belong to the current CB; or
all the samples in the reconstructed block corresponding to the matching template of the current search point have been reconstructed.

23. The method of claim 22, further comprising:

determining a preset number N corresponding to the candidate templates, where N is an integer greater than 0; and

determining N BVs and N candidate templates corresponding to the N BVs, according to the first matching cost values and the second matching cost values.

**24.** The method of claim 23, further comprising:

determining N minimum matching cost values from the first matching cost values and the second matching cost values; and

determining the N BVs and the N candidate templates corresponding to the N BVs, based on N search points corresponding to the N minimum matching cost values.

**25.** The method of claim 23, further comprising:

searching in at least one of the selected fully reconstructed search region or the selected undetermined reconstructed search region respectively according to a first search step size, determining the first matching cost values corresponding to search points in the selected fully reconstructed search region and the second matching cost values corresponding to search points in the selected undetermined reconstructed search region that meet the preset availability condition, and determining the N BVs and the N candidate templates corresponding to the N BVs, based on the first cost values and the second cost values; or

searching in at least one of the selected fully reconstructed search region and/or the selected undetermined reconstructed search region respectively according to a second search step size, to determine the first matching cost values corresponding to the search points in the selected fully reconstructed search region and the second matching cost values corresponding to the search points in the selected undetermined reconstructed search region that meet the preset availability condition, and determining the N BVs and the N candidate templates corresponding to the N BVs, based on the first cost values and the second cost values, wherein the first search step size is greater than the second search step size.

**26.** The method of claim 23, further comprising:

searching in at least one of the selected fully reconstructed search region or the selected undetermined reconstructed search region respectively according to a first search step size, determining the first matching cost values corresponding to search points in the selected fully reconstructed search region and the second matching cost values corresponding to the search points in the selected undetermined reconstructed search region that meet the preset availability condition, and determining M reference BVs and M matching reconstructed blocks corresponding to the M reference BVs, based on the first cost values and the second cost values, where M is an integer greater than 0;

determining a first search region according to the M matching reconstructed blocks, wherein the first search region is smaller than a total region consisting of at least one of the selected fully reconstructed search region or the selected undetermined reconstructed search region;

searching in the first search region according to a second search step size, and determining third matching cost values between matching templates corresponding to search points in the first search region that meet the preset availability condition and the first template, wherein the first search step size is greater than the second search step size; and

determining the N BVs and the N candidate templates corresponding to the N BVs, according to at least one of the first matching cost values, the second matching cost values or the third matching cost values.

**27.** The method of claim 26, wherein determining the N BVs and the N candidate templates corresponding to the N BVs, according to at least one of the first matching cost values, the second matching cost values or the third matching cost values comprises:

determining N minimum matching cost values from the third matching cost values; and

determining the N BVs and the N candidate templates corresponding to the N BVs, based on N search points corresponding to the N minimum matching cost values.

**28.** The method of claim 26, wherein determining the N BVs and the N candidate templates corresponding to the N BVs, according to at least one of the first matching cost values, the second matching cost values or the third matching cost values comprises:

determining T BVs and T candidate templates corresponding to the T BVs, according to the third matching cost values, where T is an integer greater than 0 and less than N; and

determining (N-T) BVs other than the M reference BVs and (N-T) candidate templates corresponding to the (N-T) BVs, according to the first cost values and the second cost values.

29. The method of claim 26, further comprising:

determining P initial BVs based on the first cost values and the second cost values, where P is an integer equal to or greater than M; and

determining the M reference BVs according to the P initial BVs.

30. The method of claim 1, further comprising:

determining one or more reference blocks for the current block according to the one or more BVs; and

determining prediction values of the current block according to the one or more reference blocks.

31. The method of claim 30, wherein determining the one or more reference blocks for the current block according to the one or more BVs comprises:

determining one or more initially reconstructed blocks corresponding to the current block, according to the one or more BVs; and

correcting the one or more initially reconstructed blocks, to determine the one or more reference blocks.

32. The method of claim 1, further comprising:

determining a best BV for the current block according to the one or more BVs for the current block;

determining at least one reference block corresponding to the current block, according to the best BV; and

determining prediction values of the current block according to the at least one reference block.

33. The method of claim 32, wherein determining the prediction values of the current block according to the at least one reference block comprises:

determining at least one prediction block according to the at least one reference block; and

performing weighted fusion on the at least one prediction block, to determine the predicted values of the current block.

34. The method of claim 1, further comprising:

determining first prediction values of the current block according to the one or more BVs for the current block;

determining second prediction values of the current block according to a preset prediction mode, wherein the preset prediction mode comprises at least one of a planar mode or a directional mode; and

determining prediction values of the current block according to the first prediction values and the second prediction values.

35. The method of claim 19, wherein the preset matching criteria comprises any one of Sum of Absolute Difference (SAD), Sum of Absolute Transformed Difference (SATD), Sum of Squared Differences (SSE), Mean Absolute Deviation (MAD), Mean Absolute Error (MAE), Mean Square Error (MSE), or Normalized Correlation Coefficient (NCC).

36. The method of claim 1, wherein determining the first template corresponding to the current block comprises:
determining a template type corresponding to the current block, and determining the first template corresponding to the current block according to the template type.

37. The method of claim 36, wherein determining the template type corresponding to the current block comprises:

determining the template type of the current block according to reference pixels of the current block; or

determining the template type of the current block according to indication information in a bitstream; or

determining the template type of the current block according to a size of the current block,

wherein the reference pixels of the current block comprise at least one of left neighbouring reference pixels of the current block, upper neighbouring reference pixels of the current block, upper left neighbouring reference pixels of the current block, lower left neighbouring reference pixels of the current block, or upper right neighbouring reference pixels of the current block.

38. The method of claim 36, wherein determining the template type of the current block according to the reference pixels of the current block comprises:

if the left neighbouring reference pixels of the current block, the upper neighbouring reference pixels of the current block and the upper left neighbouring reference pixels of the current block are all available, determining that the template type of the current block is a first value;
if the left neighbouring reference pixels of the current block are available, determining that the template type of the current block is a second value;
if the upper neighbouring reference pixels of the current block are available, determining that the template type of the current block is a third value;
if both the left neighbouring reference pixels of the current block and the upper left neighbouring reference pixels of the current block are available, determining that the template type of the current block is a fourth value;
if both the left neighbouring reference pixels of the current block and the lower left neighbouring reference pixels of the current block are available, determining that the template type of the current block is a fifth value; and
if both the upper neighbouring reference pixels of the current block and the upper right neighbouring reference pixels of the current block are available, determining that the template type of the current block is a sixth value.

39. The method of claim 1, wherein determining the first template corresponding to the current block according to the template type comprises:

determining template reference pixels of the current block according to the template type and a template size corresponding to the template type; and
determining the first template of the current block according to the template reference pixels.

40. The method of any one of claims 30 to 34, further comprising:

decoding a bitstream, to determine prediction residuals corresponding to the current block; and
determining reconstructed values of the current block according to the prediction residuals and the prediction values of the current block.

41. A method of encoding, applied to an encoder, comprising:

determining a first template corresponding to a current block;
determining at least one of a fully reconstructed search region or an undetermined reconstructed search region according to the first template, wherein the fully reconstructed search region comprises reconstructed samples, and the undetermined reconstructed search region comprises at least one of reconstructed samples or unreconstructed samples;
performing a region selection based on at least one of the fully reconstructed search region or the undetermined reconstructed search region, to determine at least one of a selected fully reconstructed search region or a selected undetermined reconstructed search region, wherein the selected fully reconstructed search region is smaller than or equal to the fully reconstructed search region, and the selected undetermined reconstructed search region is smaller than or equal to the undetermined reconstructed search region; and
searching in at least one of the selected fully reconstructed search region or the selected undetermined reconstructed search region respectively, to determine one or more Block Vectors (BVs) for the current block.

42. The method of claim 41, wherein determining at least one of the fully reconstructed search region or the undetermined reconstructed search region according to the first template comprises:
determining at least one of the fully reconstructed search region or the undetermined reconstructed search region based on the first template, with a zero-value BV as a center, and according to a size of a search window and position information of a current picture.

43. The method of claim 42, wherein the fully reconstructed search region is a search region comprising a set of positions corresponding to upper left pixels of a corresponding reference block at each search position,
the undetermined reconstructed search region is a search coverage region comprising a set of pixels of the corresponding reference block at each search position.

44. The method of claim 41, wherein performing the region selection based on at least one of the fully reconstructed search region or the undetermined reconstructed search region, to determine at least one of the selected fully reconstructed search region or the selected undetermined reconstructed search region comprises:

determining the fully reconstructed search region as the selected fully reconstructed search region; and
performing the region selection on the undetermined reconstructed search region, to determine the selected undetermined reconstructed search region.

45. The method of claim 41, wherein performing the region selection based on at least one of the fully reconstructed search region or the undetermined reconstructed search region, to determine at least one of the selected fully reconstructed search region or the selected undetermined reconstructed search region comprises:

performing the region selection on the fully reconstructed search region, to determine the selected fully reconstructed search region; and
determining the undetermined reconstructed search region as the selected undetermined reconstructed search region.

46. The method of claim 41, wherein performing the region selection based on at least one of the fully reconstructed search region or the undetermined reconstructed search region, to determine at least one of the selected fully reconstructed search region or the selected undetermined reconstructed search region comprises:

performing the region selection on the fully reconstructed search region, to determine the selected fully reconstructed search region; and
performing the region selection on the undetermined reconstructed search region, to determine the selected undetermined reconstructed search region.

47. The method of claim 41, wherein performing the region selection based on at least one of the fully reconstructed search region or the undetermined reconstructed search region, to determine the selected fully reconstructed search region or the selected undetermined reconstructed search region comprises:

determining scaling parameters, wherein the scaling parameters comprise a height scaling parameter and a width scaling parameter, and each of the height scaling parameter and the width scaling parameter is equal to or greater than 1; and
performing the region selection on at least one of the fully reconstructed search region or the undetermined reconstructed search region according to the scaling parameters, to determine at least one of the selected fully reconstructed search region or the selected undetermined reconstructed search region.

48. The method of claim 47, wherein determining the scaling parameters comprises:
determining the scaling parameters according to preset values, and signalling the scaling parameters into a bitstream.

49. The method of claim 48, wherein the scaling parameters are transmitted through any one of sequence parameter set (sps) layer syntax information, picture parameter set (pps) layer syntax information, application parameter set (aps) layer syntax information, shell (sh) layer syntax information, or centralized unit (cu) layer syntax information.

50. The method of claim 47, further comprising:

determining a search region at an upper side of the current block from the fully reconstructed search region, as a first initial region;
determining a search region at a left side or an upper left side of the current block from the fully reconstructed search region, as a second initial region;
determining a search region at a lower left side of the current block from the undetermined reconstructed search region, as a third initial region; and
determining a search region at an upper right side of the current block from the undetermined reconstructed search region, as a fourth initial region.

51. The method of claim 50, wherein performing the region selection on at least one of the fully reconstructed search region or the undetermined reconstructed search region according to the scaling parameters, to determine at least one of the selected fully reconstructed search region or the selected undetermined reconstructed search region comprises at least one of:

> determining a first selected region from the first initial region according to the scaling parameters and position information of the first initial region, wherein the first selected region is any region in the first initial region; and determining the selected fully reconstructed search region according to the first selected region,
> or,
> determining a second selected region from the second initial region according to the scaling parameters and position information of the second initial region, wherein the second selected region is any region in the second initial region; and determining the selected fully reconstructed search region according to the second selected region.

52. The method of claim 50, wherein performing the region selection on at least one of the fully reconstructed search region or the undetermined reconstructed search region according to the scaling parameters, to determine at least one of the selected fully reconstructed search region or the selected undetermined reconstructed search region comprises:

> determining a third selected region from the third initial region according to the scaling parameters and position information of the third initial region, wherein the third selected region is any region in the third initial region; and determining the selected undetermined reconstructed search region according to the third selected region.

53. The method of claim 50, wherein performing the region selection on at least one of the fully reconstructed search region or the undetermined reconstructed search region according to the scaling parameters, to determine at least one of the selected fully reconstructed search region or the selected undetermined reconstructed search region comprises:

> determining a fourth selected region from the fourth initial region according to the scaling parameters and position information of the fourth initial region, wherein the fourth selected region is any region in the fourth initial region; and
> determining the selected undetermined reconstructed search region according to the fourth selected region.

54. The method of claim 41, wherein performing the region selection based on at least one of the fully reconstructed search region or the undetermined reconstructed search region, to determine at least one of the selected fully reconstructed search region or the selected undetermined reconstructed search region comprises:

> determining a region width threshold and a region height threshold according to size parameters of the current block; and
> performing the region selection on at least one of the fully reconstructed search region or the undetermined reconstructed search region according to at least one of the region width threshold or the region height threshold, to determine at least one of the selected fully reconstructed search region or the selected undetermined reconstructed search region.

55. The method of claim 41, wherein performing the region selection based on at least one of the fully reconstructed search region or the undetermined reconstructed search region, to determine at least one of the selected fully reconstructed search region or the selected undetermined reconstructed search region comprises:

> determining the fully reconstructed search region as the selected fully reconstructed search region; and
> determining the undetermined reconstructed search region as the selected undetermined reconstructed search region.

56. The method of claim 41, further comprising:
determining, from the fully reconstructed search region, a search region where any pixel in a reference block corresponding to the search region overlaps with a current Coding Tree Block (CTB) corresponding to the current block, as a first overlapping region.

57. The method of claim 56, wherein performing the region selection based on at least one of the fully reconstructed search region or the undetermined reconstructed search region, to determine at least one of the selected fully reconstructed search region or the selected undetermined reconstructed search region comprises:

performing the region selection on the first overlapping region, to determine a fourth selected region; and determining the selected fully reconstructed search region according to the fourth selected region and a first non-overlapping region, wherein the first non-overlapping region consists of other regions in the fully reconstructed search region except the first overlapping region.

58. The method of claim 57, wherein performing the region selection based on at least one of the fully reconstructed search region or the undetermined reconstructed search region, to determine at least one of the selected fully reconstructed search region or the selected undetermined reconstructed search region comprises:

performing the region selection on second non-overlapping region, to determine a seventh selected region; and determining the selected undetermined reconstructed search region according to the seventh selected region and the second overlapping region.

59. The method of claim 41, wherein searching in at least one of the selected fully reconstructed search region or the selected undetermined reconstructed search region respectively, to determine the one or more BVs for the current block comprises:

traversing search points in the selected fully reconstructed search region, and determining first matching cost values between matching templates corresponding to the search points in the selected fully reconstructed search region and the first template according to a preset matching criteria; traversing search points in the selected undetermined reconstructed search region, and determining second matching cost values between matching templates corresponding to search points in the selected undetermined reconstructed search region that meet a preset availability condition and the first template according to the preset matching criteria; and determining the one or more BVs and one or more candidate templates corresponding to the one or more BVs, according to the first matching cost values and the second matching cost values.

60. The method of claim 59, further comprising:

determining whether a current search point in the selected undetermined reconstructed search region meets the preset availability condition; and if the current search point meets the preset availability condition, determining the second matching cost value between a matching template corresponding to the current search point and the first template according to the preset matching criteria.

61. The method of claim 60, further comprising:
if the current search point does not meet the preset availability condition, not performing a process of determining the second matching cost values.

62. The method of claim 60 or 61, wherein the preset availability condition comprises at least one or more of the following conditions:

all samples in the matching template of the current search point do not exceed a coordinate range of a sample boundary corresponding to a current picture; all samples in a reconstructed block corresponding to the matching template of the current search point do not exceed the coordinate range of the sample boundary corresponding to the current picture; all the samples in the matching template of the current search point do not exceed a preset search window range; all the samples in the reconstructed block corresponding to the matching template of the current search point do not exceed the preset search window range; all the samples in the matching template of the current search point and a current Coding Block (CB) are located in a same Tile; all the samples in the reconstructed block corresponding to the matching template of the current search point and the current CB are located in the same Tile; all the samples in the matching template of the current search point have been reconstructed; all the samples in the reconstructed block corresponding to the matching template of the current search point do not belong to the current CB; or

all the samples in the reconstructed block corresponding to the matching template of the current search point have been reconstructed.

63. The method of claim 62, further comprising:

determining a preset number N corresponding to the candidate templates, wherein N is an integer greater than 0; and
determining N BVs and N candidate templates corresponding to the N BVs, according to the first matching cost values and the second matching cost values.

64. The method of claim 63, further comprising:

determining N minimum matching cost values from the first matching cost values and the second matching cost values; and
determining the N BVs and the N candidate templates corresponding to the N BVs, based on N search points corresponding to the N minimum matching cost values.

65. The method of claim 63, further comprising:

searching in at least one of the selected fully reconstructed search region or the selected undetermined reconstructed search region respectively according to a first search step size, determining the first matching cost values corresponding to search points in the selected fully reconstructed search region and the second matching cost values corresponding to search points in the selected undetermined reconstructed search region that meet the preset availability condition, and determining the N BVs and the N candidate templates corresponding to the N BVs, based on the first cost values and the second cost values; or
searching in at least one of the selected fully reconstructed search region or the selected undetermined reconstructed search region respectively according to a second search step size, determining the first matching cost values corresponding to search points in the selected fully reconstructed search region and the second matching cost values corresponding to search points in the selected undetermined reconstructed search region that meet the preset availability condition, and determining the N BVs and the N candidate templates corresponding to the N BVs, based on the first cost values and the second cost values, wherein the first search step size is greater than the second search step size.

66. The method of claim 63, further comprising:

searching in at least one of the selected fully reconstructed search region or the selected undetermined reconstructed search region respectively according to a first search step size, determining the first matching cost values corresponding to search points in the selected fully reconstructed search region and the second matching cost values corresponding to search points in the selected undetermined reconstructed search region that meet the preset availability condition, and determining M reference BVs and M matching reconstructed blocks corresponding to the M reference BVs, based on the first cost values and the second cost values, where M is an integer greater than 0;
determining a first search region according to the M matching reconstructed blocks, wherein the first search region is smaller than a total region consisting of at least one of the selected fully reconstructed search region or the selected undetermined reconstructed search region;
searching in the first search region according to a second search step size, and determining third matching cost values between matching templates corresponding to search points in the first search region that meet the preset availability condition and the first template, wherein the first search step size is greater than the second search step size; and
determining the N BVs and the N candidate templates corresponding to the N BVs, according to at least one of the first matching cost values, the second matching cost values or the third matching cost values.

67. The method of claim 66, wherein determining the N BVs and the N candidate templates corresponding to the N BVs, according to at least one of the first matching cost values, the second matching cost values or the third matching cost values comprises:

determining N minimum matching cost values from the third matching cost values; and
determining the N BVs and the N candidate templates corresponding to the N BVs, based on N search points corresponding to the N minimum matching cost values.

68. The method of claim 66, wherein determining the N BVs and the N candidate templates corresponding to the N BVs, according to at least one of the first matching cost values, the second matching cost values or the third matching cost values comprises:

    determining T BVs and T candidate templates corresponding to the T BVs, according to the third matching cost values, where T is an integer greater than 0 and less than N; and
    determining (N-T) BVs other than the M reference BVs and (N-T) candidate templates corresponding to the (N-T) BVs, according to the first cost values and the second cost values.

69. The method of claim 66, further comprising:

    determining P initial BVs based on the first cost values and the second cost values, where P is an integer equal to or greater than M; and
    determining the M reference BVs according to the P initial BVs.

70. The method of claim 41, further comprising:

    determining one or more reference blocks for the current block according to the one or more BVs; and
    determining prediction values of the current block according to the one or more reference blocks.

71. The method of claim 70, wherein determining the one or more reference blocks for the current block according to the one or more BVs comprises:

    determining one or more initially reconstructed blocks corresponding to the current block, according to the one or more BVs; and
    correcting the one or more initially reconstructed blocks, to determine the one or more reference blocks.

72. The method of claim 41, further comprising:

    determining a best BVs for the current block according to the one or more BVs for the current block;
    determining at least one reference block corresponding to the current block, according to the best BV; and
    determining prediction values of the current block according to the at least one reference block.

73. The method of claim 72, wherein determining the prediction values of the current block according to the at least one reference block comprises:

    determining at least one prediction block according to the at least one reference block; and
    performing weighted fusion on the at least one prediction block, to determine the prediction values of the current block.

74. The method of claim 41, further comprising:

    determining a first prediction value of the current block according to the one or more BVs for the current block;
    determining a second prediction value of the current block according to a preset prediction mode, wherein the preset prediction mode comprises at least one of a planar mode or a directional mode; and
    determining prediction values of the current block according to the first prediction value and the second prediction value.

75. The method of claim 59, wherein the preset matching criteria comprises any one of Sum of Absolute Difference (SAD), Sum of Absolute Transformed Difference (SATD), Sum of Squared Differences (SSE), Mean Absolute Deviation (MAD), Mean Absolute Error (MAE), Mean Square Error (MSE), or Normalized Correlation Coefficient (NCC).

76. The method of claim 41, wherein determining the first template corresponding to the current block comprises: determining a template type corresponding to the current block, and determining the first template corresponding to the current block according to the template type.

77. The method of claim 76, wherein determining the template type corresponding to the current block comprises:

determining the template type of the current block according to reference pixels of the current block; or
determining the template type of the current block according to indication information in a bitstream; or
determining the template type of the current block according to a size of the current block,
wherein the reference pixels of the current block comprise at least one of left neighbouring reference pixels of the current block, upper neighbouring reference pixels of the current block, upper left neighbouring reference pixels of the current block, lower left neighbouring reference pixels of the current block, or upper right neighbouring reference pixels of the current block.

78. The method of claim 76, wherein determining the template type of the current block according to the reference pixels of the current block comprises:

if the left neighbouring reference pixels of the current block, the upper neighbouring reference pixels of the current block and the upper left neighbouring reference pixels of the current block are all available, determining that the template type of the current block is a first value;
if the left neighbouring reference pixels of the current block are available, determining that the template type of the current block is a second value;
if the upper neighbouring reference pixels of the current block are available, determining that the template type of the current block is a third value;
if both the left neighbouring reference pixels of the current block and the upper left neighbouring reference pixels of the current block are available, determining that the template type of the current block is a fourth value;
if both the left neighbouring reference pixels of the current block and the lower left neighbouring reference pixels of the current block are available, determining that the template type of the current block is a fifth value; and
if both the upper neighbouring reference pixels of the current block and the upper right neighbouring reference pixels of the current block are available, determining that the template type of the current block is a sixth value.

79. The method of claim 41, wherein determining the first template corresponding to the current block according to the template type comprises:

determining template reference pixels of the current block according to the template type and a template size corresponding to the template type; and
determining the first template of the current block according to the template reference pixels.

80. The method of any one of claims 70 to 74, further comprising:

determining prediction residuals corresponding to the current block, and signalling the prediction residuals into a bitstream; and
determining reconstructed values of the current block according to the prediction residuals and the prediction values of the current block.

81. A bitstream, generated by bit encoding according to to-be-encoded information, wherein the to-be-encoded information comprises at least one of:
prediction residuals of a current block, a preset number N, scaling parameters, a template size, or indication information of a template type.

82. An encoder, comprising a first determination unit,
wherein the first determination unit is configured to: determine a first template corresponding to a current block; determine at least one of a fully reconstructed search region or an undetermined reconstructed search region according to the first template, wherein the fully reconstructed search region comprises reconstructed samples, and the undetermined reconstructed search region comprises at least one of reconstructed samples or unreconstructed samples; perform a region selection based on at least one of the fully reconstructed search region or the undetermined reconstructed search region, to determine at least one of a selected fully reconstructed search region or a selected undetermined reconstructed search region, wherein the selected fully reconstructed search region is smaller than or equal to the fully reconstructed search region, and the selected undetermined reconstructed search region is smaller than or equal to the undetermined reconstructed search region; and search in at least one of the selected fully reconstructed search region or the selected undetermined reconstructed search region respectively, to determine one or more Block Vectors (BVs) of the current block.

83. An encoder, comprising a first memory and a first processor,

    wherein the first memory is configured to store a computer program executable on the first processor,
    the first processor is configured to execute the computer program to perform the method of any one of claims 41 to 80.

84. A decoder, comprising a second determination unit,
    wherein the second determination unit is configured to: determine a first template corresponding to a current block; determine at least one of a fully reconstructed search region or an undetermined reconstructed search region according to the first template, wherein the fully reconstructed search region comprises reconstructed samples, and the undetermined reconstructed search region comprises at least one of reconstructed samples or unreconstructed samples; perform a region selection based on at least one of the fully reconstructed search region or the undetermined reconstructed search region, to determine at least one of a selected fully reconstructed search region or a selected undetermined reconstructed search region, wherein the selected fully reconstructed search region is smaller than or equal to the fully reconstructed search region, and the selected undetermined reconstructed search region is smaller than or equal to the undetermined reconstructed search region; and search in at least one of the selected fully reconstructed search region or the selected undetermined reconstructed search region respectively, to determine one or more Block Vectors (BVs) for the current block.

85. A decoder, comprising a second memory and a second processor,

    wherein the second memory is configured to store a computer program executable on the second processor,
    the second processor is configured to execute the computer program to perform the method of any one of claims 1 to 40.

86. A computer-readable storage medium, having stored thereon a computer program, wherein when the computer program is executed, the method of any one of claims 1 to 40 is implemented, or the method of any one of claims 41 to 80 is implemented.

**FIG. 1**

**FIG. 2**

(a) The template type takes a value of 1

(b) The template type takes a value of 2

(c) The template type takes a value of 3

(d) The template type takes a value of 4

(e) The template type takes a value of 5

(f) The template type takes a value of 6

**FIG. 3**

Initialize parameters — S401

Determine a search region of a template in a current picture — S402

Search and determine a best BV in the search region — S403

**FIG. 4**

width of an entirety of the
current block and the template

T

height of the
template

height of an entirety
of the current block
and the template

width of the
current block

height of the
current block

width of the
template

**FIG. 5**

**FIG. 6**

**FIG. 7**

**FIG. 8**

| Determine a best coarse matching template in the search region with a step size of 2 | ⟨ S901 |
|---|---|

↓

| Determine a best fine matching template near the best coarse matching template with a step size of 1 | ⟨ S902 |
|---|---|

**FIG. 9**

100

input video

divided into CBs

101 Transform And Quantization Unit

quantized transform coefficients

106 Inverse Transform And Inverse Quantization Unit

102 Intra Estimation Unit

103 Intra Prediction Unit

inter/intra selection

104 Motion Compensation Unit

105 Motion Estimation Unit

107 Filter Control Analysis Unit

filter control data

108 Filtering Unit

intra prediction data

motion data

109 Encoding Unit

output a bitstream

110 DPB Unit

output a video signal

**FIG. 10A**

**FIG. 10B**

EP 4 697 707 A1

**FIG. 11**

| Determine a first template corresponding to a current block | 101 |
| --- | --- |

| Determine a fully reconstructed search region and/or an undetermined reconstructed search region according to the first template, here the fully reconstructed search region includes reconstructed samples, and the undetermined reconstructed search region includes reconstructed samples and/or unreconstructed samples | 102 |
| --- | --- |

| Perform a region selection based on the fully reconstructed search region and/or the undetermined reconstructed search region, to determine a selected fully reconstructed search region and/or a selected undetermined reconstructed search region, here the selected fully reconstructed search region is smaller than or equal to the fully reconstructed search region, and the selected undetermined reconstructed search region is smaller than or equal to the undetermined reconstructed search region | 103 |
| --- | --- |

| Search in the selected fully reconstructed search region and/or the selected undetermined reconstructed search region respectively, to determine one or more BVs for the current block | 104 |
| --- | --- |

**FIG. 12**

**FIG. 13**

**FIG. 14**

wIndex = 1
hIndex = 1

**FIG. 15**

wIndex = 2
hIndex = 1

**FIG. 16**

wIndex = 1
hIndex = 2

**FIG. 17**

wIndex = 2
hIndex = 2

**FIG. 18**

wIndex = 1
hIndex = 1

**FIG. 19**

wIndex = 2
hIndex = 1

**FIG. 20**

wIndex = 1
hIndex = 2

**FIG. 21**

wIndex = 2
hIndex = 2

**FIG. 22**

wIndex = 1
hIndex = 1

**FIG. 23**

wIndex = 2
hIndex = 1

**FIG. 24**

wIndex = 1
hIndex = 2

**FIG. 25**

wIndex = 2
hIndex = 2

**FIG. 26**

| Determine a first template corresponding to a current block | 201 |

↓

| Determine a fully reconstructed search region and/or an undetermined reconstructed search region according to the first template, here the fully reconstructed search region includes reconstructed samples, and the undetermined reconstructed search region includes reconstructed samples and/or unreconstructed samples | 202 |

↓

| Perform a region selection based on the fully reconstructed search region and/or the undetermined reconstructed search region, to determine a selected fully reconstructed search region and/or a selected undetermined reconstructed search region, here the selected fully reconstructed search region is smaller than or equal to the fully reconstructed search region, and the selected undetermined reconstructed search region is smaller than or equal to the undetermined reconstructed search region | 203 |

↓

| Search in the selected fully reconstructed search region and/or the selected undetermined reconstructed search region respectively, to determine one or more BVs for the current block | 204 |

**FIG. 27**

180

Encoder

1801

First Determination Unit

**FIG. 28**

180

Encoder

1901

First Communication Interface

1904

1903

First Processor

1902

First Memory

**FIG. 29**

200

Decoder

2001

Second
Determination Unit

**FIG. 30**

200

Decoder

2201

Second Communication
Interface

2204

2203

Second Processor

2202

Second Memory

**FIG. 31**

230

2301

Encoder

2302

Decoder

**FIG. 32**

## INTERNATIONAL SEARCH REPORT

| International application No. |
|---|
| **PCT/CN2023/088540** |

| A. | CLASSIFICATION OF SUBJECT MATTER |
|---|---|

H04N19/159(2014.01)i;  H04N19/593(2014.01)i;  H04N19/105(2014.01)i;  H04N19/70(2014.01)i

According to International Patent Classification (IPC) or to both national classification and IPC

| B. | FIELDS SEARCHED |
|---|---|

Minimum documentation searched (classification system followed by classification symbols)

IPC：H04N19

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT: ENTXT; CNKI; 3GPP: 重建, 采样点, 帧内, 预测, 参考, 解码, 编码, rebuil+, reconstruct+, sampl+, intra+, predict+, reference, encod+, decod+

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 113196775 A (QUALCOMM INC.) 30 July 2021 (2021-07-30)<br>description, paragraphs [0086]-[0149], and figures 3-11 | 1-40, 84-86 |
| X | CN 111586415 A (ZHEJIANG DAHUA TECHNOLOGY CO., LTD.) 25 August 2020 (2020-08-25)<br>description, paragraphs [0051]-[0121], and figures 1-6 | 41-83, 86 |
| A | CN 105898330 A (MEDIATEK INC.) 24 August 2016 (2016-08-24)<br>entire document | 1-86 |
| A | US 2020112717 A1 (QUALCOMM INC.) 09 April 2020 (2020-04-09)<br>entire document | 1-86 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **21 November 2023** | **21 October 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

| Patent document cited in search report | | | Publication date (day/month/year) | Patent family member(s) | | | Publication date (day/month/year) |
|---|---|---|---|---|---|---|---|
| CN | 113196775 | A | 30 July 2021 | TW | 202041030 | A | 01 November 2020 |
| | | | | WO | 2020131934 | A1 | 25 June 2020 |
| | | | | EP | 3900356 | A1 | 27 October 2021 |
| | | | | US | 2020204819 | A1 | 25 June 2020 |
| | | | | US | 10999594 | B2 | 04 May 2021 |
| CN | 111586415 | A | 25 August 2020 | None | | | |
| CN | 105898330 | A | 24 August 2016 | US | 2018213253 | A1 | 26 July 2018 |
| | | | | US | 2016241875 | A1 | 18 August 2016 |
| | | | | US | 9955185 | B2 | 24 April 2018 |
| US | 2020112717 | A1 | 09 April 2020 | WO | 2020072928 | A1 | 09 April 2020 |

Form PCT/ISA/210 (patent family annex) (July 2022)